(19) **Europäisches Patentamt / European Patent Office / Office européen des brevets**

(11) **EP 4 782 206 A1**

(12) **EUROPEAN PATENT APPLICATION**
published in accordance with Art. 153(4) EPC

(43) Date of publication:
29.07.2026 Bulletin 2026/31

(21) Application number: 24868309.6

(22) Date of filing: 19.09.2024

(51) International Patent Classification (IPC):
$B32B\ 27/28^{(2006.01)}$ $B32B\ 15/08^{(2006.01)}$
$B32B\ 15/082^{(2006.01)}$ $B65D\ 65/40^{(2006.01)}$
$C08L\ 29/04^{(2006.01)}$

(52) Cooperative Patent Classification (CPC):
B32B 15/08; B32B 15/082; B32B 27/28;
B65D 65/40; C08L 29/04

(86) International application number:
PCT/JP2024/033453

(87) International publication number:
WO 2025/063232 (27.03.2025 Gazette 2025/13)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 22.09.2023 JP 2023158249
22.09.2023 JP 2023158250
22.09.2023 JP 2023158251

22.09.2023 JP 2023158252
22.09.2023 JP 2023158253
22.09.2023 JP 2023158254

(71) Applicant: Mitsubishi Chemical Corporation
Tokyo 100-8251 (JP)

(72) Inventor: OMIYA, Takayuki
Tokyo 100-8251 (JP)

(74) Representative: Vossius & Partner
Patentanwälte Rechtsanwälte mbB
Siebertstraße 3
81675 München (DE)

(54) **VAPOR-DEPOSITED FILM, MULTILAYER STRUCTURE, MOLDED BODY, FOOD CONTAINER, AND VAPOR-DEPOSITED FILM PRODUCTION METHOD**

(57) As a vapor-deposited film enhanced in surface smoothness; a multilayer structure, a molded article, and a food container, each including the same; and a method for producing a vapor-deposited film, the following is provided. A vapor-deposited film including: a substrate film having a layer containing a composition containing an ethylene-vinyl alcohol copolymer and a titanium compound; and a metal vapor-deposited layer laminated on the substrate film, wherein a content of the titanium compound in terms of metal is 0.001 ppm or more and less than 3 ppm relative to a mass of the composition.

EP 4 782 206 A1

## Description

Technical Field

The present disclosure relates to a vapor-deposited film, a multilayer structure, a molded article, a food container, and a method for producing a vapor-deposited film, and more particularly, to a vapor-deposited film having excellent surface smoothness, a multilayer structure, a molded article, a food container, and a method for producing a vapor-deposited film.

Background Art

An ethylene-vinyl alcohol copolymer (hereinafter, which may be referred to as an "EVOH resin") exhibits a very strong intermolecular force due to hydrogen bonding between hydroxyl groups present in the polymer side chains. For this reason, the EVOH resin exhibits high crystallinity and also possesses high intermolecular force even in the amorphous portion, and thus, gas molecules or the like do not easily pass through a film in which the EVOH resin is used, and hence such a film exhibits excellent gas barrier properties. Thus, the EVOH resin is used as a gas barrier layer for imparting gas barrier properties to a multilayer structure such as a film or a container, in a wide range of fields including food packaging.
In addition, an aluminum foil has been mainly used as a gas barrier material in high humidity. However, aluminum has high thermal conductivity and has poor heat insulating properties and the like, and thus, a high gas barrier film having a thin metal vapor-deposited layer has been studied instead of the aluminum foil.
For example, Patent Literatures 1 and 2 disclose a vapor-deposited film, in which, in a processing of the vapor-deposited film such as lamination, the formation of a pinhole and a crack is suppressed and the decrease of the gas barrier properties is suppressed, the vapor-deposited film including a metal vapor-deposited layer with a substrate film containing an EVOH resin and an average particle size of the metal vapor-deposited layer being set to a specific range. The Patent Literatures describe that, in this technique, from 0.001 to 1 mass% (corresponding to from 10 to 10000 ppm in terms of conversion) of an inorganic oxide may be contained in the EVOH resin (Patent Literatures 1 and 2: paragraphs [0017] and [0018]).

Citation List

Patent Literature

Patent Literature 1: JP 2017-100451 A
Patent Literature 2: WO 2013/125564

Summary

Technical Problem

However, in Patent Literatures 1 and 2, no study is made on the surface smoothness of the vapor-deposited film, and there is a possibility that minute irregularities are generated at a surface of the vapor-deposited film. In the vapor-deposited film having excellent surface smoothness, stress concentration due to external stress during transportation is suppressed, the occurrence of cracks can be prevented, the decrease in the gas barrier properties is suppressed, and stable performance can be maintained over a long period of time. Therefore, the vapor-deposited films of Patent Literatures 1 and 2 have room for improvement in the surface smoothness.
The present disclosure has been made in view of the above problems, and provides a vapor-deposited film having a vapor-deposited surface with excellent surface smoothness; a multilayer structure, a molded article, and a food container, each including the same; and a method for producing a vapor-deposited film.

Solution to Problem

The present inventor has conducted intensive studies in view of the above circumstances and found that surface smoothness of a vapor-deposited surface of the resulting vapor-deposited film is improved by adding a specific trace amount of a titanium compound to an EVOH resin in a substrate film.
That is, the present disclosure provides the following aspects.

[1] A vapor-deposited film including: a substrate film having a layer containing a composition containing an ethylene-vinyl alcohol copolymer and a titanium compound; and a metal vapor-deposited layer laminated on the substrate film, wherein a content of the titanium compound in terms of metal is 0.001 ppm or more and less than 3 ppm relative to a mass of the composition.

[2] The vapor-deposited film according to [1], wherein the composition further contains at least one selected from the group consisting of a lubricant, an alkaline metal compound, an alkaline earth metal compound, and a boron compound.

[3] The vapor-deposited film according to [1] or [2], wherein a moisture content of the composition before melt molding is 1 mass% or less.

[4] The vapor-deposited film according to [2] or [3], wherein a content of the lubricant is 500 ppm or less relative to the mass of the composition.

[5] The vapor-deposited film according to any one of [2] to [4], wherein a mass ratio of the content of the lubricant to the content of the titanium compound in terms of metal is from 0.3 to 500000.

[6] The vapor-deposited film according to any one of [2] to [5], wherein a content of the alkaline metal compound in terms of metal is from 1 to 1000 ppm relative to the mass of the composition.

[7] The vapor-deposited film according to any one of [2] to [6], wherein a mass ratio of the content of the alkaline metal compound in terms of metal to the content of the titanium compound in terms of metal is from 0.2 to 1000000.

[8] The vapor-deposited film according to any one of [2] to [7], wherein a content of the alkaline earth metal compound in terms of metal is from 0.1 to 800 ppm relative to the mass of the composition.

[9] The vapor-deposited film according to any one of [2] to [8], wherein a mass ratio of the content of the alkaline earth metal compound in terms of metal to the content of the titanium compound in terms of metal is from 0.03 to 500000.

[10] The vapor-deposited film according to any one of [2] to [9], wherein a content of the boron compound in terms of boron is from 1 to 500 ppm relative to the mass of the composition.

[11] The vapor-deposited film according to any one of [2] to [10], wherein a mass ratio of the content of the boron compound in terms of boron to the content of the titanium compound in terms of metal is from 1 to 200000.

[12] The vapor-deposited film according to any one of [3] to [11], wherein the moisture content of the composition before melt molding is 0.12 mass% or more.

[13] The vapor-deposited film according to any one of [1] to [12], wherein the substrate film is a multilayer film further having a layer containing a thermoplastic resin.

[14] The vapor-deposited film according to any one of [1] to [13], wherein a metal of the metal vapor-deposited layer is at least one selected from the group consisting of aluminum, gold, silver, copper, titanium, nickel, chromium, tin, and indium.

[15] A multilayer structure including the vapor-deposited film according to any one of [1] to [14].

[16] A molded article including the vapor-deposited film according to any one of [1] to [14].

[17] A food container including the multilayer structure according to [15].

[18] A method for producing the vapor-deposited film according to any one of [1] to [14], the method including laminating an inorganic vapor-deposited layer on the substrate film.

Advantageous Effects of Disclosure

The vapor-deposited film of the present disclosure has excellent surface smoothness on the vapor-deposited surface. In addition, a multilayer structure, a molded article, and a food container, each including such a vapor-deposited film, also exhibit excellent surface smoothness of the vapor-deposited surface.

Description of Embodiments

The present disclosure will be described below with reference to embodiments for carrying out the present disclosure. However, the present disclosure is not limited to the embodiments described below.

Note that, in the present specification, unless otherwise specified, the description "from X to Y" (with X and Y being any numbers) encompasses the meaning of "X or more and Y or less" as well as the meaning of "preferably more than X" or "preferably less than Y".

In addition, when "X or more" (with X being any numeral) or "Y or less" (with Y being any numeral) is described, the description also encompasses the meaning of "preferably more than X" or "preferably less than Y".

The description "x and/or y (with x and y being any configurations)" means at least one selected from x and y, and includes the three meanings of only x, only y, and both x and y.

In the present specification, with respect to a numerical range described stepwise, the upper limit or the lower limit of the numerical range at one step can be optionally combined with the upper limit or the lower limit of the numerical range at another step. In addition, in a numerical range described in the present specification, the upper limit or the lower limit of the numerical range can be replaced with a value presented in Examples.

In the present specification, the term "film" includes the meaning of a "tape" and a "sheet".

Hereinafter, a monomer unit included in an EVOH resin or thermoplastic resin may be simply referred to as a "unit". For example, a monomer unit based on ethylene may be referred to as an "ethylene unit".

A vapor-deposited film according to an embodiment of the present disclosure (hereinafter sometimes referred to as "the present vapor-deposited film") includes: a substrate film having a layer containing a composition containing an ethylene-vinyl alcohol copolymer and a titanium compound; and a metal vapor-deposited layer laminated on the substrate film.

In addition to the first aspect, the present vapor-deposited film is characterized by further containing at least one selected from the group consisting of a lubricant, an alkaline metal compound, an alkaline earth metal compound, and a boron compound in the composition, and having a moisture content of the composition before melt molding in a specific amount or less.

Therefore, the case where the composition contains the lubricant is referred to as "second aspect", the case where the composition contains the alkaline metal compound is referred to as "third aspect", the case where the composition contains the alkaline earth metal compound is referred to as "fourth aspect", the case where the composition contains the boron compound is referred to as "fifth aspect", and the case where the moisture content of the composition before melt molding is a specific amount or less is referred to as "sixth aspect", and these aspects will be described in order.

First Aspect

The first aspect includes the following aspects <I-1> to <I-7>.

<I-1>

A vapor-deposited film including: a substrate film having a layer containing a composition containing an EVOH resin and a titanium compound; and a metal vapor-deposited layer laminated on the substrate film, wherein a content of the titanium compound in terms of metal is 0.001 ppm or more and less than 3 ppm relative to a mass of the composition.

<I-2>

The vapor-deposited film according to <I-1>, wherein the substrate film is a multilayer film further having a layer containing a thermoplastic resin.

<I-3>

The vapor-deposited film according to <I-1> or <I-2>, wherein a metal of the metal vapor-deposited layer is at least one selected from the group consisting of aluminum, gold, silver, copper, titanium, nickel, chromium, tin, and indium.

<I-4>

A multilayer structure including the vapor-deposited film described in any one of <I-1> to <I-3>.

<I-5>

A molded article including the vapor-deposited film described in any one of <I-1> to <I-3>.

<I-6>

A food container including the multilayer structure described in <I-4>.

<I-7>

A method for producing the vapor-deposited film described in any one of <I-1> to <I-3>, the method including laminating an inorganic vapor-deposited layer on the substrate film.

The present disclosure will be described below with reference to embodiments for carrying out the first aspect. However, the present disclosure is not limited to the embodiments described below.

Vapor-Deposited Film

A vapor-deposited film according to the first aspect of the present disclosure (hereinafter sometimes referred to as "the present vapor-deposited film") includes: a substrate film having a layer containing a composition containing an ethylene-vinyl alcohol copolymer and a titanium compound; and a metal vapor-deposited layer laminated on the substrate film.

Hereinafter, each constituent will be described.

Substrate Film

The substrate film has a layer containing an EVOH resin (hereinafter referred to as an "EVOH layer").

Hereinafter, each constituent of the substrate film will be described.

EVOH Layer

The EVOH layer is formed from a composition containing the EVOH resin (hereinafter sometimes referred to as "the present composition"). The present composition will be described below.

The present composition contains the EVOH resin as a main component, and a specific trace amount of a titanium compound.

That is, in the present composition, the base resin is the EVOH resin, and the content of the EVOH resin in the present composition is usually 70 mass% or more, preferably 80 mass% or more, more preferably 90 mass% or more, and particularly preferably 95 mass% or more.

Hereinafter, the respective components will be described.

EVOH Resin

The EVOH resin used in the present embodiment is usually a resin produced by saponification of an ethylene-vinyl ester copolymer, which is a copolymer of ethylene and a vinyl ester monomer, and is a water-insoluble thermoplastic resin.

As the vinyl ester monomer, vinyl acetate is typically used from the viewpoints of good commercial availability and good impurity treatment efficiency during manufacturing. Examples of a vinyl ester monomer besides vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate, and typically, an aliphatic vinyl ester having from 3 to 20 carbon atoms, preferably from 4 to 10 carbon atoms, and particularly preferably from 4 to 7 carbon atoms is used. A single type of these is usually used alone; and however, as necessary, a plurality of types of these may be used simultaneously.

As the polymerization method to copolymerize ethylene and the vinyl ester monomer, any known polymerization method, such as solution polymerization, suspension polymerization, or emulsion polymerization, can be used; and however, solution polymerization using methanol as a solvent is usually used. Furthermore, saponification of the resulting ethylene-vinyl ester copolymer can also be carried out by a known method.

The EVOH resin thus produced is mainly composed of an ethylene-derived structural unit and a vinyl alcohol structural unit, and contains a small amount of a vinyl ester structural unit that remains without being saponified.

The content of the ethylene structural unit in the EVOH resin is usually from 20 to 60 mol%, preferably from 25 to 50 mol%, and particularly preferably from 25 to 35 mol%. The content of the ethylene structural unit can be controlled by the pressure of ethylene in the copolymerization of the vinyl ester monomer and ethylene. When the content is too low, the gas barrier properties under high humidity and the melt moldability tend to decrease. Conversely, when the content is too high, the gas barrier properties tend to decrease. The content of the ethylene structural unit can be measured based on ISO14663.

The degree of saponification of the EVOH resin is usually from 90 to 100 mol%, preferably from 95 to 100 mol%, and particularly preferably from 99 to 100 mol%. The degree of saponification can be controlled, for example, by the amount of a saponification catalyst (usually, an alkaline catalyst such as sodium hydroxide is used), the temperature, and the time, at the time of saponification of the ethylene-vinyl ester copolymer. When the degree of saponification is too low, the gas barrier properties, the thermal stability, the moisture resistance, and the like tend to decrease.

The degree of saponification of the EVOH resin can be measured based on JIS K6726 (provided that the EVOH resin is used as a solution uniformly dissolved in a water/ methanol solvent).

The melt flow rate (MFR) (at 210°C and a load of 2160 g) of the EVOH resin is usually from 0.5 to 100 g/10 minutes, preferably from 1 to 50 g/10 minutes, and particularly preferably from 3 to 35 g/10 minutes. When the MFR is too high, the stability during film formation tends to be deteriorated. When the MFR is too low, the viscosity tends to be too high, which leads to difficulty in melt extrusion.

The MFR is an indicator of the degree of polymerization of the EVOH resin and can be adjusted by the amount of a polymerization initiator or the amount of a solvent in the copolymerization of ethylene and the vinyl ester monomer.

In the present specification, the MFR can be determined by measuring a rate at which a sample flows out through an orifice having a length of 8 mm and a pore size of 2.095 mm using an automatic melt flow rate tester (available from Toyo Seiki Seisaku-sho, Ltd.) under conditions of a temperature of 210°C and a load of 2160 g.

The EVOH resin may further contain a structural unit derived from a comonomer described below within such a range that the effects of the present disclosure are not impaired (e.g., in an amount of 10 mol% or less of the EVOH resin).

Examples of the comonomer include olefins such as propylene, 1-butene, and isobutene; hydroxy group-containing $\alpha$-olefins such as 3-buten-1-ol, 3-butene-1,2-diol, 4-penten-1-ol, and 5-hexene-1,2-diol, and derivatives thereof such as esterified products and acylated products thereof; hydroxyalkyl vinylidenes such as 2-methylenepropane-1,3-diol and 3-methylenepentane-1,5-diol; hydroxyalkyl vinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts thereof, or mono- or dialkyl esters thereof, each of the mono- or dialkyl esters having an alkyl group with 1 to 18 carbon atoms; acrylamides such as acrylamide, N-alkylacrylamides, each having an alkyl group with 1 to 18 carbon atoms, N,N-dimethylacrylamide, 2-acrylamidopropane sulfonic acid or salts thereof, and acrylamidopropyldimethylamine or acid salts thereof, or quaternary salts thereof; methacrylamides such as methacrylamide, N-alkylmethacrylamides, each having an alkyl group with 1 to 18 carbon atoms, N,N-dimethylmethacrylamide, 2-methacrylamidopropane sulfonic acid or salts thereof, and methacrylamidopropyldimethylamine or acid salts thereof, or quaternary salts thereof; N-vinylamides such as N-vinylpyrrolidone, N-vinylformamide, and N-vinylacetamide; vinyl cyanides such as acrylonitrile and methacrylonitrile; vinyl ethers, such as alkyl vinyl ethers, each having an alkyl group with 1 to 18 carbon atoms, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silanes such as trimethoxyvinylsilane; halogenated allyl compounds such as allyl acetate and allyl chloride; allyl alcohols such as allyl alcohol and dimethoxyallyl alcohol; and comonomers such as trimethyl-(3-acrylamido-3-dimethylpropyl)-ammonium chloride and acrylamido-2-methylpropane sulfonic acid. These may be used alone or in combination of two or more thereof.

In particular, hydroxy group-containing $\alpha$-olefins are preferred, and 3-butene-1,2-diol and 5-hexene-1,2-diol are particularly preferred. When the hydroxy group-containing $\alpha$-olefins are copolymerized, the resulting EVOH resin has a primary hydroxyl group in a side chain. Such an EVOH resin having a primary hydroxyl group in a side chain, particularly an EVOH resin having a 1,2-diol structure in a side chain, is preferred because good secondary moldability is achieved while gas barrier properties are maintained.

When the EVOH resin has a primary hydroxyl group in a side chain, the content of the structural unit derived from the monomer having such a primary hydroxyl group is usually from 0.1 to 20 mol%, preferably from 0.5 to 15 mol%, and particularly preferably from 1 to 10 mol% of the EVOH resin.

As the EVOH resin, a "post-modified" EVOH resin, such as an esterified, urethane-modified, acetalized, cyanoethylated, or oxyalkylenated EVOH resin, may also be used.

When the post-modified EVOH resin is used, the modification ratio thereof is usually 10 mol% or less, and preferably 4 mol% or less. If the modification ratio of the EVOH resin is too high, thermal degradation tends to occur more readily, and the long-run properties tend to decrease.

Further, the EVOH resin may be a mixture of EVOH resins which differ, for example, in the content of ethylene structural units, the degree of saponification, the degree of polymerization, copolymerization components.

Titanium Compound

Examples of the titanium compound include an inorganic titanium compound and an organic titanium compound. These titanium compounds may be used alone or in combination of two or more types. Among these, the inorganic titanium compound is preferable.

Examples of the inorganic titanium compound include titanium oxide, titanium hydroxide, titanium chloride, and an inorganic salt of titanium.

Examples of the titanium oxide include titanium(II) oxide, titanium(III) oxide, titanium(IV) oxide, and titanium suboxide.

Examples of the titanium hydroxide include titanium(III) hydroxide and titanium(IV) hydroxide.

Examples of the titanium chloride include titanium(III) chloride and titanium(IV) chloride.

The inorganic salt of titanium excludes the titanium chloride, and examples thereof include titanium phosphate and titanium sulfate.

Among these, the titanium oxide is preferable, titanium(IV) oxide is more preferable, and rutile-type titanium(IV) oxide is particularly preferable.

Examples of the organic titanium compound include titanium carboxylates such as titanium acetate, titanium butyrate, and titanium stearate.

The titanium compound may be present as a titanium compound in the present composition, or may be present in an ionized state or in a complex state in which the titanium compound interacts with the EVOH resin or another ligand.

The average particle size of the titanium compound is usually from 0.001 to 100 $\mu$m, preferably from 0.01 to 50 $\mu$m, and more preferably from 0.015 to 20 $\mu$m. When the average particle size of the titanium compound is within the above range, the surface irregularity suppressing effect tends to be enhanced. The average particle size of the titanium compound can be measured by, for example, a laser diffraction particle size distribution measuring apparatus. The average particle size referred to herein is a median diameter.

The content of the titanium compound in terms of metal is 0.001 ppm or more and less than 3 ppm relative to the mass of the present composition. The content is preferably from 0.01 to 1 ppm, more preferably from 0.03 to 0.5 ppm, and particularly preferably from 0.05 to 0.2 ppm. When the content of the titanium compound is within the above range, the titanium compound fills minute dents at the surface of the EVOH film, and thus the surface smoothness is enhanced. When the content of the titanium compound is too low, the minute dents are not filled, and therefore minute irregularities remain at the surface, and when the content is too high, excess titanium oxide appears on the surface, and thus protrusions are formed and the surface is roughened.

The content of the titanium compound in terms of metal is, that is, the content of the titanium element.

In addition, when the content of the titanium compound is within the above range, the generation of microgels due to thermal degradation during melt molding can be suppressed, and the film surface tends to be enhanced in smoothness. In addition, when the content of the titanium compound is too low, the effects of suppressing the generation of microgels and the surface smoothness tend to decrease, and when the content is too high, the EVOH resin tends to be thermally decomposed, and the surface smoothness tends to decrease due to the generation of microgels.

The content of the titanium compound in terms of metal can be quantified by weighing the present composition in a platinum crucible, sequentially ashing the present composition with a burner and an electric furnace, thermally decomposing the ashed product with nitric acid and hydrofluoric acid, treating the decomposed product with a mixed acid of dilute nitric acid and dilute hydrofluoric acid, setting the resultant mixture to a constant volume to yield a constant volume liquid, and measuring the titanium in the constant volume liquid by ICP mass spectrometry using an ICP mass spectrometer (Agilent 8800, available from Agilent Technologies, Inc.).

Usually, it is considered that, when a titanium compound is contained in a resin composition containing an EVOH resin, the resin composition is thermally degraded by titanium ions, and microgels are generated. Therefore, it is technical common knowledge for those skilled in the art to avoid the use of the titanium compound. However, in the present embodiment, it has been found that, contrary to such technical common knowledge, when a specific trace amount of a titanium compound is used, titanium of the titanium compound is coordinated to a double bond of the main chain of the EVOH resin to form a chelate, and thus the thermal stability is improved, the generation of microgels due to thermal degradation is suppressed, and an EVOH film having excellent surface smoothness can be obtained.

The EVOH resin is colored because of thermal degradation. This is presumed to be due to the fact that the EVOH resin degrades with heat and generates radicals, the hydroxyl groups in the EVOH resin are dehydrated by the radicals to generate a double bond in the main chain of the EVOH resin, and such a site serves as a reaction starting point to further promote dehydration, and thus, a conjugated polyene structure is formed in the main chain of the EVOH resin. In the present resin composition, it is presumed that since titanium in a specific trace amount of the titanium compound is stable in the form of a tetravalent ion, even in a small amount, stabilization is achieved, for example, by coordination to the double bond of the main chain of the EVOH resin to form a chelate, and thus, formation of such a polyene structure is suppressed.

Additional Thermoplastic Resin

The present composition can contain a thermoplastic resin besides the EVOH resin within such a range that the effects of the present disclosure are not impaired (e.g., usually 30 mass% or less, preferably 20 mass% or less, and particularly preferably 10 mass% or less of the present composition, and the lower limit is usually 0 mass%).

As the additional thermoplastic resin, a known thermoplastic resin can be used, and examples thereof include a polyester-based resin, a polystyrene-based resin, a polyvinylchloride-based resin, a polycarbonate-based resin, an ionomer, polyvinylidene chloride, a polyester elastomer, a polyurethane elastomer, chlorinated polyethylene, and chlorinated polypropylene. These may be used alone or in combination of two or more thereof.

Additional Compounding Agent

The present composition may contain a compounding agent (excluding the titanium compound) that is generally compounded in the EVOH resin, within such a range that the effects of the present disclosure are not impaired (for example, usually 30 mass% or less, preferably 20 mass% or less, and more preferably 10 mass% or less of the present resin composition, and the lower limit is usually 0 mass%). Examples of the compounding agent that may be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, fatty acid esters and metal salts thereof, gallic acid, polyhydric phenols such as hydroxyl group-containing phenolaldehyde resins, terpene compounds, a blend of a tertiary hydrogencontaining resin and a transition metal (e.g., a combination of polypropylene and cobalt), a blend of a carbon-carbon unsaturated bond-containing resin and a transition metal (e.g., a combination of polybutadiene and cobalt), photooxidative degradable resins (e.g., polyketone), anthraquinone polymers (e.g., polyvinylanthraquinone), and polymer-based oxygen absorbers such as those obtained by adding a photoinitiator (such as benzophenone), an antioxidant other than the above, and a deodorant (such as activated carbon) to these blended materials], heat stabilizers, light stabilizers, ultraviolet absorbers, colorants, antistatic agents, surfactants (excluding those used as the lubricant), antibacterial agents, anti-blocking agents, and fillers (e.g., inorganic fillers). One of these compounds may be used alone or two or more thereof may be used in combination.

Method for Producing Present Composition

The present composition can be produced by mixing the EVOH resin and the titanium compound using a known method, for example, a dry blending method, a melt mixing method, a solution mixing method, or an impregnation method. Among these methods, it is preferable to produce the present composition by including a step of melt-mixing a composition raw material containing the EVOH resin and the titanium compound. Furthermore, these production methods can be optionally combined.

Examples of the dry blending method include (i) a method of dry-blending the EVOH resin having a pellet-shape and the titanium compound by using, for example, a tumbler.

Examples of the melt mixing method include (ii) a method of melt-kneading a dry blend obtained by dry-blending the EVOH resin having a pellet-shape and the titanium compound, and (iii) a method of adding the titanium compound to the EVOH resin in a molten state and melt-kneading the resultant mixture.

Examples of the solution mixing method include (iv) a method of preparing a solution using a commercially available EVOH resin, blending the titanium compound in the solution, subjecting the blended solution to solidification molding, followed by solid-liquid separation with a known means, and drying the obtained product; and (v) a method of, in the process of producing an EVOH resin, incorporating the titanium compound in an ethylene-vinyl ester copolymer solution or a uniform solution of the EVOH resin (for example, water/alcohol solution) before saponification, subjecting the resultant mixture to solidification molding, followed by solid-liquid separation with a known means, and drying the obtained product.

Examples of the impregnation method include (vi) a method of bringing the EVOH resin having a pellet-shape into contact with an aqueous solution containing the titanium compound, incorporating the titanium compound in the EVOH resin, and then drying the EVOH resin.

As the aqueous solution containing the titanium compound, an aqueous solution of the titanium compound or an aqueous solution in which titanium ions are eluted by immersing the titanium compound in water containing various agents can be used.

In the impregnation method, the content of the titanium compound (in terms of metal) can be controlled by, for example, the concentration of the titanium compound in the aqueous solution in which the EVOH resin is immersed, the immersion temperature, and the immersion time.

The immersion time is usually from 0.5 to 48 hours, preferably from 1 to 36 hours, and the immersion temperature is usually from 10 to 40°C, and preferably from 20 to 35°C.

As the drying method in each of the above production methods, various drying methods can be employed, and either drying under a static condition or fluidized drying may be employed. These methods can be performed in combination.

As described above, in the present embodiment, the above different methods can be combined. Particularly, the melt mixing method is preferable, and the method (ii) is particularly preferable, in that a resin composition that exhibits more significant productivity and effects of the present disclosure is yielded. Even when the additional thermoplastic resin and the additional compounding agent as described above are used, the additional thermoplastic resin and the additional compounding agent may be blended by a known method according to the aforementioned production method.

The present composition produced by each of the production methods described above may have any shape, but is preferably a shape of a pellet.

The pellet may be in, for example, a spherical, oval, cylindrical, cubic, or rectangular parallelepiped shape, but is usually in an oval or cylindrical shape. From the viewpoint of convenience in the subsequent use as a molding material, in the case of the oval shape, the minor axis length is usually from 1 to 10 mm, preferably from 2 to 6 mm, and more preferably from 2.5 to 5.5 mm, and the major axis length is usually from 1.5 to 30 mm, preferably from 3 to 20 mm, and more preferably from 3.5 to 10 mm. In the case of the cylindrical shape, the bottom surface has a diameter of usually from 1 to 6 mm and preferably from 2 to 5 mm, and the length is usually from 1 to 6 mm and preferably from 2 to 5 mm.

Also, the shape and the size of the pellet-shaped EVOH resin used in each of the production methods are preferably the same.

The moisture content of the present composition before melt molding is usually from 0.01 to 0.5 mass%, preferably from 0.05 to 0.35 mass%, and particularly preferably from 0.1 to 0.3 mass%.

Here, the term "melt molding" in the phrase "before melt molding" means melting a material and forming the molten material into a certain shape, and examples thereof include melting a resin composition and pelletizing the molten resin composition, and melting a resin composition and forming the molten resin composition into a film.

The moisture content of the present composition is measured and calculated by the following method.

The mass ($W_1$) of the present composition before drying is weighed with an electronic balance, the present composition is dried in a hot air dryer at 150°C for 5 hours and allowed to cool in a desiccator for 30 minutes, and then the mass ($W_2$) after cooling is weighed. The moisture content is calculated from the following Equation:

$$\text{Moisture content (mass\%)} = [(W_1 - W_2)/W_1] \times 100$$

When the present composition is in the form of a pellet, preferably, a known lubricant is adhered to the surface of the pellet from the viewpoint of stabilizing the feedability during melt molding. Examples of the type of the lubricant include higher fatty acids having 12 or more carbon atoms (for example, lauric acid, myristic acid, palmitic acid, stearic acid, behenic acid, and oleic acid), higher fatty acid esters (for example, methyl esters, isopropyl esters, butyl esters, and octyl esters of higher fatty acids), higher fatty acid amides (for example, saturated higher fatty acid amides, such as lauramide, myristamide, palmitamide, stearamide, and behenamide; unsaturated higher fatty acid amides, such as oleamide and erucamide; and bis (higher fatty acid) amides, such as ethylenebis(stearamide), ethylenebis(oleamide), ethylenebis(erucamide), and ethylenebis(lauramide), low-molecular-weight polyolefins (for example, low-molecular-weight polyethylene having a molecular weight of approximately 500 to 10000, or low-molecular-weight polypropylene, or acid-modified products thereof), higher alcohols having 6 or more carbon atoms, ester oligomers, and ethylene fluoride resins. One of these compounds may be used alone or two or more thereof may be used in combination. The content of the lubricant is usually 5 mass% or less and preferably 1 mass% or less of the present composition. The lower limit is usually 0 mass%.

The present composition thus produced is prepared into various forms such as a pellet, a powder form, or a liquid form, and is provided as a molding material for various molded products. In particular, in the present embodiment, when the present composition is provided as a material for melt molding, the effects of the present disclosure tend to be more efficiently achieved, which is preferable.

The present composition also includes a resin composition obtained by mixing a resin other than the EVOH resin used in the present composition.

The substrate film may be, for example, a monolayer film (EVOH layer) molded from the present composition, or a multilayer film having at least one EVOH layer.

Layer Containing Thermoplastic Resin

The substrate film preferably has a layer containing a thermoplastic resin (hereinafter, sometimes referred to as a "thermoplastic resin layer"). When the substrate film has the thermoplastic resin layer, the mechanical strength and the barrier properties against water vapor of the present vapor-deposited film tend to be further enhanced. In addition, properties such as heat sealability and mechanical strength can be imparted depending on the type of the thermoplastic resin constituting the thermoplastic resin layer.

The thermoplastic resin is a thermoplastic resin other than the EVOH resin, and examples of the thermoplastic resin include polyolefins, including polyethylenes, such as linear low-density polyethylene, low-density polyethylene, ultra low-density polyethylene, medium-density polyethylene, and high-density polyethylene, homopolymers and copolymers of olefins, such as ethylene-vinyl acetate copolymers, ionomers, ethylene-propylene (block or random) copolymers, ethylene-(meth)acrylic acid copolymers, ethylene-(meth)acrylate copolymers, polypropylene, propylene-$\alpha$-olefin copolymers, polybutene, and polypentene, or those obtained by graft-modifying these polyolefins with unsaturated carboxylic acids or esters thereof; polyesters; polyamides (including copolymerized polyamides); polyvinyl chloride; polyvinylidene chloride; acrylic resins; polystyrene; polyvinyl esters; polyester elastomers; polyurethane elastomers; chlorinated polystyrene; chlorinated polypropylene; aromatic polyketones or aliphatic polyketones, and polyalcohols obtained by reducing aromatic polyketones or aliphatic polyketones; polyacetals; and polycarbonates. Among these, from the viewpoint of excellent heat sealability and mechanical properties, polyolefins are preferable, polypropylene and polyethylene are more preferable, and polyethylene is particularly preferable. These may be used alone or in combination of two or more thereof.

The terms "linear low-density polyethylene", "low-density polyethylene", "ultra-low-density polyethylene", "medium-density polyethylene", and "high-density polyethylene" are commonly used to represent the types of polyethylene, respectively.

When polyethylene is used as the thermoplastic resin, the melt flow rate (MFR) of the polyethylene measured in accordance with JIS K 7210:2014 (at 190°C and a load of 2.16 kg) is preferably from 0.10 to 7.5 g/10 min, more preferably from 0.15 to 5.0 g/10 min, and particularly preferably from 0.2 to 2.5 g/10 min. When the MFR of the polyethylene is within the above range, the molding stability tends to be further improved.

The content of the thermoplastic resin in the thermoplastic resin layer is not particularly limited, but the thermoplastic resin is preferably the main component (that is, the content of the thermoplastic resin contained in the thermoplastic resin layer is 50 mass% or more). The content of the thermoplastic resin is more preferably 60 mass% or more, still more preferably 70 mass% or more, and particularly preferably 80 mass% or more, 90 mass% or more, 95 mass% or more, or 100 mass%.

For example, the thermoplastic resin layer may contain, in addition to the thermoplastic resin, an additional component within a range that does not inhibit the effects of the present disclosure, and generally within a range of 20 mass% or less. Examples of the component include an anti-blocking agent, a processing aid, a resin other than the thermoplastic resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Layer Containing Adhesive Resin

The substrate film may have a layer containing an adhesive resin (hereinafter, sometimes referred to as an "adhesive resin layer"). When the substrate film has the adhesive resin layer, the appearance characteristics (film surface) of the present vapor-deposited film tend to be further improved.

The adhesive resin is not particularly limited, but a polyolefin having a carboxyl group, a carboxylic anhydride group, or an epoxy group is preferably used, and the polyolefin having a carboxylic anhydride group is more preferably used. Such an adhesive resin tends to exhibit excellent adhesion to the EVOH layer and/or the thermoplastic resin layer.

Examples of the polyolefin containing a carboxyl group include polyolefins obtained by copolymerizing acrylic acid or methacrylic acid. In this case, all or some of carboxyl groups contained in the polyolefins may be present in the form of metal salts, as typified by ionomers. Examples of the polyolefin having a carboxylic anhydride group include polyolefins graft-modified with maleic anhydride or itaconic acid. Examples of the polyolefin having an epoxy group include polyolefins obtained by copolymerizing glycidyl methacrylate. Among these, a polyolefin having a carboxylic anhydride group such as maleic anhydride can be preferably used, and a polyethylene having a carboxylic anhydride group can be particularly preferably used. These may be used alone or in combination of two or more thereof.

The melt flow rate (MFR) of the adhesive resin measured in accordance with JIS K 7210:2014 (at 190°C with a load of 2.16 kg) is not particularly limited, but is preferably from 0.1 to 20.0 g/10 min, and more preferably from 1.0 to 10.0 g/10 min. When the MFR of the adhesive resin is in the above range, the molding stability tends to be improved.

The content of the adhesive resin in the adhesive resin layer is not particularly limited, but the adhesive resin is preferably the main component (that is, the content of the adhesive resin contained in the adhesive resin layer is 50 mass% or more). Especially, the content of the adhesive resin is more preferably 60 mass% or more, still more preferably 70 mass% or more, and particularly preferably 80 mass% or more, 90 mass% or more, 95 mass% or more, or 100 mass%.

The adhesive resin layer may contain a component other than the adhesive resin, within a range that does not inhibit the effects of the present disclosure, and generally within a range of 20 mass% or less. Examples of the component include an anti-blocking agent, a processing aid, a resin other than the adhesive resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Method for Producing Substrate Film

The substrate film can be usually produced by extruding the composition from a die, molding the composition into a film, and stretching the film as necessary.

When the substrate film has the thermoplastic resin layer and the adhesive resin layer, the substrate film can be produced by molding raw material compositions for forming the EVOH layer, the thermoplastic resin layer, and the adhesive resin layer, respectively, into films by known coextrusion in which the compositions are extruded from dies different from each other or a common die and laminated, and then stretching the films as necessary.

As the die, for example, an annular die or a T-die can be used.

Examples of the molding method include methods of melting a material and molding the molten material, such as extrusion molding, blow molding, injection molding, thermoforming, and inflation molding, and a method of molding a formed solution, such as cast molding.

The substrate film is not particularly limited in other layer configurations as long as the substrate film has the EVOH layer, but the EVOH layer is preferably at least one of the surface layers. Since the substrate film has the EVOH layer, the present vapor-deposited film can yield excellent transparency.

The substrate film is preferably a multilayer film, and examples of the layer configuration thereof include, when the EVOH layer is referred to as a "layer (A)", the thermoplastic resin layer is referred to as a "layer (B)", and the adhesive resin layer is referred to as a "layer (C)", the layer (B)/the layer (A), the layer (B)/the layer (A)/the layer (B), the layer (B)/the layer (C)/the layer (A)/the layer (B), the layer (B)/the layer (C)/the layer (A)/the layer (C)/the layer (B), the layer (B)/the layer (A)/the layer (B)/the layer (A)/the layer (B), the layer (B)/the layer (B)/the layer (C)/the layer (A)/the layer (C)/the layer (B)/the layer (B), the layer (A)/the layer (C)/the layer (B), the layer (A)/the layer (B)/the layer (C)/the layer (B), and the layer (A)/the layer (C)/the layer (B)/the layer (B).

In the above examples, the layer (B) and the layer (C) are exemplified as examples of a layer other than the layer (A), but the layer other than the layer (A) is not limited thereto.

Moreover, the substrate film preferably does not include a layer formed from a resin composition containing a polyamide-based resin as a main component (that is, the content of the polyamide-based resin contained in the resin composition is 50 mass% or more).

In the above examples, the symbol "/" means that the layers on both sides of the symbol are directly laminated.

The substrate film thus obtained is preferably stretched as necessary, and more preferably uniaxially stretched.

The stretching ratio in the uniaxially stretched film is preferably 3 or more, more preferably 4 or more, and particularly preferably 5 or more. When the stretching ratio is less than 3, thickness non-uniformity due to stretching tends to occur, and the gas barrier properties tend to decrease.

The upper limit of the stretching ratio is preferably 12 or less, more preferably 10 or less, and particularly preferably 8 or less. When the stretching ratio exceeds 12, the film surface after stretching tends to deteriorate.

Uniaxially stretching the substrate film provides advantages, such as an advantage from the viewpoint of economic efficiency, as well as easy tearing of a multilayer structure (when the multilayer structure is used as a packaging material, the packaging material being easy to open), and improvement in the gas barrier properties.

The stretching direction of the uniaxially stretched film is not particularly limited, and the stretching may be implemented in the longitudinal direction (machine direction (MD)) or the width direction (transverse direction (TD)), but is preferably uniaxial stretching in the longitudinal direction (MD), and is particularly preferably not substantially implemented in a direction different from the stretching direction.

The stretched state (such as unstretched, uniaxially stretched, or biaxially stretched) of the substrate film can be confirmed by using a general method for analyzing the orientation of the resin (for example, wide-angle X-ray scattering (WAXS)).

The method for stretching the uniaxially stretched film is not particularly limited, and examples thereof include a tenter stretching method, a tubular stretching method, and a roll stretching method. Among these, from the viewpoint of production cost, uniaxial stretching by the roll stretching method is preferred. When the substrate film is obtained by the inflation molding, the roll stretching method is preferred.

The stretching temperature at the time of uniaxial stretching is not particularly limited, but is generally from 50 to 130°C.

The total thickness of the substrate film is not particularly limited and may be appropriately set depending on the application. The thickness of the substrate film is preferably 10 $\mu$m or greater, and more preferably 15 $\mu$m or greater. When the thickness of the substrate film is 10 $\mu$m or more, the industrial productivity and the mechanical properties tend to be further improved. In addition, the thickness of the substrate film is preferably 100 $\mu$m or less, and more preferably 50 $\mu$m or less. When the thickness of the substrate film is 100 $\mu$m or less, the industrial productivity and the economic efficiency tend to be further improved.

The thickness of the substrate film as a uniaxially stretched film means the thickness after stretching.

When the substrate film is a multilayer film, the thickness of the EVOH layer is preferably 0.5 $\mu$m or more, more preferably 0.8 $\mu$m or more, and particularly preferably 1 $\mu$m or more. When the thickness of the EVOH layer is 0.5 $\mu$m or more, the gas barrier properties tend to be improved.

On the other hand, the thickness of the EVOH layer is preferably 20 $\mu$m or less, more preferably 10 $\mu$m or less, and particularly preferably 5 $\mu$m or less. When the thickness of the EVOH layer is 20 $\mu$m or less, the appearance characteristics (film surface) tend to be improved.

The thickness of the multilayer film as a uniaxially stretched film means the thickness after stretching. Moreover, when the substrate film includes a plurality of EVOH layers, the total thickness of all the EVOH layers is preferably within the above range.

When the substrate film is a multilayer film, the ratio of the thickness of the EVOH layer to the total thickness of all the layers is preferably 30% or less, and more preferably 20% or less, and may be 10% or less or 5% or less, from the viewpoints of industrial productivity and mechanical properties.

When the substrate film has the thermoplastic resin layer, the thickness thereof is preferably from 7 to 100 $\mu$m, and more preferably from 10 to 50 $\mu$m, from the viewpoints of industrial productivity and mechanical properties.

In the substrate film as a uniaxially stretched film, the thickness of the thermoplastic resin layer means the thickness after stretching. In addition, when the substrate film includes a plurality of thermoplastic resin layers, the total thickness of all the thermoplastic resin layers is preferably within the above range.

When the substrate film has the adhesive resin layer, the thickness thereof is preferably from 0.5 to 20 $\mu$m, and more preferably from 1 to 10 $\mu$m, from the viewpoints of industrial productivity and quality stability.

In the substrate film as a uniaxially stretched film, the thickness of the adhesive resin layer means the thickness after stretching. Moreover, when the substrate film includes a plurality of adhesive resin layers, the total thickness of all the adhesive resin layers is preferably within the above range.

The internal haze value of the substrate film is preferably less than 0.4%, more preferably 0.3% or less, still more preferably 0.2% or less, and particularly preferably 0%. The internal haze value can be measured in accordance with ASTM D1003 using the substrate film with a film thickness of 33 $\mu$m and a HAZE meter.

Metal Vapor-Deposited Layer

The metal vapor-deposited layer laminated on the substrate film is obtained by depositing an elemental metal or an alloy of two or more metals. The metal vapor-deposited layer is preferably laminated on the EVOH layer of the substrate film from the viewpoint of gas barrier properties.

Examples of the metal used in the metal vapor-deposited layer include those classified into group 13 elements (such as aluminum, gallium, and indium), group 14 elements (such as titanium, zirconium, tin, and hafnium), noble metals (such as copper, silver, and gold), group 6 elements (such as chromium, molybdenum, and tungsten), group 8 elements (such as iron, cobalt, and nickel), and alloys thereof. Among these, at least one selected from the group consisting of aluminum, gold, silver, copper, titanium, nickel, chromium, tin, and indium is generally preferable, from the viewpoint of their availability and easy of handling, and especially, a metal made of aluminum is particularly preferable.

The metal used in the metal vapor-deposited layer preferably includes a metal compound such as a metal oxide, a metal carbide, or a metal nitride, and among these metal compounds, the metal oxide is preferable. The content of the metal compound is preferably 50 mass% or more, more preferably 80 mass% or more, and still more preferably 90 mass% or more, and may be 100 mass%, of the metal used in the metal vapor-deposited layer.

The metal vapor-deposited layer can be identified by analyzing a cross section of the laminate by energy dispersive spectroscopy (EDS).

Method for Producing Present Vapor-Deposited Film

The present vapor-deposited film can be produced by laminating the metal vapor-deposited layer on the substrate film.

The method for laminating the metal vapor-deposited layer on the substrate film is not particularly limited, and a known vapor deposition method may be appropriately employed, for example, a physical vapor deposition method (PVD method) such as a vacuum deposition method, a sputtering method, or an ion plating method, or a chemical vapor deposition method (CVD method).

The film thickness of the metal vapor-deposited layer is usually from 1 to 100 nm, preferably from 3 to 50 nm, and more preferably from 5 to 20 nm. When the film thickness of the metal vapor-deposited layer is less than 1 nm, the gas barrier properties tend to be insufficient, and on the other hand, even when the film thickness exceeds 100 nm, no effect of improving the gas barrier properties is obtained, and the bending resistance and the production cost tend to increase.

The present vapor-deposited film thus obtained exhibits excellent surface smoothness on the vapor-deposited surface. The root mean square height (Sq) of the vapor-deposited surface of the present vapor-deposited film is preferably 0.10 $\mu$m or less, more preferably 0.09 $\mu$m or less, and still more preferably 0.08 $\mu$m or less. A smaller root mean square height (Sq) indicates a smoother surface, and thus is preferable. The root mean square height (Sq) can be measured by using a method according to ISO25178, and specifically can be measured by a method described in Examples below.

The oxygen permeability at 20°C and 90% RH of the present vapor-deposited film is preferably 8 cc/m$^2$·day·atm or less, more preferably 7 cc/m$^2$·day·atm or less, and particularly preferably 5 cc/m$^2$·day·atm or less.

The present vapor-deposited film can be suitably used as a molded article and a packaging material such as a packaging film for packaging, for example, general food products, as well as seasonings such as mayonnaise and dressings, fermented food products such as Miso, oil and/or fat food products such as salad oil, snack foods, beverages, cosmetics, and pharmaceuticals, or as a portion of a multilayer structure for forming these molded article and packaging material.

Multilayer Structure

The multilayer structure is obtained by further laminating an additional layer on the present vapor-deposited film. The additional layer to be laminated on the present vapor-deposited film is not particularly limited, and may be a layer formed from a resin composition containing a thermoplastic resin exemplified as the thermoplastic resin described above or an adhesive resin exemplified as the adhesive resin described above.

As a method for producing the multilayer structure, various known production methods such as a dry lamination method, a sandwich lamination method, an extrusion lamination method, a coextrusion lamination method, and a solution coating method can be adopted.

Molded Article

It is possible to obtain a cup-shaped or tray-shaped molded article using the present vapor-deposited film or the multilayer structure. In such a case, a draw molding method is usually employed, and specific examples of the method include a vacuum molding method, a pressure molding method, a vacuum-pressure molding method, and a plug assist vacuum-pressure molding method.

Furthermore, it is also possible to obtain a molded article such as a tubular or bottle-shaped multilayer container (laminate structure) or a food container from a multilayer parison (hollow tubular pre-molded product before blowing) using the multilayer structure. In that case, a blow molding method is usually employed, and specific examples thereof include extrusion blow molding methods (such as a twin-head type, a shuttle type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method).

As necessary, the resulting laminate may be subjected to a process, for example, a heat treatment, a cooling treatment, a rolling treatment, a printing treatment, a dry lamination treatment, a solution or melt coating treatment, a bag-making process, a deep drawing process, a box-making process, a tube-making process, and a splitting process.

Second Aspect

The second aspect includes the following aspects <II-1> to <II-9>.

<II-1>

A vapor-deposited film including: a substrate film having a layer containing a composition containing an EVOH resin, a lubricant, and a titanium compound; and a metal vapor-deposited layer laminated on the substrate film, wherein a content of the titanium compound in terms of metal is 0.001 ppm or more and less than 3 ppm relative to a mass of the composition.

<II-2>

The vapor-deposited film according to <II-1>, wherein a content of the lubricant is 500 ppm or less relative to the mass of the composition.

<II-3>

The vapor-deposited film according to <II-1> or <II-2>, wherein a mass ratio of the content of the lubricant to the content of the titanium compound in terms of metal is from 0.3 to 500000.

<II-4>

The vapor-deposited film according to any one of <II-1> to <II-3>, wherein the substrate film is a multilayer film further having a layer containing a thermoplastic resin.

<II-5>

The vapor-deposited film according to any one of <II-1> to <II-4>, wherein a metal of the metal vapor-deposited layer is at least one selected from the group consisting of aluminum, gold, silver, copper, titanium, nickel, chromium, tin, and indium.

<II-6>

A multilayer structure including the vapor-deposited film described in any one of <II-1> to <II-5>.

<II-7>

A molded article including the vapor-deposited film described in any one of <II-1> to <II-5>.

<II-8>

A food container including the multilayer structure described in <II-6>.

<II-9>

A method for producing the vapor-deposited film described in any one of <II-1> to <II-5>, the method including laminating an inorganic vapor-deposited layer on the substrate film.
The present disclosure will be described below with reference to embodiments for carrying out the second aspect. However, the present disclosure is not limited to the embodiments described below.

Vapor-Deposited Film

A vapor-deposited film according to the second aspect of the present disclosure (hereinafter sometimes referred to as "the present vapor-deposited film") includes: a substrate film having a layer containing a composition containing an ethylene-vinyl alcohol copolymer, a lubricant, and a titanium compound; and a metal vapor-deposited layer laminated on the substrate film.
Hereinafter, each constituent will be described.

Substrate Film

The substrate film has a layer containing an EVOH resin (hereinafter referred to as an "EVOH layer").
Hereinafter, each constituent of the substrate film will be described.

EVOH Layer

The EVOH layer is formed from a composition containing the EVOH resin (hereinafter sometimes referred to as "the present composition"). The present composition will be described below.
The present composition contains the EVOH resin as a main component, as well as a lubricant and a specific trace amount of a titanium compound.
That is, in the present composition, the base resin is the EVOH resin, and the content of the EVOH resin in the present composition is usually 70 mass% or more, preferably 80 mass% or more, more preferably 90 mass% or more, and particularly preferably 95 mass% or more.
Hereinafter, the respective components will be described.

EVOH Resin

The EVOH resin used in the present embodiment is usually a resin produced by saponification of an ethylene-vinyl ester copolymer, which is a copolymer of ethylene and a vinyl ester monomer, and the resin is a water-insoluble thermoplastic resin. The same EVOH resin as the (EVOH resin) described in the first aspect can be used.

Lubricant

Examples of the lubricant include higher fatty acids having from 12 to 25 carbon atoms, preferably from 13 to 23 carbon atoms, and more preferably from 15 to 20 carbon atoms.
Examples of the higher fatty acids include higher fatty acids such as lauric acid, myristic acid, palmitic acid, stearic acid, behenic acid, and oleic acid; metal salts of higher fatty acids such as aluminum salts, calcium salts, zinc salts, magnesium salts, and barium salts of these higher fatty acids; higher fatty acid esters such as methyl esters, isopropyl esters, butyl esters, and octyl esters of the higher fatty acids; and higher fatty acid amides, for example, saturated higher fatty acid amides such as stearamide and behenamide, unsaturated higher fatty acid amides such as oleamide and erucamide, and bis (higher fatty acid) amides such as ethylenebis(stearamide), ethylenebis(oleamide), ethylenebis(erucamide), and ethylenebis(lauramide).

Examples of the lubricant other than the above higher fatty acids include low-molecular-weight polyolefins such as low-molecular-weight polyethylene having a molecular weight of approximately from 500 to 10000, or low-molecular-weight polypropylene, or acid-modified products thereof, higher alcohols, ester oligomers, and ethylene fluoride resins.

One of these lubricants may be used alone or two or more thereof may be used in combination.

The valence of the higher fatty acids is usually from 1 to 5, preferably from 1 to 3, and particularly preferably from 1 to 2, from the viewpoints of extrusion stability and commercial availability. The valence means the number of structures derived from a higher fatty acid contained in one molecule of a compound used in the lubricant. For example, when bis(stearamide) is used as the lubricant, since the bis(stearamide) has two structures derived from a higher fatty acid molecule having 18 carbon atoms in one molecule, bis(stearamide) is an amide of the higher fatty acid having 18 carbon atoms, and the higher fatty acid is defined as divalent.

Among the lubricants, higher fatty acids, metal salts of higher fatty acids, higher fatty acid esters, and higher fatty acid amides are preferable, metal salts of higher fatty acids and higher fatty acid amides are particularly preferable, higher fatty acid amides are more preferable, from the viewpoint of extrusion stability, and ethylenebis(stearamide) is particularly preferable.

The lubricant can be used in any form such as a solid form (for example, powder, fine powder, or flakes), a semi-solid form, a liquid form, a paste form, a solution form, or an emulsion form (aqueous dispersion). Among these, a powder form is preferable. The particle size of the lubricant in a powder form is usually from 0.1 to 100 $\mu$m, preferably from 1 to 75 $\mu$m, and particularly preferably from 5 to 50 $\mu$m.

By incorporating an appropriate amount of the lubricant into the present composition, the thermal stability is improved, the generation of streaks, microgels, and the like is suppressed, and the surface becomes smooth.

The content of the lubricant is preferably 500 ppm or less, more preferably 300 ppm or less, and particularly preferably 200 ppm or less, relative to the mass of the present composition. When the content of the lubricant exceeds the above numerical value, the surface smoothness tends to decrease due to a decrease in thermal stability (generation of gels). The lower limit of the content of the lubricant is usually 1 ppm, preferably 10 ppm or more, particularly preferably 50 ppm or more. When the lubricant is not added or is added in an excessively small amount, the moldability of the composition tends to decrease.

The content of the lubricant can be measured by, for example, the following method.

When the lubricant is attached to the surface of the EVOH resin, the amount of the lubricant added can be regarded as the content.

In addition, when the lubricant is contained in the present composition, when the lubricant is, for example, a higher fatty acid amide, the content of the lubricant in the present composition can be measured by measuring the total nitrogen amount in the present composition using a trace total nitrogen analyzer and converting the total nitrogen amount into the content of the lubricant.

Titanium Compound

As the titanium compound, the same titanium compound as the (titanium compound) described in the first aspect can be used.

The content of the titanium compound in terms of metal is 0.001 ppm or more and less than 3 ppm relative to the mass of the present composition. The content is preferably from 0.01 to 1 ppm, more preferably from 0.03 to 0.5 ppm, and particularly preferably from 0.05 to 0.2 ppm. When the content of the titanium compound is within the above range, the titanium compound fills minute dents at the surface of the EVOH film, and thus the surface smoothness is enhanced. When the content of the titanium compound is too low, the minute dents are not filled, and therefore minute irregularities remain at the surface, and when the content is too high, excess titanium oxide appears on the surface, and thus protrusions are formed and the surface is roughened.

The content of the titanium compound in terms of metal is, that is, the content of the titanium element.

In addition, when the content of the titanium compound is within the above range, the generation of microgels due to thermal degradation during melt molding can be suppressed, and the film surface tends to be enhanced in smoothness. In addition, when the content of the titanium compound is too low, the effects of suppressing the generation of microgels and the surface smoothness tend to decrease, and when the content is too high, the EVOH resin tends to be thermally decomposed, and the surface smoothness tends to decrease due to the generation of microgels.

The content of the titanium compound in terms of metal can be quantified by weighing the present composition in a platinum crucible, sequentially ashing the present composition with a burner and an electric furnace, thermally decomposing the ashed product with nitric acid and hydrofluoric acid, treating the decomposed product with a mixed acid of dilute nitric acid and dilute hydrofluoric acid, setting the resultant mixture to a constant volume to yield a constant volume liquid, and measuring the titanium in the constant volume liquid by ICP mass spectrometry using an ICP mass spectrometer (Agilent 8800, available from Agilent Technologies, Inc.).

The mass ratio of the content of the lubricant to the content of the titanium compound in terms of metal [content of lubricant/content of titanium compound in terms of metal] is usually from 0.3 to 500000, preferably from 1 to 50000, more preferably from 20 to 10000, particularly preferably from 250 to 4000, and especially preferably from 900 to 3000. When the value is too large, the thermal stability tends to be impaired, and when the value is too small, the surface smoothness tends to decrease.

Usually, it is considered that, when a titanium compound is contained in a resin composition containing an EVOH resin, the resin composition is thermally degraded by titanium ions, and microgels are generated. Therefore, it is technical common knowledge for those skilled in the art to avoid the use of the titanium compound. However, in the present embodiment, it has been found that, contrary to such technical common knowledge, when a specific trace amount of a titanium compound is used, titanium of the titanium compound is coordinated to a double bond of the main chain of the EVOH resin to form a chelate, and thus the thermal stability is improved, the generation of microgels due to thermal degradation is suppressed, and an EVOH film having excellent surface smoothness can be obtained.

The EVOH resin is colored because of thermal degradation. This is presumed to be due to the fact that the EVOH resin degrades with heat and generates radicals, the hydroxyl groups in the EVOH resin are dehydrated by the radicals to generate a double bond in the main chain of the EVOH resin, and such a site serves as a reaction starting point to further promote dehydration, and thus, a conjugated polyene structure is formed in the main chain of the EVOH resin. In the present resin composition, it is presumed that since titanium in a specific trace amount of the titanium compound is stable in the form of a tetravalent ion, even in a small amount, stabilization is achieved, for example, by coordination to the double bond of the main chain of the EVOH resin to form a chelate, and thus, formation of such a polyene structure is suppressed.

Additional Thermoplastic Resin

The present composition can contain a thermoplastic resin besides the EVOH resin within such a range that the effects of the present disclosure are not impaired (e.g., usually 30 mass% or less, preferably 20 mass% or less, and particularly preferably 10 mass% or less of the present composition, and the lower limit is usually 0 mass%).

As the additional thermoplastic resin, the same additional thermoplastic resin as the (additional thermoplastic resin) described in the first aspect can be used.

Additional Compounding Agent

The present composition may contain a compounding agent (excluding the titanium compound and the lubricant) that is generally compounded in the EVOH resin, within such a range that the effects of the present disclosure are not impaired (for example, usually 30 mass% or less, preferably 20 mass% or less, and more preferably 10 mass% or less of the present resin composition, and the lower limit is usually 0 mass%). As the compounding agent, the same additional compounding agent as the (additional compounding agent) described in the first aspect can be used.

Method for Producing Present Composition

The present composition can be produced by mixing the EVOH resin, the lubricant, and the titanium compound using a known method, for example, a dry blending method, a melt mixing method, a solution mixing method, or an impregnation method. Among these methods, it is preferable to produce the present composition by including a step of melt-mixing a composition raw material containing the EVOH resin and the titanium compound. Furthermore, these production methods can be optionally combined.

Examples of the dry blending method include (i) a method of dry-blending the EVOH resin having a pellet-shape, the lubricant, and the titanium compound by using, for example, a tumbler.

Examples of the melt mixing method include (ii) a method of melt-kneading a dry blend obtained by dry-blending the EVOH resin having a pellet-shape, the lubricant, and the titanium compound, and (iii) a method of adding the lubricant and the titanium compound added to the EVOH resin in a molten state and melt-kneading the resultant mixture.

Examples of the solution mixing method include (iv) a method of preparing a solution using a commercially available EVOH resin, blending the lubricant and the titanium compound in the solution, subjecting the blended solution to solidification molding, followed by solid-liquid separation with a known means, and drying the obtained product; and (v) a method of, in the process of producing an EVOH resin, incorporating the lubricant and the titanium compound in an ethylene-vinyl ester copolymer solution or a uniform solution of the EVOH resin (for example, water/alcohol solution) before saponification, subjecting the resultant mixture to solidification molding, followed by solid-liquid separation with a known means, and drying the obtained product.

Examples of the impregnation method include (vi) a method of bringing the EVOH resin having a pellet-shape into contact with an aqueous solution containing the lubricant and the titanium compound, incorporating the lubricant and the titanium compound in the EVOH resin, and then drying the EVOH resin.

As the aqueous solution containing the titanium compound, an aqueous solution of the lubricant and the titanium compound, or an aqueous solution in which titanium ions are eluted by immersing the lubricant and the titanium compound in water containing various agents can be used.

In the impregnation method, the contents of the lubricant and the titanium compound (in terms of metal) can be controlled by, for example, the concentrations of the lubricant and the titanium compound in the aqueous solution in which the EVOH resin is immersed, the immersion temperature, and the immersion time.

The immersion time is usually from 0.5 to 48 hours, preferably from 1 to 36 hours, and the immersion temperature is usually from 10 to 40°C, and preferably from 20 to 35°C.

As the drying method in each of the above production methods, various drying methods can be employed, and either drying under a static condition or fluidized drying may be employed. These methods can be performed in combination.

As described above, in the present embodiment, the above different methods can be combined. Particularly, the melt mixing method is preferable, and the method (ii) is particularly preferable, in that a resin composition that exhibits more significant productivity and effects of the present disclosure is yielded. Even when the additional thermoplastic resin and the additional compounding agent as described above are used, the additional thermoplastic resin and the additional compounding agent may be blended by a known method according to the aforementioned production method.

The present composition produced by each of the production methods described above may have any shape, but is preferably a shape of a pellet.

The pellet may be in, for example, a spherical, oval, cylindrical, cubic, or rectangular parallelepiped shape, but is usually in an oval or cylindrical shape. From the viewpoint of convenience in the subsequent use as a molding material, in the case of the oval shape, the minor axis length is usually from 1 to 10 mm, preferably from 2 to 6 mm, and more preferably from 2.5 to 5.5 mm, and the major axis length is usually from 1.5 to 30 mm, preferably from 3 to 20 mm, and more preferably from 3.5 to 10 mm. In the case of the cylindrical shape, the bottom surface has a diameter of usually from 1 to 6 mm and preferably from 2 to 5 mm, and the length is usually from 1 to 6 mm and preferably from 2 to 5 mm.

Also, the shape and the size of the pellet-shaped EVOH resin used in each of the production methods are preferably the same.

The moisture content of the present composition before melt molding is usually from 0.01 to 0.5 mass%, preferably from 0.05 to 0.35 mass%, and particularly preferably from 0.1 to 0.3 mass%.

Here, the term "melt molding" in the phrase "before melt molding" means melting a material and forming the molten material into a certain shape, and examples thereof include melting a resin composition and pelletizing the molten resin composition, and melting a resin composition and forming the molten resin composition into a film.

The moisture content of the present composition is measured and calculated by the following method.

The mass ($W_1$) of the present composition before drying is weighed with an electronic balance, the present composition is dried in a hot air dryer at 150°C for 5 hours and allowed to cool in a desiccator for 30 minutes, and then the mass ($W_2$) after cooling is weighed. The moisture content is calculated from the following Equation:

$$\text{Moisture content (mass\%)} = [(W_1 - W_2)/W_1] \times 100$$

The present composition thus produced is prepared into various forms such as a pellet, a powder form, or a liquid form, and is provided as a molding material for various molded products. In particular, in the present embodiment, when the present composition is provided as a material for melt molding, the effects of the present disclosure tend to be more efficiently achieved, which is preferable.

The present composition also includes a resin composition obtained by mixing a resin other than the EVOH resin used in the present composition.

The substrate film may be, for example, a monolayer film (EVOH layer) molded from the present composition, or a multilayer film having at least one EVOH layer.

Layer Containing Thermoplastic Resin

The substrate film preferably has a layer containing a thermoplastic resin (hereinafter, sometimes referred to as a "thermoplastic resin layer"). When the substrate film has the thermoplastic resin layer, the mechanical strength and the barrier properties against water vapor of the present vapor-deposited film tend to be further enhanced. In addition, properties such as heat sealability and mechanical strength can be imparted depending on the type of the thermoplastic resin constituting the thermoplastic resin layer.

As the thermoplastic resin, the same thermoplastic resin as the thermoplastic resin described in the section "Layer Containing Thermoplastic Resin" in the first aspect can be used.

The content of the thermoplastic resin in the thermoplastic resin layer is not particularly limited, but the thermoplastic resin is preferably the main component (that is, the content of the thermoplastic resin contained in the thermoplastic resin layer is 50 mass% or more). The content of the thermoplastic resin is more preferably 60 mass% or more, still more preferably 70 mass% or more, and particularly preferably 80 mass% or more, 90 mass% or more, 95 mass% or more, or 100 mass%.

For example, the thermoplastic resin layer may contain, in addition to the thermoplastic resin, an additional component within a range that does not inhibit the effects of the present disclosure, and generally within a range of 20 mass% or less. Examples of the component include an anti-blocking agent, a processing aid, a resin other than the thermoplastic resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Layer Containing Adhesive Resin

The substrate film may have a layer containing an adhesive resin (hereinafter, sometimes referred to as an "adhesive resin layer"). When the substrate film has the adhesive resin layer, the appearance characteristics (film surface) of the present vapor-deposited film tend to be further improved.

As the adhesive resin, the same adhesive resin as the adhesive resin described in the section "Layer Containing Adhesive Resin" of the first aspect can be used.

The content of the adhesive resin in the adhesive resin layer is not particularly limited, but the adhesive resin is preferably the main component (that is, the content of the adhesive resin contained in the adhesive resin layer is 50 mass% or more). Especially, the content of the adhesive resin is more preferably 60 mass% or more, still more preferably 70 mass% or more, and particularly preferably 80 mass% or more, 90 mass% or more, 95 mass% or more, or 100 mass%.

The adhesive resin layer may contain a component other than the adhesive resin, within a range that does not inhibit the effects of the present disclosure, and generally within a range of 20 mass% or less. Examples of the component include an anti-blocking agent, a processing aid, a resin other than the adhesive resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Method for Producing Substrate Film

The substrate film can be usually produced by extruding the composition from a die, molding the composition into a film, and uniaxially stretching the film as necessary.

When the substrate film has the thermoplastic resin layer and the adhesive resin layer, the substrate film can be produced by molding raw material compositions for forming the EVOH layer, the thermoplastic resin layer, and the adhesive resin layer, respectively, into films by known coextrusion in which the compositions are extruded from dies different from each other or a common die and laminated, and then stretching the films as necessary.

As the die, for example, an annular die or a T-die can be used.

Examples of the molding method include methods of melting a material and molding the molten material, such as extrusion molding, blow molding, injection molding, thermoforming, and inflation molding, and a method of molding a formed solution, such as cast molding.

The substrate film is not particularly limited in other layer configurations as long as the substrate film has the EVOH layer, but the EVOH layer is preferably at least one of the surface layers. Since the substrate film has the EVOH layer, the present vapor-deposited film can yield excellent transparency.

The substrate film is preferably a multilayer film, and examples of the layer configuration thereof include, when the EVOH layer is referred to as a "layer (A)", the thermoplastic resin layer is referred to as a "layer (B)", and the adhesive resin layer is referred to as a "layer (C)", the layer (B)/the layer (A), the layer (B)/the layer (A)/the layer (B), the layer (B)/the layer (C)/the layer (A)/the layer (B), the layer (B)/the layer (C)/the layer (A)/the layer (C)/the layer (B), the layer (B)/the layer (A)/the layer (B)/the layer (A)/the layer (B), the layer (B)/the layer (B)/the layer (C)/the layer (A)/the layer (C)/the layer (B)/the layer (B), the layer (A)/the layer (C)/the layer (B), the layer (A)/the layer (B)/the layer (C)/the layer (B), and the layer (A)/the layer (C)/the layer (B)/the layer (B).

In the above examples, the layer (B) and the layer (C) are exemplified as examples of a layer other than the layer (A), but the layer other than the layer (A) is not limited thereto.

Moreover, the substrate film preferably does not include a layer formed from a resin composition containing a polyamide-based resin as a main component (that is, the content of the polyamide-based resin contained in the resin composition is 50 mass% or more).

In the above examples, the symbol "/" means that the layers on both sides of the symbol are directly laminated.

The substrate film thus obtained is preferably stretched as necessary, and more preferably uniaxially stretched.

The stretching ratio in the uniaxially stretched film is preferably 3 or more, more preferably 4 or more, and particularly preferably 5 or more. When the stretching ratio is less than 3, thickness non-uniformity due to stretching tends to occur, and the gas barrier properties tend to decrease.

The upper limit of the stretching ratio is preferably 12 or less, more preferably 10 or less, and particularly preferably 8 or less. When the stretching ratio exceeds 12, the film surface after stretching tends to deteriorate.

Uniaxially stretching the substrate film provides advantages, such as an advantage from the viewpoint of economic efficiency, as well as easy tearing of a multilayer structure (when the multilayer structure is used as a packaging material, the packaging material being easy to open), and improvement in the gas barrier properties.

The stretching direction of the uniaxially stretched film is not particularly limited, and the stretching may be implemented in the longitudinal direction (machine direction (MD)) or the width direction (transverse direction (TD)), but is preferably uniaxial stretching in the longitudinal direction (MD), and is particularly preferably not substantially implemented in a direction different from the stretching direction.

The stretched state (such as unstretched, uniaxially stretched, or biaxially stretched) of the substrate film can be confirmed by using a general method for analyzing the orientation of the resin (for example, wide-angle X-ray scattering (WAXS)).

The method for stretching the uniaxially stretched film is not particularly limited, and examples thereof include a tenter stretching method, a tubular stretching method, and a roll stretching method. Among these, from the viewpoint of production cost, uniaxial stretching by the roll stretching method is preferred. When the substrate film is obtained by the inflation molding, the roll stretching method is preferred.

The stretching temperature at the time of uniaxial stretching is not particularly limited, but is generally from 50 to 130°C.

The total thickness of the substrate film is not particularly limited and may be appropriately set depending on the application. The thickness of the substrate film is preferably 10 $\mu$m or greater, and more preferably 15 $\mu$m or greater. When the thickness of the substrate film is 10 $\mu$m or more, the industrial productivity and the mechanical properties tend to be further improved. In addition, the thickness of the substrate film is preferably 100 $\mu$m or less, and more preferably 50 $\mu$m or less. When the thickness of the substrate film is 100 $\mu$m or less, the industrial productivity and the economic efficiency tend to be further improved.

The thickness of the substrate film as a uniaxially stretched film means the thickness after stretching.

When the substrate film is a multilayer film, the thickness of the EVOH layer is preferably 0.5 $\mu$m or more, more preferably 0.8 $\mu$m or more, and particularly preferably 1 $\mu$m or more. When the thickness of the EVOH layer is 0.5 $\mu$m or more, the gas barrier properties tend to be improved.

On the other hand, the thickness of the EVOH layer is preferably 20 $\mu$m or less, more preferably 10 $\mu$m or less, and particularly preferably 5 $\mu$m or less. When the thickness of the EVOH layer is 20 $\mu$m or less, the appearance characteristics (film surface) tend to be improved.

The thickness of the multilayer film as a uniaxially stretched film means the thickness after stretching. Moreover, when the substrate film includes a plurality of EVOH layers, the total thickness of all the EVOH layers is preferably within the above range.

When the substrate film is a multilayer film, the ratio of the thickness of the EVOH layer to the total thickness of all the layers is preferably 30% or less, and more preferably 20% or less, and may be 10% or less or 5% or less, from the viewpoints of industrial productivity and mechanical properties.

When the substrate film has the thermoplastic resin layer, the thickness thereof is preferably from 7 to 100 $\mu$m, and more preferably from 10 to 50 $\mu$m, from the viewpoints of industrial productivity and mechanical properties.

In the substrate film as a uniaxially stretched film, the thickness of the thermoplastic resin layer means the thickness after stretching. In addition, when the substrate film includes a plurality of thermoplastic resin layers, the total thickness of all the thermoplastic resin layers is preferably within the above range.

When the substrate film has the adhesive resin layer, the thickness thereof is preferably from 0.5 to 20 $\mu$m, and more preferably from 1 to 10 $\mu$m, from the viewpoints of industrial productivity and quality stability.

In the substrate film as a uniaxially stretched film, the thickness of the adhesive resin layer means the thickness after stretching. Moreover, when the substrate film includes a plurality of adhesive resin layers, the total thickness of all the adhesive resin layers is preferably within the above range.

The internal haze value of the substrate film is preferably less than 0.4%, more preferably 0.3% or less, still more preferably 0.2% or less, and particularly preferably 0%. The internal haze value can be measured in accordance with ASTM D1003 using the substrate film with a film thickness of 33 $\mu$m and a HAZE meter.

Metal Vapor-Deposited Layer

The metal vapor-deposited layer laminated on the substrate film is obtained by depositing an elemental metal or an alloy of two or more metals. The metal vapor-deposited layer is preferably laminated on the EVOH layer of the substrate film from the viewpoint of gas barrier properties.

Examples of the metal used in the metal vapor-deposited layer include those classified into group 13 elements (such as aluminum, gallium, and indium), group 14 elements (such as titanium, zirconium, tin, and hafnium), noble metals (such as copper, silver, and gold), group 6 elements (such as chromium, molybdenum, and tungsten), group 8 elements (such as iron, cobalt, and nickel), and alloys thereof. Among these, at least one selected from the group consisting of aluminum, gold, silver, copper, titanium, nickel, chromium, tin, and indium is generally preferable, from the viewpoint of their availability and easy of handling, and especially, a metal made of aluminum is particularly preferable.

The metal used in the metal vapor-deposited layer preferably includes a metal compound such as a metal oxide, a metal carbide, or a metal nitride, and among these metal compounds, the metal oxide is preferable. The content of the metal compound is preferably 50 mass% or more, more preferably 80 mass% or more, and still more preferably 90 mass% or more, and may be 100 mass%, of the metal used in the metal vapor-deposited layer.

The metal vapor-deposited layer can be identified by analyzing a cross section of the laminate by energy dispersive spectroscopy (EDS).

Method for Producing Present Vapor-Deposited Film

The present vapor-deposited film can be produced by laminating the metal vapor-deposited layer on the substrate film.

The method for laminating the metal vapor-deposited layer on the substrate film is not particularly limited, and a known vapor deposition method may be appropriately employed, for example, a physical vapor deposition method (PVD method) such as a vacuum deposition method, a sputtering method, or an ion plating method, or a chemical vapor deposition method (CVD method).

The film thickness of the metal vapor-deposited layer is usually from 1 to 100 nm, preferably from 3 to 50 nm, and more preferably from 5 to 20 nm. When the film thickness of the metal vapor-deposited layer is less than 1 nm, the gas barrier properties tend to be insufficient, and on the other hand, even when the film thickness exceeds 100 nm, no effect of improving the gas barrier properties is obtained, and the bending resistance and the production cost tend to increase.

The present vapor-deposited film thus obtained exhibits excellent surface smoothness on the vapor-deposited surface. The root mean square height (Sq) of the vapor-deposited surface of the present vapor-deposited film is preferably 0.080 $\mu$m or less, more preferably 0.070 $\mu$m or less, and still more preferably 0.065 $\mu$m or less. A smaller root mean square height (Sq) indicates a smoother surface, and thus is preferable. The root mean square height (Sq) can be measured by using a method according to ISO25178, and specifically can be measured by a method described in Examples below.

The arithmetic mean height (Sa) of the vapor-deposited surface of the present vapor-deposited film is preferably 0.060 $\mu$m or less, more preferably 0.055 $\mu$m or less, and still more preferably 0.050 $\mu$m or less. A smaller arithmetic mean height (Sa) indicates a smoother surface, and thus is preferable. The arithmetic mean height (Sa) can be measured by a method described in Examples described below.

In the present specification, the arithmetic mean height (Sa) means an average value of absolute values of differences in height at respective points with respect to a mean plane of the surface of the vapor-deposited film.

The oxygen permeability at 20°C and 90% RH of the present vapor-deposited film is preferably 8 cc/m$^2$·day·atm or less, more preferably 7 cc/m$^2$·day·atm or less, and particularly preferably 5 cc/m$^2$·day·atm or less.

The present vapor-deposited film can be suitably used as a molded article and a packaging material such as a packaging film for packaging, for example, general food products, as well as seasonings such as mayonnaise and dressings, fermented food products such as Miso, oil and/or fat food products such as salad oil, snack foods, beverages, cosmetics, and pharmaceuticals, or as a portion of a multilayer structure for forming these molded article and packaging material.

Multilayer Structure

The multilayer structure is obtained by further laminating an additional layer on the present vapor-deposited film. The additional layer to be laminated on the present vapor-deposited film is not particularly limited, and may be a layer formed from a resin composition containing a thermoplastic resin exemplified as the thermoplastic resin described above or an adhesive resin exemplified as the adhesive resin described above.

As a method for producing the multilayer structure, various known production methods such as a dry lamination method, a sandwich lamination method, an extrusion lamination method, a coextrusion lamination method, and a solution coating method can be adopted.

Molded Article

It is possible to obtain a cup-shaped or tray-shaped molded article using the present vapor-deposited film or the multilayer structure. In such a case, a draw molding method is usually employed, and specific examples of the method include a vacuum molding method, a pressure molding method, a vacuum-pressure molding method, and a plug assist vacuum-pressure molding method.

Furthermore, it is also possible to obtain a molded article such as a tubular or bottle-shaped multilayer container (laminate structure) or a food container from a multilayer parison (hollow tubular pre-molded product before blowing) using the multilayer structure. In that case, a blow molding method is usually employed, and specific examples thereof include extrusion blow molding methods (such as a twin-head type, a shuttle type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method).

As necessary, the resulting laminate may be subjected to a process, for example, a heat treatment, a cooling treatment, a rolling treatment, a printing treatment, a dry lamination treatment, a solution or melt coating treatment, a bag-making process, a deep drawing process, a box-making process, a tube-making process, and a splitting process.

Third Aspect

The third aspect includes the following aspects <III-1> to <III-9>.

<III-1>

A vapor-deposited film including: a substrate film having a layer containing a composition containing an EVOH resin, an alkaline metal compound, and a titanium compound; and a metal vapor-deposited layer laminated on the substrate film, wherein a content of the titanium compound in terms of metal is 0.001 ppm or more and less than 3 ppm relative to a mass of the composition.

<III-2>

The vapor-deposited film according to <III-1>, wherein a content of the alkaline metal compound in terms of metal is from 1 to 1000 ppm relative to the mass of the composition.

<III-3>

The vapor-deposited film according to <III-1> or <III-2>, wherein a mass ratio of the metal content of the alkaline metal compound to the content of the titanium compound in terms of metal is from 0.2 to 1000000.

<III-4>

The vapor-deposited film according to any one of <III-1> to <III-3>, wherein the substrate film is a multilayer film further having a layer containing a thermoplastic resin.

<III-5>

The vapor-deposited film according to any one of <III-1> to <III-4>, wherein a metal of the metal vapor-deposited layer is at least one selected from the group consisting of aluminum, gold, silver, copper, titanium, nickel, chromium, tin, and indium.

<III-6>

A multilayer structure including the vapor-deposited film described in any one of <III-1> to <III-5>.

<III-7>

A molded article including the vapor-deposited film described in any one of <III-1> to <III-5>.

<III-8>

A food container including the multilayer structure described in <III-6>.

<III-9>

A method for producing the vapor-deposited film described in any one of <III-1 > to <III-5>, the method including laminating an inorganic vapor-deposited layer on the substrate film.

The present disclosure will be described below with reference to embodiments for carrying out the third aspect. However, the present disclosure is not limited to the embodiments described below.

Vapor-Deposited Film

A vapor-deposited film according to the third aspect of the present disclosure (hereinafter sometimes referred to as "the present vapor-deposited film") includes: a substrate film having a layer containing a composition containing an ethylene-vinyl alcohol copolymer, an alkaline metal compound, and a titanium compound; and a metal vapor-deposited layer laminated on the substrate film.

Hereinafter, each constituent will be described.

Substrate Film

The substrate film has a layer containing an EVOH resin (hereinafter referred to as an "EVOH layer").

Hereinafter, each constituent of the substrate film will be described.

EVOH Layer

The EVOH layer is formed from a composition containing EVOH resin (hereinafter sometimes referred to as "the present composition"). The present composition will be described below.

The present composition contains the EVOH resin as a main component, as well as an alkaline metal compound and a specific trace amount of a titanium compound.

That is, in the present composition, the base resin is the EVOH resin, and the content of the EVOH resin in the present composition is usually 70 mass% or more, preferably 80 mass% or more, more preferably 90 mass% or more, and particularly preferably 95 mass% or more.

Hereinafter, the respective components will be described.

EVOH Resin

The EVOH resin used in the present embodiment is usually a resin produced by saponification of an ethylene-vinyl ester copolymer, which is a copolymer of ethylene and a vinyl ester monomer, and the resin is a water-insoluble thermoplastic resin. The same EVOH resin as the (EVOH resin) described in the first aspect can be used.

Alkaline Metal Compound

Examples of the alkaline metal compound include salts and hydroxides of alkaline metals. One of these may be used alone, or two or more of these may be used in combination. Among these, the alkaline metal compound is preferably water-soluble, and an alkaline metal salt is preferable from the viewpoint of dispersibility.

Examples of the alkaline metal salt include an inorganic salt of alkaline metals, and a carboxylate of alkaline metals. Among these, the carboxylates of alkaline metals are preferred.

Examples of the inorganic salt of alkaline metals include a carbonate, a hydrogen carbonate, a phosphate, a borate, a sulfate, and a chloride of alkaline metals.

Examples of the carboxylate of alkaline metals include carboxylates including: monocarboxylates having from 2 to 11 carbon atoms such as an acetate, a butyrate, a propionate, an enanthate, and a caprate; dicarboxylates having from 2 to 11 carbon atoms such as an oxalate, a malonate, a succinate, an adipate, a suberate, and a sebacate; monocarboxylates having 12 or more carbon atoms such as a laurate, a palmitate, a stearate, a 12-hydroxystearate, a behenate, and a montanate; and a carboxylate with a polymerization terminal carboxyl group of the EVOH resin.

Among these, the monocarboxylates having from 2 to 11 carbon atoms are preferable, and the acetate is particularly preferable.

Examples of the alkaline metal species of the alkaline metal compound include lithium, sodium, potassium, rubidium, and cesium.

Among them, sodium and potassium are preferable, and sodium is particularly preferable.

The molecular weight of the alkaline metal compound is usually from 20 to 10000, preferably from 20 to 1000, and particularly preferably from 20 to 500.

Among these, sodium acetate is preferable as the alkaline metal compound. In addition, the alkaline metal compound preferably excludes an inorganic layered compound and a double salt from the viewpoints of economic efficiency and dispersibility.

By incorporating an appropriate amount of the alkaline metal compound into the present composition, the thermal stability is improved, the generation of streaks, microgels, and the like is suppressed, and the surface becomes smooth.

The content of the alkaline metal compound in terms of metals is preferably from 1 to 1000 ppm, more preferably from 5 to 800 ppm, still more preferably from 10 to 700 ppm, particularly preferably from 100 to 600 ppm, and especially preferably from 150 to 400 ppm, relative to the mass of the composition.

When the content of the alkaline metal compound is too high, the surface smoothness tends to decrease due to a decrease in the thermal stability (generation of streaks and microgels), and when the alkaline metal compound is not added or the content thereof is too low, the moldability of the composition tends to decrease.

The content of the alkaline metal compound in terms of metal can be measured by an atomic absorption spectrophotometer using a test solution obtained by adding pure water to a solution obtained by subjecting a heat-ashed product of the present composition to an acid treatment with hydrochloric acid or the like to achieve a constant volume.

Titanium Compound

Examples of the titanium compound include an inorganic titanium compound and an organic titanium compound. These titanium compounds may be used alone or in combination of two or more types. Among these, the inorganic titanium compound is preferable.

As the inorganic titanium compound, the same titanium compound as the (titanium compound) described in the first aspect can be used.

The content of the titanium compound in terms of metal is 0.001 ppm or more and less than 3 ppm relative to the mass of the present composition. The content is preferably from 0.01 to 1 ppm, more preferably from 0.03 to 0.5 ppm, and particularly preferably from 0.05 to 0.2 ppm. When the content of the titanium compound is within the above range, the titanium compound fills minute dents at the surface of the EVOH film, and thus the surface smoothness is enhanced. When the content of the titanium compound is too low, the minute dents are not filled, and therefore minute irregularities remain at the surface, and when the content is too high, excess titanium oxide appears on the surface, and thus protrusions are formed and the surface is roughened.

The content of the titanium compound in terms of metal is, that is, the content of the titanium element.

In addition, when the content of the titanium compound is within the above range, the generation of microgels due to thermal degradation during melt molding can be suppressed, and the film surface tends to be enhanced in smoothness. In addition, when the content of the titanium compound is too low, the effects of suppressing the generation of microgels and the surface smoothness tend to decrease, and when the content is too high, the EVOH resin tends to be thermally decomposed, and the surface smoothness tends to decrease due to the generation of microgels.

The content of the titanium compound in terms of metal can be quantified by weighing the present composition in a platinum crucible, sequentially ashing the present composition with a burner and an electric furnace, thermally decomposing the ashed product with nitric acid and hydrofluoric acid, treating the decomposed product with a mixed acid of dilute nitric acid and dilute hydrofluoric acid, setting the resultant mixture to a constant volume to yield a constant volume liquid, and measuring the titanium in the constant volume liquid by ICP mass spectrometry using an ICP mass spectrometer (Agilent 8800, available from Agilent Technologies, Inc.).

The mass ratio of the content of the alkaline metal compound to the content of the titanium compound in terms of metal is usually from 1 to 360000, preferably from 18 to 100000, and particularly preferably from 100 to 50000.

When the mass ratio is within the above range, there is a tendency that the change in coloration due to thermal degradation can be further suppressed.

The mass ratio of the content of the alkaline metal compound in terms of metal to the content of the titanium compound in terms of metal is preferably from 0.2 to 1000000, more preferably from 0.3 to 100000, still more preferably from 5 to 27000, particularly preferably from 20 to 14000, especially preferably from 100 to 7000, and most preferably from 300 to 4000.

When the mass ratio is within the above range, there is a tendency that the change in coloration due to thermal degradation can be further suppressed. When the mass ratio is too high, the thermal stability tends to decrease, and when the mass ratio is too low, the molded product tends to be colored.

Usually, it is considered that, when a titanium compound is contained in a resin composition containing an EVOH resin, the resin composition is thermally degraded by titanium ions, and microgels are generated. Therefore, it is technical common knowledge for those skilled in the art to avoid the use of the titanium compound. However, in the present embodiment, it has been found that, contrary to such technical common knowledge, when a specific trace amount of a titanium compound is used, titanium of the titanium compound is coordinated to a double bond of the main chain of the EVOH resin to form a chelate, and thus the thermal stability is improved, the generation of microgels due to thermal degradation is suppressed, and an EVOH film having excellent surface smoothness can be obtained.

The EVOH resin is colored because of thermal degradation. This is presumed to be due to the fact that the EVOH resin degrades with heat and generates radicals, the hydroxyl groups in the EVOH resin are dehydrated by the radicals to generate a double bond in the main chain of the EVOH resin, and such a site serves as a reaction starting point to further promote dehydration, and thus, a conjugated polyene structure is formed in the main chain of the EVOH resin. In the present resin composition, it is presumed that since titanium in a specific trace amount of the titanium compound is stable in the form of a tetravalent ion, even in a small amount, stabilization is achieved, for example, by coordination to the double bond of the main chain of the EVOH resin to form a chelate, and thus, formation of such a polyene structure is suppressed.

Additional Thermoplastic Resin

The present composition can contain a thermoplastic resin other than the EVOH resin within such a range that the effects of the present disclosure are not impaired (e.g., usually 30 mass% or less, preferably 20 mass% or less, and particularly preferably 10 mass% or less of the present composition, and the lower limit is usually 0 mass%).

As the additional thermoplastic resin, the same additional thermoplastic resin as the (additional thermoplastic resin) described in the first aspect can be used.

Additional Compounding Agent

The present composition may contain a compounding agent (excluding the titanium compound and the alkaline metal compound) that is generally compounded in the EVOH resin, within such a range that the effects of the present disclosure are not impaired (for example, usually 30 mass% or less, preferably 20 mass% or less, and more preferably 10 mass% or less of the present resin composition, and the lower limit is usually 0 mass%). As the compounding agent, the same additional compounding agent as the (additional compounding agent) described in the first aspect can be used.

Method for Producing Present Composition

The present composition can be produced by mixing the EVOH resin, the alkaline metal compound, and the titanium compound using a known method, for example, a dry blending method, a melt mixing method, a solution mixing method, or an impregnation method. Among these methods, it is preferable to produce the present composition by including a step of melt-mixing a composition raw material containing the EVOH resin and the titanium compound. Furthermore, these production methods can be optionally combined.

Examples of the dry blending method include (i) a method of dry-blending the EVOH resin having a pellet-shape, the alkaline metal compound, and the titanium compound by using, for example, a tumbler.

Examples of the melt mixing method include (ii) a method of melt-kneading a dry blend obtained by dry-blending the EVOH resin having a pellet-shape, the alkaline metal compound, and the titanium compound, and (iii) a method of adding the alkaline metal compound and the titanium compound to the EVOH resin in a molten state and melt-kneading the resultant mixture.

Examples of the solution mixing method include (iv) a method of preparing a solution using a commercially available EVOH resin, blending the alkaline metal compound and the titanium compound in the solution, subjecting the blended solution to solidification molding, followed by solid-liquid separation with a known means, and drying the obtained product; and (v) a method of, in the process of producing an EVOH resin, incorporating the alkaline metal compound and the titanium compound in an ethylene-vinyl ester copolymer solution or a uniform solution of the EVOH resin (for example, water/alcohol solution) before saponification, subjecting the resultant mixture to solidification molding, followed by solid-liquid separation with a known means, and drying the obtained product.

Examples of the impregnation method include (vi) a method of bringing the EVOH resin having a pellet-shape into contact with an aqueous solution containing the alkaline metal compound and the titanium compound, incorporating the alkaline metal compound and the titanium compound in the EVOH resin, and then drying the EVOH resin.

As the aqueous solution containing the titanium compound, an aqueous solution of the alkaline metal compound and the titanium compound or an aqueous solution in which titanium ions are eluted by immersing the alkaline metal compound and the titanium compound in water containing various agents can be used.

In the impregnation method, the contents of the alkaline metal compound and the titanium compound (in terms of metal) can be controlled by, for example, the concentrations of the alkaline metal compound and the titanium compound in the aqueous solution in which the EVOH resin is immersed, the immersion temperature, and the immersion time.

The immersion time is usually from 0.5 to 48 hours, preferably from 1 to 36 hours, and the immersion temperature is usually from 10 to 40°C, and preferably from 20 to 35°C.

As the drying method in each of the above production methods, various drying methods can be employed, and either drying under a static condition or fluidized drying may be employed. These methods can be performed in combination.

As described above, in the present embodiment, the above different methods can be combined. Particularly, the melt mixing method is preferable, and the method (ii) is particularly preferable, in that a resin composition that exhibits more significant productivity and effects of the present disclosure is yielded. Even when the additional thermoplastic resin and the additional compounding agent as described above are used, the additional thermoplastic resin and the additional compounding agent may be blended by a known method according to the aforementioned production method.

The present composition produced by each of the production methods described above may have any shape, but is preferably a shape of a pellet.

The pellet may be in, for example, a spherical, oval, cylindrical, cubic, or rectangular parallelepiped shape, but is usually in an oval or cylindrical shape. From the viewpoint of convenience in the subsequent use as a molding material, in the case of the oval shape, the minor axis length is usually from 1 to 10 mm, preferably from 2 to 6 mm, and more preferably from 2.5 to 5.5 mm, and the major axis length is usually from 1.5 to 30 mm, preferably from 3 to 20 mm, and more preferably from 3.5 to 10 mm. In the case of the cylindrical shape, the bottom surface has a diameter of usually from 1 to 6 mm and preferably from 2 to 5 mm, and the length is usually from 1 to 6 mm and preferably from 2 to 5 mm.

Also, the shape and the size of the pellet-shaped EVOH resin used in each of the production methods are preferably the same.

The moisture content of the present composition before melt molding is usually from 0.01 to 0.5 mass%, preferably from 0.05 to 0.35 mass%, and particularly preferably from 0.1 to 0.3 mass%.

Here, the term "melt molding" in the phrase "before melt molding" means melting a material and forming the molten material into a certain shape, and examples thereof include melting a resin composition and pelletizing the molten resin composition, and melting a resin composition and forming the molten resin composition into a film.

The moisture content of the present composition is measured and calculated by the following method.

The mass ($W_1$) of the present composition before drying is weighed with an electronic balance, the present composition is dried in a hot air dryer at 150°C for 5 hours and allowed to cool in a desiccator for 30 minutes, and then the mass ($W_2$) after cooling is weighed. The moisture content is calculated from the following Equation:

$$\text{Moisture content (mass\%)} = [(W_1 - W_2)/W_1] \times 100$$

When the present composition is in the form of a pellet, preferably, a known lubricant is adhered to the surface of the pellet from the viewpoint of stabilizing the feedability during melt molding. Examples of the type of the lubricant include higher fatty acids having 12 or more carbon atoms (for example, lauric acid, myristic acid, palmitic acid, stearic acid, behenic acid, and oleic acid), higher fatty acid esters (for example, methyl esters, isopropyl esters, butyl esters, and octyl esters of higher fatty acids), higher fatty acid amides (for example, saturated higher fatty acid amides, such as lauramide, myristamide, palmitamide, stearamide, and behenamide; unsaturated higher fatty acid amides, such as oleamide and erucamide; and bis (higher fatty acid) amides, such as ethylenebis(stearamide), ethylenebis(oleamide), ethylenebis(erucamide), and ethylenebis(lauramide), low-molecular-weight polyolefins (for example, low-molecular-weight polyethylene having a molecular weight of approximately 500 to 10000, or low-molecular-weight polypropylene, or acid-modified products thereof), higher alcohols having 6 or more carbon atoms, ester oligomers, and ethylene fluoride resins. One of these compounds may be used alone or two or more thereof may be used in combination. The content of the lubricant is usually 5 mass% or less and preferably 1 mass% or less of the present composition. The lower limit is usually 0 mass%.

The present composition thus produced is prepared into various forms such as a pellet, a powder form, or a liquid form, and is provided as a molding material for various molded products. In particular, in the present embodiment, when the present composition is provided as a material for melt molding, the effects of the present disclosure tend to be more efficiently achieved, which is preferable.

The present composition also includes a resin composition obtained by mixing a resin other than the EVOH resin used in the present composition.

The substrate film may be, for example, a monolayer film (EVOH layer) molded from the present composition, or a multilayer film having at least one EVOH layer.

Layer Containing Thermoplastic Resin

The substrate film preferably has a layer containing a thermoplastic resin (hereinafter, sometimes referred to as a "thermoplastic resin layer"). When the substrate film has the thermoplastic resin layer, the mechanical strength and the barrier properties against water vapor of the present vapor-deposited film tend to be further enhanced. In addition, properties such as heat sealability and mechanical strength can be imparted depending on the type of the thermoplastic resin constituting the thermoplastic resin layer.

As the thermoplastic resin, the same thermoplastic resin as the thermoplastic resin described in the section "Layer Containing Thermoplastic Resin" in the first aspect can be used.

The content of the thermoplastic resin in the thermoplastic resin layer is not particularly limited, but the thermoplastic resin is preferably the main component (that is, the content of the thermoplastic resin contained in the thermoplastic resin layer is 50 mass% or more). The content of the thermoplastic resin is more preferably 60 mass% or more, still more preferably 70 mass% or more, and particularly preferably 80 mass% or more, 90 mass% or more, 95 mass% or more, or 100 mass%.

For example, the thermoplastic resin layer may contain, in addition to the thermoplastic resin, an additional component within a range that does not inhibit the effects of the present disclosure, and generally within a range of 20 mass% or less. Examples of the component include an anti-blocking agent, a processing aid, a resin other than the thermoplastic resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Layer Containing Adhesive Resin

The substrate film may have a layer containing an adhesive resin (hereinafter, sometimes referred to as an "adhesive resin layer"). When the substrate film has the adhesive resin layer, the appearance characteristics (film surface) of the present vapor-deposited film tend to be further improved.

As the adhesive resin, the same adhesive resin as the adhesive resin described in the section "Layer Containing Adhesive Resin" of the first aspect can be used.

The content of the adhesive resin in the adhesive resin layer is not particularly limited, but the adhesive resin is preferably the main component (that is, the content of the adhesive resin contained in the adhesive resin layer is 50 mass% or more). Especially, the content of the adhesive resin is more preferably 60 mass% or more, still more preferably 70 mass% or more, and particularly preferably 80 mass% or more, 90 mass% or more, 95 mass% or more, or 100 mass%.

The adhesive resin layer may contain a component other than the adhesive resin, within a range that does not inhibit the effects of the present disclosure, and generally within a range of 20 mass% or less. Examples of the component include an anti-blocking agent, a processing aid, a resin other than the adhesive resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Method for Producing Substrate Film

The substrate film can be usually produced by extruding the composition from a die, molding the composition into a film, and stretching the film as necessary.

When the substrate film has the thermoplastic resin layer and the adhesive resin layer, the substrate film can be produced by molding raw material compositions for forming the EVOH layer, the thermoplastic resin layer, and the adhesive resin layer, respectively, into films by known coextrusion in which the compositions are extruded from dies different from each other or a common die and laminated, and then stretching the films as necessary.

As the die, for example, an annular die or a T-die can be used.

Examples of the molding method include methods of melting a material and molding the molten material, such as extrusion molding, blow molding, injection molding, thermoforming, and inflation molding, and a method of molding a formed solution, such as cast molding.

The substrate film is not particularly limited in other layer configurations as long as the substrate film has the EVOH layer, but the EVOH layer is preferably at least one of the surface layers. Since the substrate film has the EVOH layer, the present vapor-deposited film can yield excellent transparency.

The substrate film is preferably a multilayer film, and examples of the layer configuration thereof include, when the EVOH layer is referred to as a "layer (A)", the thermoplastic resin layer is referred to as a "layer (B)", and the adhesive resin layer is referred to as a "layer (C)", the layer (B)/the layer (A), the layer (B)/the layer (A)/the layer (B), the layer (B)/the layer (C)/the layer (A)/the layer (B), the layer (B)/the layer (C)/the layer (A)/the layer (C)/the layer (B), the layer (B)/the layer (A)/the layer (B)/the layer (A)/the layer (B), the layer (B)/the layer (B)/the layer (C)/the layer (A)/the layer (C)/the layer (B)/the layer (B), the layer (A)/the layer (C)/the layer (B), the layer (A)/the layer (B)/the layer (C)/the layer (B), and the layer (A)/the layer (C)/the layer (B)/the layer (B).

In the above examples, the layer (B) and the layer (C) are exemplified as examples of a layer other than the layer (A), but the layer other than the layer (A) is not limited thereto.

Moreover, the substrate film preferably does not include a layer formed from a resin composition containing a polyamide-based resin as a main component (that is, the content of the polyamide-based resin contained in the resin composition is 50 mass% or more).

In the above examples, the symbol "/" means that the layers on both sides of the symbol are directly laminated.

The substrate film thus obtained is preferably stretched as necessary, and more preferably uniaxially stretched.

The stretching ratio in the uniaxially stretched film is preferably 3 or more, more preferably 4 or more, and particularly preferably 5 or more. When the stretching ratio is less than 3, thickness non-uniformity due to stretching tends to occur, and the gas barrier properties tend to decrease.

The upper limit of the stretching ratio is preferably 12 or less, more preferably 10 or less, and particularly preferably 8 or less. When the stretching ratio exceeds 12, the film surface after stretching tends to deteriorate.

Uniaxially stretching the substrate film provides advantages, such as an advantage from the viewpoint of economic efficiency, as well as easy tearing of a multilayer structure (when the multilayer structure is used as a packaging material, the packaging material being easy to open), and improvement in the gas barrier properties.

The stretching direction of the uniaxially stretched film is not particularly limited, and the stretching may be implemented in the longitudinal direction (machine direction (MD)) or the width direction (transverse direction (TD)), but is preferably uniaxial stretching in the longitudinal direction (MD), and is particularly preferably not substantially implemented in a direction different from the stretching direction.

The stretched state (such as unstretched, uniaxially stretched, or biaxially stretched) of the substrate film can be confirmed by using a general method for analyzing the orientation of the resin (for example, wide-angle X-ray scattering (WAXS)).

The method for stretching the uniaxially stretched film is not particularly limited, and examples thereof include a tenter stretching method, a tubular stretching method, and a roll stretching method. Among these, from the viewpoint of production cost, uniaxial stretching by the roll stretching method is preferred. When the substrate film is obtained by the inflation molding, the roll stretching method is preferred.

The stretching temperature at the time of uniaxial stretching is not particularly limited, but is generally from 50 to 130°C.

The total thickness of the substrate film is not particularly limited and may be appropriately set depending on the application. The thickness of the substrate film is preferably 10 μm or greater, and more preferably 15 μm or greater. When the thickness of the substrate film is 10 μm or more, the industrial productivity and the mechanical properties tend to be further improved. In addition, the thickness of the substrate film is preferably 100 μm or less, and more preferably 50 μm or less. When the thickness of the substrate film is 100 μm or less, the industrial productivity and the economic efficiency tend to be further improved.

The thickness of the substrate film as a uniaxially stretched film means the thickness after stretching.

When the substrate film is a multilayer film, the thickness of the EVOH layer is preferably 0.5 μm or more, more preferably 0.8 μm or more, and particularly preferably 1 μm or more. When the thickness of the EVOH layer is 0.5 μm or more, the gas barrier properties tend to be improved.

On the other hand, the thickness of the EVOH layer is preferably 20 μm or less, more preferably 10 μm or less, and particularly preferably 5 μm or less. When the thickness of the EVOH layer is 20 μm or less, the appearance characteristics (film surface) tend to be improved.

The thickness of the multilayer film as a uniaxially stretched film means the thickness after stretching. Moreover, when the substrate film includes a plurality of EVOH layers, the total thickness of all the EVOH layers is preferably within the above range.

When the substrate film is a multilayer film, the ratio of the thickness of the EVOH layer to the total thickness of all the layers is preferably 30% or less, and more preferably 20% or less, and may be 10% or less or 5% or less, from the viewpoints of industrial productivity and mechanical properties.

When the substrate film has the thermoplastic resin layer, the thickness thereof is preferably from 7 to 100 μm, and more preferably from 10 to 50 μm, from the viewpoints of industrial productivity and mechanical properties.

In the substrate film as a uniaxially stretched film, the thickness of the thermoplastic resin layer means the thickness after stretching. In addition, when the substrate film includes a plurality of thermoplastic resin layers, the total thickness of all the thermoplastic resin layers is preferably within the above range.

When the substrate film has the adhesive resin layer, the thickness thereof is preferably from 0.5 to 20 μm, and more preferably from 1 to 10 μm, from the viewpoints of industrial productivity and quality stability.

In the substrate film as a uniaxially stretched film, the thickness of the adhesive resin layer means the thickness after stretching. Moreover, when the substrate film includes a plurality of adhesive resin layers, the total thickness of all the adhesive resin layers is preferably within the above range.

The internal haze value of the substrate film is preferably less than 0.4%, more preferably 0.3% or less, still more preferably 0.2% or less, and particularly preferably 0%. The internal haze value can be measured in accordance with ASTM D1003 using the substrate film with a film thickness of 33 $\mu$m and a HAZE meter.

Metal Vapor-Deposited Layer

The metal vapor-deposited layer laminated on the substrate film is obtained by depositing an elemental metal or an alloy of two or more metals. The metal vapor-deposited layer is preferably laminated on the EVOH layer of the substrate film from the viewpoint of gas barrier properties.

Examples of the metal used in the metal vapor-deposited layer include those classified into group 13 elements (such as aluminum, gallium, and indium), group 14 elements (such as titanium, zirconium, tin, and hafnium), noble metals (such as copper, silver, and gold), group 6 elements (such as chromium, molybdenum, and tungsten), group 8 elements (such as iron, cobalt, and nickel), and alloys thereof. Among these, at least one selected from the group consisting of aluminum, gold, silver, copper, titanium, nickel, chromium, tin, and indium is generally preferable, from the viewpoint of their availability and easy of handling, and especially, a metal made of aluminum is particularly preferable.

The metal used in the metal vapor-deposited layer preferably includes a metal compound such as a metal oxide, a metal carbide, or a metal nitride, and among these metal compounds, the metal oxide is preferable. The content of the metal compound is preferably 50 mass% or more, more preferably 80 mass% or more, and still more preferably 90 mass% or more, and may be 100 mass%, of the metal used in the metal vapor-deposited layer.

The metal vapor-deposited layer can be identified by analyzing a cross section of the laminate by energy dispersive spectroscopy (EDS).

Method for Producing Present Vapor-Deposited Film

The present vapor-deposited film can be produced by laminating the metal vapor-deposited layer on the substrate film.

The method for laminating the metal vapor-deposited layer on the substrate film is not particularly limited, and a known vapor deposition method may be appropriately employed, for example, a physical vapor deposition method (PVD method) such as a vacuum deposition method, a sputtering method, or an ion plating method, or a chemical vapor deposition method (CVD method).

The film thickness of the metal vapor-deposited layer is usually from 1 to 100 nm, preferably from 3 to 50 nm, and more preferably from 5 to 20 nm. When the film thickness of the metal vapor-deposited layer is less than 1 nm, the gas barrier properties tend to be insufficient, and on the other hand, even when the film thickness exceeds 100 nm, no effect of improving the gas barrier properties is obtained, and the bending resistance and the production cost tend to increase.

The present vapor-deposited film thus obtained exhibits excellent surface smoothness on the vapor-deposited surface. The root mean square height (Sq) of the vapor-deposited surface of the present vapor-deposited film is preferably 0.090 $\mu$m or less, more preferably 0.080 $\mu$m or less, and still more preferably 0.070 $\mu$m or less. A smaller root mean square height (Sq) indicates a smoother surface, and thus is preferable. The root mean square height (Sq) can be measured by using a method according to ISO25178, and specifically can be measured by a method described in Examples below.

The oxygen permeability at 20°C and 90% RH of the present vapor-deposited film is preferably 8 cc/m$^2$·day·atm or less, more preferably 7 cc/m$^2$·day·atm or less, and particularly preferably 5 cc/m$^2$·day·atm or less.

The present vapor-deposited film can be suitably used as a molded article and a packaging material such as a packaging film for packaging, for example, general food products, as well as seasonings such as mayonnaise and dressings, fermented food products such as Miso, oil and/or fat food products such as salad oil, snack foods, beverages, cosmetics, and pharmaceuticals, or as a portion of a multilayer structure for forming these molded article and packaging material.

Multilayer Structure

The multilayer structure is obtained by further laminating an additional layer on the present vapor-deposited film. The additional layer to be laminated on the present vapor-deposited film is not particularly limited, and may be a layer formed from a resin composition containing a thermoplastic resin exemplified as the thermoplastic resin described above or an adhesive resin exemplified as the adhesive resin described above.

As a method for producing the multilayer structure, various known production methods such as a dry lamination method, a sandwich lamination method, an extrusion lamination method, a coextrusion lamination method, and a solution coating method can be adopted.

Molded Article

It is possible to obtain a cup-shaped or tray-shaped molded article using the present vapor-deposited film or the multilayer structure. In such a case, a draw molding method is usually employed, and specific examples of the method include a vacuum molding method, a pressure molding method, a vacuum-pressure molding method, and a plug assist vacuum-pressure molding method.

Furthermore, it is also possible to obtain a molded article such as a tubular or bottle-shaped multilayer container (laminate structure) or a food container from a multilayer parison (hollow tubular pre-molded product before blowing) using the multilayer structure. In that case, a blow molding method is usually employed, and specific examples thereof include extrusion blow molding methods (such as a twin-head type, a shuttle type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method).

As necessary, the resulting laminate may be subjected to a process, for example, a heat treatment, a cooling treatment, a rolling treatment, a printing treatment, a dry lamination treatment, a solution or melt coating treatment, a bag-making process, a deep drawing process, a box-making process, a tube-making process, and a splitting process.

Fourth Aspect

The fourth aspect includes the following aspects <IV-1> to <IV-9>.

<IV-1>

A vapor-deposited film including: a substrate film having a layer containing a composition containing an EVOH resin, an alkaline earth metal compound, and a titanium compound; and a metal vapor-deposited layer laminated on the substrate film, wherein a content of the titanium compound in terms of metal is 0.001 ppm or more and less than 3 ppm relative to a mass of the composition.

<IV-2>

The vapor-deposited film according to <IV-1>, wherein a content of the alkaline earth metal compound in terms of metal is from 0.1 to 800 ppm relative to the mass of the composition.

<IV-3>

The vapor-deposited film according to <IV-1> or <IV-2>, wherein a mass ratio of the content of the alkaline earth metal compound in terms of metal to the content of the titanium compound in terms of metal is from 0.03 to 500000.

<IV-4>

The vapor-deposited film according to any one of <IV-1> to <IV-3>, wherein the substrate film is a multilayer film further having a layer containing a thermoplastic resin.

<IV-5>

The vapor-deposited film according to any one of <IV-1> to <IV-4>, wherein a metal of the metal vapor-deposited layer is at least one selected from the group consisting of aluminum, gold, silver, copper, titanium, nickel, chromium, tin, and indium.

<IV-6>

A multilayer structure including the vapor-deposited film described in any one of <IV-1> to <IV-5>.

<IV-7>

A molded article including the vapor-deposited film described in any one of <IV-1> to <IV-5>.

<IV-8>

A food container including the multilayer structure described in <IV-6>.

<IV-9>

A method for producing the vapor-deposited film described in any one of <IV-1> to <IV-5>, the method including laminating an inorganic vapor-deposited layer on the substrate film.
The present disclosure will be described below with reference to embodiments for carrying out the fourth aspect. However, the present disclosure is not limited to the embodiments described below.

Vapor-Deposited Film

A vapor-deposited film according to the fourth aspect of the present disclosure (hereinafter sometimes referred to as "the present vapor-deposited film") includes: a substrate film having a layer containing a composition containing an ethylene-vinyl alcohol copolymer, an alkaline earth metal compound, and a titanium compound; and a metal vapor-deposited layer laminated on the substrate film.
Hereinafter, each constituent will be described.

Substrate Film

The substrate film has a layer containing an EVOH resin (hereinafter referred to as an "EVOH layer").
Hereinafter, each constituent of the substrate film will be described.

EVOH Layer

The EVOH layer is formed from a composition containing the EVOH resin (hereinafter sometimes referred to as "the present composition"). The present composition will be described below.
The present composition contains the EVOH resin as a main component, as well as an alkaline earth metal compound and a specific trace amount of a titanium compound.
That is, in the present composition, the base resin is the EVOH resin, and the content of the EVOH resin in the present composition is usually 70 mass% or more, preferably 80 mass% or more, more preferably 90 mass% or more, and particularly preferably 95 mass% or more.
Hereinafter, the respective components will be described.

EVOH Resin

The EVOH resin used in the present embodiment is usually a resin produced by saponification of an ethylene-vinyl ester copolymer, which is a copolymer of ethylene and a vinyl ester monomer, and the resin is a water-insoluble thermoplastic resin. The same EVOH resin as the (EVOH resin) described in the first aspect can be used.

Alkaline Earth Metal Compound

Examples of the alkaline earth metal compound include salts, oxides, and hydroxides of alkaline earth metals. One of these may be used alone, or two or more of these may be used in combination. Among these, from the viewpoints of economic efficiency and dispersibility, an alkaline earth metal salt and an alkaline earth metal oxide are preferable, and an alkaline earth metal oxide is particularly preferable.
Examples of the alkaline earth metal salt include an inorganic salt of alkaline earth metals, and a carboxylate of alkaline earth metals.
Examples of the inorganic salt of alkaline earth metals include a carbonate, a hydrogen carbonate, a phosphate, a borate, a sulfate, and a chloride of alkaline earth metals.
Examples of the carboxylate of alkaline earth metals include saturated or unsaturated carboxylates having from 2 to 25 carbon atoms, preferably from 2 to 22 carbon atoms, and particularly preferably from 6 to 20 carbon atoms, and specific examples thereof include monovalent carboxylates such as an acetate, a butyrate, a propionate, an enanthate, a caprate, a laurate, a palmitate, a stearate, a 12-hydroxystearate, a behenate, and a montanate, and divalent carboxylates such as an oxalate, a malonate, a succinate, an adipate, a suberate, and a sebacate. Among these, from the viewpoint of commercial availability, a linear saturated carboxylate is preferable, and a monovalent carboxylate is more preferable.
Examples of the alkaline earth metal species of the alkaline earth metal compound include beryllium, magnesium, calcium, strontium, barium, and radium. Among them, magnesium and calcium are preferred, and magnesium is particularly preferred, from the viewpoints of commercial availability and economic efficiency.

Among these, magnesium oxide is preferable as the alkaline earth metal compound. In addition, the alkaline earth metal compound preferably excludes a layered inorganic compound such as montmorillonite and a double salt such as hydrotalcite from the viewpoints of economic efficiency and dispersibility.

The alkaline earth metal compound can be used in any form such as a solid form (for example, powder, fine powder, or flakes), a semi-solid form, a liquid form, a paste form, a solution form, or an emulsion form (aqueous dispersion). Among these, a powder form is preferable.

By incorporating an appropriate amount of the alkaline earth metal compound into the present composition, the thermal stability is improved, the generation of streaks, microgels, and the like is suppressed, and the surface becomes smooth.

The content of the alkaline earth metal compound in terms of metals is preferably from 0.1 to 800 ppm, more preferably from 0.3 to 500 ppm, still more preferably from 0.5 to 300 ppm, particularly preferably from 1 to 200 ppm, especially preferably from 2 to 150 ppm, yet still more preferably from 3 to 80 ppm, and most preferably from 5 to 40 ppm, relative to the mass of the composition.

When the content of the alkaline earth metal compound in terms of metal is too high, the surface smoothness tends to decrease due to a decrease in the thermal stability (generation of streaks and microgels), and when the alkaline earth metal compound is not added or the content thereof is too low, the moldability of the composition tends to decrease.

The content of the alkaline earth metal compound in terms of metal can be measured by an atomic absorption spectrophotometer using a test solution obtained by adding pure water to a solution obtained by subjecting a heat-ashed product of the present composition to an acid treatment with hydrochloric acid or the like to achieve a constant volume.

Titanium Compound

Examples of the titanium compound include an inorganic titanium compound and an organic titanium compound. These titanium compounds may be used alone or in combination of two or more types. Among these, the inorganic titanium compound is preferable.

As the inorganic titanium compound, the same titanium compound as the (titanium compound) described in the first aspect can be used.

The content of the titanium compound in terms of metal is 0.001 ppm or more and less than 3 ppm relative to the mass of the present composition. The content is preferably from 0.01 to 1 ppm, more preferably from 0.03 to 0.5 ppm, and particularly preferably from 0.05 to 0.2 ppm. When the content of the titanium compound is within the above range, the titanium compound fills minute dents at the surface of the EVOH film, and thus the surface smoothness is enhanced. When the content of the titanium compound is too low, the minute dents are not filled, and therefore minute irregularities remain at the surface, and when the content is too high, excess titanium oxide appears on the surface, and thus protrusions are formed and the surface is roughened.

The content of the titanium compound in terms of metal is, that is, the content of the titanium element.

In addition, when the content of the titanium compound is within the above range, the generation of microgels due to thermal degradation during melt molding can be suppressed, and the film surface tends to be enhanced in smoothness. In addition, when the content of the titanium compound is too low, the effects of suppressing the generation of microgels and the surface smoothness tend to decrease, and when the content is too high, the EVOH resin tends to be thermally decomposed, and the surface smoothness tends to decrease due to the generation of microgels.

The content of the titanium compound in terms of metal can be quantified by weighing the present composition in a platinum crucible, sequentially ashing the present composition with a burner and an electric furnace, thermally decomposing the ashed product with nitric acid and hydrofluoric acid, treating the decomposed product with a mixed acid of dilute nitric acid and dilute hydrofluoric acid, setting the resultant mixture to a constant volume to yield a constant volume liquid, and measuring the titanium in the constant volume liquid by ICP mass spectrometry using an ICP mass spectrometer (Agilent 8800, available from Agilent Technologies, Inc.).

The mass ratio of the content of the alkaline earth metal compound in terms of metal to the content of the titanium compound in terms of metal is preferably from 0.03 to 500000, more preferably from 0.04 to 50000, still more preferably from 0.5 to 10000, particularly preferably from 2 to 4000, especially preferably from 9 to 1000, and most preferably from 50 to 500. When the mass ratio is within the above range, the generation of microgels due to thermal degradation is suppressed, and the surface smoothness tends to be enhanced. When the mass ratio is too high, the thermal stability tends to decrease, and when the mass ratio is too low, the surface smoothness tends to decrease.

Usually, it is considered that, when a titanium compound is contained in a resin composition containing an EVOH resin, the resin composition is thermally degraded by titanium ions, and microgels are generated. Therefore, it is technical common knowledge for those skilled in the art to avoid the use of the titanium compound. However, in the present embodiment, it has been found that, contrary to such technical common knowledge, when a specific trace amount of a titanium compound is used, titanium of the titanium compound is coordinated to a double bond of the main chain of the EVOH resin to form a chelate, and thus the thermal stability is improved, the generation of microgels due to thermal degradation is suppressed, and an EVOH film having excellent surface smoothness can be obtained.

The EVOH resin is colored because of thermal degradation. This is presumed to be due to the fact that the EVOH resin degrades with heat and generates radicals, the hydroxyl groups in the EVOH resin are dehydrated by the radicals to generate a double bond in the main chain of the EVOH resin, and such a site serves as a reaction starting point to further promote dehydration, and thus, a conjugated polyene structure is formed in the main chain of the EVOH resin. In the present resin composition, it is presumed that since titanium in a specific trace amount of the titanium compound is stable in the form of a tetravalent ion, even in a small amount, stabilization is achieved, for example, by coordination to the double bond of the main chain of the EVOH resin to form a chelate, and thus, formation of such a polyene structure is suppressed.

Additional Thermoplastic Resin

The present composition can contain a thermoplastic resin other than the EVOH resin within such a range that the effects of the present disclosure are not impaired (e.g., usually 30 mass% or less, preferably 20 mass% or less, and particularly preferably 10 mass% or less of the present composition, and the lower limit is usually 0 mass%).

As the additional thermoplastic resin, the same additional thermoplastic resin as the (additional thermoplastic resin) described in the first aspect can be used.

Additional Compounding Agent

The present composition may contain a compounding agent (excluding the titanium compound and the alkaline earth metal compound) that is generally compounded in the EVOH resin, within such a range that the effects of the present disclosure are not impaired (for example, usually 30 mass% or less, preferably 20 mass% or less, and more preferably 10 mass% or less of the present resin composition, and the lower limit is usually 0 mass%). As the compounding agent, the same additional compounding agent as the (additional compounding agent) described in the first aspect can be used.

Method for Producing Present Composition

The present composition can be produced by mixing the EVOH resin, the alkaline earth metal compound, and the titanium compound using a known method, for example, a dry blending method, a melt mixing method, a solution mixing method, or an impregnation method. Among these methods, it is preferable to produce the present composition by including a step of melt-mixing a composition raw material containing the EVOH resin and the titanium compound. Furthermore, these production methods can be optionally combined.

Examples of the dry blending method include (i) a method of dry-blending the EVOH resin having a pellet-shape, the alkaline earth metal compound, and the titanium compound by using, for example, a tumbler.

Examples of the melt mixing method include (ii) a method of melt-kneading a dry blend obtained by dry-blending the EVOH resin having a pellet-shape, the alkaline earth metal compound, and the titanium compound, and (iii) a method of adding the alkaline earth metal compound and the titanium compound to the EVOH resin in a molten state and melt-kneading the resultant mixture.

Examples of the solution mixing method include (iv) a method of preparing a solution using a commercially available EVOH resin, blending the alkaline earth metal compound and the titanium compound in the solution, subjecting the blended solution to solidification molding, followed by solid-liquid separation with a known means, and drying the obtained product; and (v) a method of, in the process of producing an EVOH resin, incorporating the alkaline earth metal compound and the titanium compound in an ethylene-vinyl ester copolymer solution or a uniform solution of the EVOH resin (for example, water/alcohol solution) before saponification, subjecting the resultant mixture to solidification molding, followed by solid-liquid separation with a known means, and drying the obtained product.

Examples of the impregnation method include (vi) a method of bringing the EVOH resin having a pellet-shape into contact with an aqueous solution containing the alkaline earth metal compound and the titanium compound, incorporating the alkaline earth metal compound and the titanium compound in the EVOH resin, and then drying the EVOH resin.

As the aqueous solution containing the titanium compound, an aqueous solution of the alkaline earth metal compound and the titanium compound or an aqueous solution in which titanium ions are eluted by immersing the alkaline earth metal compound and the titanium compound in water containing various agents can be used.

In the impregnation method, the contents of the alkaline earth metal compound and the titanium compound (in terms of metal) can be controlled by, for example, the concentrations of the alkaline earth metal compound and the titanium compound in the aqueous solution in which the EVOH resin is immersed, the immersion temperature, and the immersion time.

The immersion time is usually from 0.5 to 48 hours, preferably from 1 to 36 hours, and the immersion temperature is usually from 10 to 40°C, and preferably from 20 to 35°C.

As the drying method in each of the above production methods, various drying methods can be employed, and either drying under a static condition or fluidized drying may be employed. These methods can be performed in combination.

As described above, in the present embodiment, the above different methods can be combined. Particularly, the melt mixing method is preferable, and the method (ii) is particularly preferable, in that a resin composition that exhibits more significant productivity and effects of the present disclosure is yielded. Even when the additional thermoplastic resin and the additional compounding agent as described above are used, the additional thermoplastic resin and the additional compounding agent may be blended by a known method according to the aforementioned production method.

The present composition produced by each of the production methods described above may have any shape, but is preferably a shape of a pellet.

The pellet may be in, for example, a spherical, oval, cylindrical, cubic, or rectangular parallelepiped shape, but is usually in an oval or cylindrical shape. From the viewpoint of convenience in the subsequent use as a molding material, in the case of the oval shape, the minor axis length is usually from 1 to 10 mm, preferably from 2 to 6 mm, and more preferably from 2.5 to 5.5 mm, and the major axis length is usually from 1.5 to 30 mm, preferably from 3 to 20 mm, and more preferably from 3.5 to 10 mm. In the case of the cylindrical shape, the bottom surface has a diameter of usually from 1 to 6 mm and preferably from 2 to 5 mm, and the length is usually from 1 to 6 mm and preferably from 2 to 5 mm.

Also, the shape and the size of the pellet-shaped EVOH resin used in each of the production methods are preferably the same.

The moisture content of the present composition before melt molding is usually from 0.01 to 0.5 mass%, preferably from 0.05 to 0.35 mass%, and particularly preferably from 0.1 to 0.3 mass%.

Here, the term "melt molding" in the phrase "before melt molding" means melting a material and forming the molten material into a certain shape, and examples thereof include melting a resin composition and pelletizing the molten resin composition, and melting a resin composition and forming the molten resin composition into a film.

The moisture content of the present composition is measured and calculated by the following method.

The mass ($W_1$) of the present composition before drying is weighed with an electronic balance, the present composition is dried in a hot air dryer at 150°C for 5 hours and allowed to cool in a desiccator for 30 minutes, and then the mass ($W_2$) after cooling is weighed. The moisture content is calculated from the following Equation:

$$\text{Moisture content (mass\%)} = [(W_1 - W_2)/W_1] \times 100$$

When the present composition is in the form of a pellet, preferably, a known lubricant is adhered to the surface of the pellet from the viewpoint of stabilizing the feedability during melt molding. Examples of the type of the lubricant include higher fatty acids having 12 or more carbon atoms (for example, lauric acid, myristic acid, palmitic acid, stearic acid, behenic acid, and oleic acid), higher fatty acid esters (for example, methyl esters, isopropyl esters, butyl esters, and octyl esters of higher fatty acids), higher fatty acid amides (for example, saturated higher fatty acid amides, such as lauramide, myristamide, palmitamide, stearamide, and behenamide; unsaturated higher fatty acid amides, such as oleamide and erucamide; and bis (higher fatty acid) amides, such as ethylenebis(stearamide), ethylenebis(oleamide), ethylenebis(erucamide), and ethylenebis(lauramide), low-molecular-weight polyolefins (for example, low-molecular-weight polyethylene having a molecular weight of approximately 500 to 10000, or low-molecular-weight polypropylene, or acid-modified products thereof), higher alcohols having 6 or more carbon atoms, ester oligomers, and ethylene fluoride resins. One of these compounds may be used alone or two or more thereof may be used in combination. The content of the lubricant is usually 5 mass% or less and preferably 1 mass% or less of the present composition. The lower limit is usually 0 mass%.

The present composition thus produced is prepared into various forms such as a pellet, a powder form, or a liquid form, and is provided as a molding material for various molded products. In particular, in the present embodiment, when the present composition is provided as a material for melt molding, the effects of the present disclosure tend to be more efficiently achieved, which is preferable.

The present composition also includes a resin composition obtained by mixing a resin other than the EVOH resin used in the present composition.

The substrate film may be, for example, a monolayer film (EVOH layer) molded from the present composition, or a multilayer film having at least one EVOH layer.

Layer Containing Thermoplastic Resin

The substrate film preferably has a layer containing a thermoplastic resin (hereinafter, sometimes referred to as a "thermoplastic resin layer"). When the substrate film has the thermoplastic resin layer, the mechanical strength and the barrier properties against water vapor of the present vapor-deposited film tend to be further enhanced. In addition, properties such as heat sealability and mechanical strength can be imparted depending on the type of the thermoplastic resin constituting the thermoplastic resin layer.

As the thermoplastic resin, the same thermoplastic resin as the thermoplastic resin described in the section "Layer Containing Thermoplastic Resin" in the first aspect can be used.

The content of the thermoplastic resin in the thermoplastic resin layer is not particularly limited, but the thermoplastic resin is preferably the main component (that is, the content of the thermoplastic resin contained in the thermoplastic resin layer is 50 mass% or more). The content of the thermoplastic resin is more preferably 60 mass% or more, still more preferably 70 mass% or more, and particularly preferably 80 mass% or more, 90 mass% or more, 95 mass% or more, or 100 mass%.

For example, the thermoplastic resin layer may contain, in addition to the thermoplastic resin, an additional component within a range that does not inhibit the effects of the present disclosure, and generally within a range of 20 mass% or less. Examples of the component include an anti-blocking agent, a processing aid, a resin other than the thermoplastic resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Layer Containing Adhesive Resin

The substrate film may have a layer containing an adhesive resin (hereinafter, sometimes referred to as an "adhesive resin layer"). When the substrate film has the adhesive resin layer, the appearance characteristics (film surface) of the present vapor-deposited film tend to be further improved.

As the adhesive resin, the same adhesive resin as the adhesive resin described in the section "Layer Containing Adhesive Resin" of the first aspect can be used.

The content of the adhesive resin in the adhesive resin layer is not particularly limited, but the adhesive resin is preferably the main component (that is, the content of the adhesive resin contained in the adhesive resin layer is 50 mass% or more). Especially, the content of the adhesive resin is more preferably 60 mass% or more, still more preferably 70 mass% or more, and particularly preferably 80 mass% or more, 90 mass% or more, 95 mass% or more, or 100 mass%.

The adhesive resin layer may contain a component other than the adhesive resin, within a range that does not inhibit the effects of the present disclosure, and generally within a range of 20 mass% or less. Examples of the component include an anti-blocking agent, a processing aid, a resin other than the adhesive resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Method for Producing Substrate Film

The substrate film can be usually produced by extruding the composition from a die, molding the composition into a film, and stretching the film as necessary.

When the substrate film has the thermoplastic resin layer and the adhesive resin layer, the substrate film can be produced by molding raw material compositions for forming the EVOH layer, the thermoplastic resin layer, and the adhesive resin layer, respectively, into films by known coextrusion in which the compositions are extruded from dies different from each other or a common die and laminated, and then stretching the films as necessary.

As the die, for example, an annular die or a T-die can be used.

Examples of the molding method include methods of melting a material and molding the molten material, such as extrusion molding, blow molding, injection molding, thermoforming, and inflation molding, and a method of molding a formed solution, such as cast molding.

The substrate film is not particularly limited in other layer configurations as long as the substrate film has the EVOH layer, but the EVOH layer is preferably at least one of the surface layers. Since the substrate film has the EVOH layer, the present vapor-deposited film can yield excellent transparency.

The substrate film is preferably a multilayer film, and examples of the layer configuration thereof include, when the EVOH layer is referred to as a "layer (A)", the thermoplastic resin layer is referred to as a "layer (B)", and the adhesive resin layer is referred to as a "layer (C)", the layer (B)/the layer (A), the layer (B)/the layer (A)/the layer (B), the layer (B)/the layer (C)/the layer (A)/the layer (B), the layer (B)/the layer (C)/the layer (A)/the layer (C)/the layer (B), the layer (B)/the layer (A)/the layer (B)/the layer (A)/the layer (B), the layer (B)/the layer (B)/the layer (C)/the layer (A)/the layer (C)/the layer (B)/the layer (B), the layer (A)/the layer (C)/the layer (B), the layer (A)/the layer (B)/the layer (C)/the layer (B), and the layer (A)/the layer (C)/the layer (B)/the layer (B).

In the above examples, the layer (B) and the layer (C) are exemplified as examples of a layer other than the layer (A), but the layer other than the layer (A) is not limited thereto.

Moreover, the substrate film preferably does not include a layer formed from a resin composition containing a polyamide-based resin as a main component (that is, the content of the polyamide-based resin contained in the resin composition is 50 mass% or more).

In the above examples, the symbol "/" means that the layers on both sides of the symbol are directly laminated.

The substrate film thus obtained is preferably stretched as necessary, and more preferably uniaxially stretched.

The stretching ratio in the uniaxially stretched film is preferably 3 or more, more preferably 4 or more, and particularly preferably 5 or more. When the stretching ratio is less than 3, thickness non-uniformity due to stretching tends to occur, and the gas barrier properties tend to decrease.

The upper limit of the stretching ratio is preferably 12 or less, more preferably 10 or less, and particularly preferably 8 or less. When the stretching ratio exceeds 12, the film surface after stretching tends to deteriorate.

Uniaxially stretching the substrate film provides advantages, such as an advantage from the viewpoint of economic efficiency, as well as easy tearing of a multilayer structure (when the multilayer structure is used as a packaging material, the packaging material being easy to open), and improvement in the gas barrier properties.

The stretching direction of the uniaxially stretched film is not particularly limited, and the stretching may be implemented in the longitudinal direction (machine direction (MD)) or the width direction (transverse direction (TD)), but is preferably uniaxial stretching in the longitudinal direction (MD), and is particularly preferably not substantially implemented in a direction different from the stretching direction.

The stretched state (such as unstretched, uniaxially stretched, or biaxially stretched) of the substrate film can be confirmed by using a general method for analyzing the orientation of the resin (for example, wide-angle X-ray scattering (WAXS)).

The method for stretching the uniaxially stretched film is not particularly limited, and examples thereof include a tenter stretching method, a tubular stretching method, and a roll stretching method. Among these, from the viewpoint of production cost, uniaxial stretching by the roll stretching method is preferred. When the substrate film is obtained by the inflation molding, the roll stretching method is preferred.

The stretching temperature at the time of uniaxial stretching is not particularly limited, but is generally from 50 to 130°C.

The total thickness of the substrate film is not particularly limited and may be appropriately set depending on the application. The thickness of the substrate film is preferably 10 $\mu$m or greater, and more preferably 15 $\mu$m or greater. When the thickness of the substrate film is 10 $\mu$m or more, the industrial productivity and the mechanical properties tend to be further improved. In addition, the thickness of the substrate film is preferably 100 $\mu$m or less, and more preferably 50 $\mu$m or less. When the thickness of the substrate film is 100 $\mu$m or less, the industrial productivity and the economic efficiency tend to be further improved.

The thickness of the substrate film as a uniaxially stretched film means the thickness after stretching.

When the substrate film is a multilayer film, the thickness of the EVOH layer is preferably 0.5 $\mu$m or more, more preferably 0.8 $\mu$m or more, and particularly preferably 1 $\mu$m or more. When the thickness of the EVOH layer is 0.5 $\mu$m or more, the gas barrier properties tend to be improved.

On the other hand, the thickness of the EVOH layer is preferably 20 $\mu$m or less, more preferably 10 $\mu$m or less, and particularly preferably 5 $\mu$m or less. When the thickness of the EVOH layer is 20 $\mu$m or less, the appearance characteristics (film surface) tend to be improved.

The thickness of the multilayer film as a uniaxially stretched film means the thickness after stretching. Moreover, when the substrate film includes a plurality of EVOH layers, the total thickness of all the EVOH layers is preferably within the above range.

When the substrate film is a multilayer film, the ratio of the thickness of the EVOH layer to the total thickness of all the layers is preferably 30% or less, and more preferably 20% or less, and may be 10% or less or 5% or less, from the viewpoints of industrial productivity and mechanical properties.

When the substrate film has the thermoplastic resin layer, the thickness thereof is preferably from 7 to 100 $\mu$m, and more preferably from 10 to 50 $\mu$m, from the viewpoints of industrial productivity and mechanical properties.

In the substrate film as a uniaxially stretched film, the thickness of the thermoplastic resin layer means the thickness after stretching. In addition, when the substrate film includes a plurality of thermoplastic resin layers, the total thickness of all the thermoplastic resin layers is preferably within the above range.

When the substrate film has the adhesive resin layer, the thickness thereof is preferably from 0.5 to 20 $\mu$m, and more preferably from 1 to 10 $\mu$m, from the viewpoints of industrial productivity and quality stability.

In the substrate film as a uniaxially stretched film, the thickness of the adhesive resin layer means the thickness after stretching. Moreover, when the substrate film includes a plurality of adhesive resin layers, the total thickness of all the adhesive resin layers is preferably within the above range.

The internal haze value of the substrate film is preferably less than 0.4%, more preferably 0.3% or less, still more preferably 0.2% or less, and particularly preferably 0%. The internal haze value can be measured in accordance with ASTM D1003 using the substrate film with a film thickness of 33 $\mu$m and a HAZE meter.

Metal Vapor-Deposited Layer

The metal vapor-deposited layer laminated on the substrate film is obtained by depositing an elemental metal or an alloy of two or more metals. The metal vapor-deposited layer is preferably laminated on the EVOH layer of the substrate film from the viewpoint of gas barrier properties.

Examples of the metal used in the metal vapor-deposited layer include those classified into group 13 elements (such as aluminum, gallium, and indium), group 14 elements (such as titanium, zirconium, tin, and hafnium), noble metals (such as copper, silver, and gold), group 6 elements (such as chromium, molybdenum, and tungsten), group 8 elements (such as iron, cobalt, and nickel), and alloys thereof. Among these, at least one selected from the group consisting of aluminum, gold, silver, copper, titanium, nickel, chromium, tin, and indium is generally preferable, from the viewpoint of their availability and easy of handling, and especially, a metal made of aluminum is particularly preferable.

The metal used in the metal vapor-deposited layer preferably includes a metal compound such as a metal oxide, a metal carbide, or a metal nitride, and among these metal compounds, the metal oxide is preferable. The content of the metal compound is preferably 50 mass% or more, more preferably 80 mass% or more, and still more preferably 90 mass% or more, and may be 100 mass%, of the metal used in the metal vapor-deposited layer.

The metal vapor-deposited layer can be identified by analyzing a cross section of the laminate by energy dispersive spectroscopy (EDS).

Method for Producing Present Vapor-Deposited Film

The present vapor-deposited film can be produced by laminating the metal vapor-deposited layer on the substrate film.

The method for laminating the metal vapor-deposited layer on the substrate film is not particularly limited, and a known vapor deposition method may be appropriately employed, for example, a physical vapor deposition method (PVD method) such as a vacuum deposition method, a sputtering method, or an ion plating method, or a chemical vapor deposition method (CVD method).

The film thickness of the metal vapor-deposited layer is usually from 1 to 100 nm, preferably from 3 to 50 nm, and more preferably from 5 to 20 nm. When the film thickness of the metal vapor-deposited layer is less than 1 nm, the gas barrier properties tend to be insufficient, and on the other hand, even when the film thickness exceeds 100 nm, no effect of improving the gas barrier properties is obtained, and the bending resistance and the production cost tend to increase.

The present vapor-deposited film thus obtained exhibits excellent surface smoothness on the vapor-deposited surface. The root mean square height (Sq) of the vapor-deposited surface of the present vapor-deposited film is preferably 0.120 $\mu$m or less, more preferably 0.110 $\mu$m or less, and still more preferably 0.100 $\mu$m or less. A smaller root mean square height (Sq) indicates a smoother surface, and thus is preferable. The root mean square height (Sq) can be measured by using a method according to ISO25178, and specifically can be measured by a method described in Examples below.

The oxygen permeability at 20°C and 90% RH of the present vapor-deposited film is preferably 8 cc/m$^2$·day·atm or less, more preferably 7 cc/m$^2$·day·atm or less, and particularly preferably 5 cc/m$^2$·day·atm or less.

The present vapor-deposited film can be suitably used as a molded article and a packaging material such as a packaging film for packaging, for example, general food products, as well as seasonings such as mayonnaise and dressings, fermented food products such as Miso, oil and/or fat food products such as salad oil, snack foods, beverages, cosmetics, and pharmaceuticals, or as a portion of a multilayer structure for forming these molded article and packaging material.

Multilayer Structure

The multilayer structure is obtained by further laminating an additional layer on the present vapor-deposited film. The additional layer to be laminated on the present vapor-deposited film is not particularly limited, and may be a layer formed from a resin composition containing a thermoplastic resin exemplified as the thermoplastic resin described above or an adhesive resin exemplified as the adhesive resin described above.

As a method for producing the multilayer structure, various known production methods such as a dry lamination method, a sandwich lamination method, an extrusion lamination method, a coextrusion lamination method, and a solution coating method can be adopted.

Molded Article

It is possible to obtain a cup-shaped or tray-shaped molded article using the present vapor-deposited film or the multilayer structure. In such a case, a draw molding method is usually employed, and specific examples of the method include a vacuum molding method, a pressure molding method, a vacuum-pressure molding method, and a plug assist vacuum-pressure molding method.

Furthermore, it is also possible to obtain a molded article such as a tubular or bottle-shaped multilayer container (laminate structure) or a food container from a multilayer parison (hollow tubular pre-molded product before blowing) using the multilayer structure. In that case, a blow molding method is usually employed, and specific examples thereof include extrusion blow molding methods (such as a twin-head type, a shuttle type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method).

As necessary, the resulting laminate may be subjected to a process, for example, a heat treatment, a cooling treatment, a rolling treatment, a printing treatment, a dry lamination treatment, a solution or melt coating treatment, a bag-making process, a deep drawing process, a box-making process, a tube-making process, and a splitting process.

Fifth Aspect

The fifth aspect includes the following aspects <V-1> to <V-9>.

<V-1>

A vapor-deposited film including: a substrate film having a layer containing a composition containing an EVOH resin, a boron compound, and a titanium compound; and a metal vapor-deposited layer laminated on the substrate film, wherein a content of the titanium compound in terms of metal is 0.001 ppm or more and less than 3 ppm relative to a mass of the composition.

<V-2>

The vapor-deposited film according to <V-1>, wherein a content of the boron compound in terms of boron is from 1 to 500 ppm relative to the mass of the composition.

<V-3>

The vapor-deposited film according to <V-1> or <V-2>, wherein a mass ratio of the content of the boron compound in terms of boron to the metal content of the titanium compound is from 1 to 200000.

<V-4>

The vapor-deposited film according to any one of <V-1> to <V-3>, wherein the substrate film is a multilayer film further having a layer containing a thermoplastic resin.

<V-5>

The vapor-deposited film according to any one of <V-1> to <V-4>, wherein a metal of the metal vapor-deposited layer is at least one selected from the group consisting of aluminum, gold, silver, copper, titanium, nickel, chromium, tin, and indium.

<V-6>

A multilayer structure including the vapor-deposited film described in any one of <V-1> to <V-5>.

<V-7>

A molded article including the vapor-deposited film described in any one of <V-1> to <V-5>.

<V-8>

A food container including the multilayer structure described in <V-6>.

<V-9>

A method for producing the vapor-deposited film described in any one of <V-1> to <V-5>, the method including laminating an inorganic vapor-deposited layer on the substrate film.

The present disclosure will be described below with reference to embodiments for carrying out the fifth aspect. However, the present disclosure is not limited to the embodiments described below.

Vapor-Deposited Film

A vapor-deposited film according to the fifth aspect of the present disclosure (hereinafter sometimes referred to as "the present vapor-deposited film") includes: a substrate film having a layer containing a composition containing an ethylene-vinyl alcohol copolymer, a boron compound, and a titanium compound; and a metal vapor-deposited layer laminated on the substrate film.

Hereinafter, each constituent will be described.

Substrate Film

The substrate film has a layer containing an EVOH resin (hereinafter referred to as an "EVOH layer").

Hereinafter, each constituent of the substrate film will be described.

EVOH Layer

The EVOH layer is formed from a composition containing the EVOH resin (hereinafter sometimes referred to as "the present composition"). The present composition will be described below.

The present composition contains the EVOH resin as a main component, as well as a boron compound and a specific trace amount of a titanium compound.

That is, in the present composition, the base resin is the EVOH resin, and the content of the EVOH resin in the present composition is usually 70 mass% or more, preferably 80 mass% or more, more preferably 90 mass% or more, and particularly preferably 95 mass% or more.

Hereinafter, the respective components will be described.

EVOH Resin

The EVOH resin used in the present embodiment is usually a resin produced by saponification of an ethylene-vinyl ester copolymer, which is a copolymer of ethylene and a vinyl ester monomer, and the resin is a water-insoluble thermoplastic resin. The same EVOH resin as the (EVOH resin) described in the first aspect can be used.

Boron Compound

Examples of the boron compound include boric acid or a metal salt thereof, for example, sodium borates (such as sodium metaborate, sodium diborate, sodium tetraborate, sodium pentaborate, sodium hexaborate, and sodium octaborate), potassium borates (such as potassium metaborate, potassium tetraborate, potassium pentaborate, potassium hexaborate, and potassium octaborate), lithium borates (such as lithium metaborate, lithium tetraborate, and lithium pentaborate), calcium borates, barium borates (such as barium orthoborate, barium metaborate, barium diborate, and barium tetraborate), magnesium borates (such as magnesium orthoborate, magnesium diborate, magnesium metaborate, trimagnesium tetraborate, and pentamagnesium tetraborate), manganese borates (such as manganese (II) borate, manganese metaborate, and manganese tetraborate), cobalt borate, zinc borates (such as zinc tetraborate and zinc metaborate), cadmium borates (such as cadmium orthoborate and cadmium tetraborate), silver borates (such as silver metaborate and silver tetraborate), copper borates (such as copper(II) borate, copper metaborate, and copper tetraborate), nickel borates (such as nickel orthoborate, nickel diborate, nickel tetraborate, and nickel octaborate), potassium aluminum borate, ammonium borates (such as ammonium metaborate, ammonium tetraborate, ammonium pentaborate, and ammonium octaborate), lead borates (such as lead metaborate and lead hexaborate), and bismuth borate, as well as borate minerals such as borax, kernite, inyoite, kotoite, suanite, and szaibelyite. These may be used alone or in combination of two or more thereof. Among these, borax and boric acid are preferable, and boric acid is particularly preferable.

The boron compound can be used in any form such as a solid form (for example, powder, fine powder, or flakes), a semi-solid form, a liquid form, a paste form, a solution form, or an emulsion form (aqueous dispersion), and above all, is preferably in a powder form. When the boron compound is in the powder form, the particle size of the boron compound is usually from 0.1 to 100 $\mu$m, preferably from 1 to 75 $\mu$m, and particularly preferably from 5 to 50 $\mu$m.

By incorporating an appropriate amount of the boron compound into the present composition, the thermal stability is improved, the generation of streaks, microgels, and the like is suppressed, and the surface becomes smooth.

The content of the boron compound in terms of boron is preferably from 1 to 500 ppm, more preferably from 5 to 400 ppm, still more preferably from 10 to 300 ppm, and particularly preferably from 50 to 200 ppm, relative to the mass of the composition. When the content is too low, the moldability of the composition tends to decrease.

When the content of the boron compound in terms of boron is too high, the surface smoothness tends to decrease due to a decrease in the thermal stability (generation of streaks and microgels), and when the boron compound is not added or the content thereof is too low, the moldability of the composition tends to decrease.

The content of the boron compound in terms of boron can be measured by an atomic absorption spectrophotometer using a test solution obtained by adding pure water to a solution obtained by subjecting a heat-ashed product of the present composition to an acid treatment with hydrochloric acid or the like to achieve a constant volume.

Titanium Compound

As the titanium compound, the same titanium compound as the (titanium compound) described in the first aspect can be used.

The content of the titanium compound in terms of metal is 0.001 ppm or more and less than 3 ppm relative to the mass of the present composition. The content is preferably from 0.01 to 1 ppm, more preferably from 0.03 to 0.5 ppm, and particularly preferably from 0.05 to 0.2 ppm. When the content of the titanium compound is within the above range, the titanium compound fills minute dents at the surface of the EVOH film, and thus the surface smoothness is enhanced. When the content of the titanium compound is too low, the minute dents are not filled, and therefore minute irregularities remain at the surface, and when the content is too high, excess titanium oxide appears on the surface, and thus protrusions are formed and the surface is roughened.

The content of the titanium compound in terms of metal is, that is, the content of the titanium element.

In addition, when the content of the titanium compound is within the above range, the generation of microgels due to thermal degradation during melt molding can be suppressed, and the film surface tends to be enhanced in smoothness. In addition, when the content of the titanium compound is too low, the effects of suppressing the generation of microgels and the surface smoothness tend to decrease, and when the content is too high, the EVOH resin tends to be thermally decomposed, and the surface smoothness tends to decrease due to the generation of microgels.

The content of the titanium compound in terms of metal can be quantified by weighing the present composition in a platinum crucible, sequentially ashing the present composition with a burner and an electric furnace, thermally decomposing the ashed product with nitric acid and hydrofluoric acid, treating the decomposed product with a mixed acid of dilute nitric acid and dilute hydrofluoric acid, setting the resultant mixture to a constant volume to yield a constant volume liquid, and measuring the titanium in the constant volume liquid by ICP mass spectrometry using an ICP mass spectrometer (Agilent 8800, available from Agilent Technologies, Inc.).

The mass ratio of the content of the boron compound in terms of boron to the content of the titanium compound in terms of metal (content of the boron compound in terms of boron /content of the titanium compound in terms of metal) is preferably from 1 to 200000, more preferably from 2 to 15000, still more preferably from 5 to 10000, particularly preferably from 30 to 4000, especially preferably from 50 to 2000, and most preferably from 70 to 900.

When the mass ratio is too high, the thermal stability tends to decrease, and when the mass ratio is too low, the surface smoothness tends to decrease.

Usually, it is considered that, when a titanium compound is contained in a resin composition containing an EVOH resin, the resin composition is thermally degraded by titanium ions, and microgels are generated. Therefore, it is technical common knowledge for those skilled in the art to avoid the use of the titanium compound. However, in the present embodiment, it has been found that, contrary to such technical common knowledge, when a specific trace amount of a titanium compound is used, titanium of the titanium compound is coordinated to a double bond of the main chain of the EVOH resin to form a chelate, and thus the thermal stability is improved, the generation of microgels due to thermal degradation is suppressed, and an EVOH film having excellent surface smoothness can be obtained.

The EVOH resin is colored because of thermal degradation. This is presumed to be due to the fact that the EVOH resin degrades with heat and generates radicals, the hydroxyl groups in the EVOH resin are dehydrated by the radicals to generate a double bond in the main chain of the EVOH resin, and such a site serves as a reaction starting point to further promote dehydration, and thus, a conjugated polyene structure is formed in the main chain of the EVOH resin. In the present resin composition, it is presumed that since titanium in a specific trace amount of the titanium compound is stable in the form of a tetravalent ion, even in a small amount, stabilization is achieved, for example, by coordination to the double bond of the main chain of the EVOH resin to form a chelate, and thus, formation of such a polyene structure is suppressed.

Additional Thermoplastic Resin

The present composition can contain a thermoplastic resin other than the EVOH resin within such a range that the effects of the present disclosure are not impaired (e.g., usually 30 mass% or less, preferably 20 mass% or less, and particularly preferably 10 mass% or less of the present composition, and the lower limit is usually 0 mass%).

As the additional thermoplastic resin, the same additional thermoplastic resin as the (additional thermoplastic resin) described in the first aspect can be used.

Additional Compounding Agent

The present composition may contain a compounding agent (excluding the titanium compound and boron) that is generally compounded in the EVOH resin, within such a range that the effects of the present disclosure are not impaired (for example, usually 30 mass% or less, preferably 20 mass% or less, and more preferably 10 mass% or less of the present resin composition, and the lower limit is usually 0 mass%). As the compounding agent, the same additional compounding agent as the (additional compounding agent) described in the first aspect can be used.

Method for Producing Present Composition

The present composition can be produced by mixing the EVOH resin, the boron compound, and the titanium compound using a known method, for example, a dry blending method, a melt mixing method, a solution mixing method, or an impregnation method. Among these methods, it is preferable to produce the present composition by including a step of melt-mixing a composition raw material containing the EVOH resin and the titanium compound. Furthermore, these production methods can be optionally combined.

Examples of the dry blending method include (i) a method of dry-blending the EVOH resin having a pellet-shape, the boron compound, and the titanium compound by using, for example, a tumbler.

Examples of the melt mixing method include (ii) a method of melt-kneading a dry blend obtained by dry-blending the EVOH resin having a pellet-shape, the boron compound, and the titanium compound, and (iii) a method of adding the boron compound and the titanium compound to the EVOH resin in a molten state and melt-kneading the resultant mixture.

Examples of the solution mixing method include (iv) a method of preparing a solution using a commercially available EVOH resin, blending the boron compound and the titanium compound in the solution, subjecting the blended solution to solidification molding, followed by solid-liquid separation with a known means, and drying the obtained product; and (v) a method of, in the process of producing an EVOH resin, incorporating the boron compound and the titanium compound in an ethylene-vinyl ester copolymer solution or a uniform solution of the EVOH resin (for example, water/-alcohol solution) before saponification, subjecting the resultant mixture to solidification molding, followed by solid-liquid separation with a known means, and drying the obtained product.

Examples of the impregnation method include (vi) a method of bringing the EVOH resin having a pellet-shape into contact with an aqueous solution containing the boron compound and the titanium compound, incorporating the boron compound and the titanium compound in the EVOH resin, and then drying the EVOH resin.

As the aqueous solution containing the titanium compound, an aqueous solution of the boron compound and the titanium compound or an aqueous solution in which titanium ions are eluted by immersing the boron compound and the titanium compound in water containing various agents can be used.

In the impregnation method, the contents of the boron compound (in terms of boron) and the titanium compound (in terms of metal) can be controlled by, for example, the concentrations of the boron compound and the titanium compound in the aqueous solution in which the EVOH resin is immersed, the immersion temperature, and the immersion time.

The immersion time is usually from 0.5 to 48 hours, preferably from 1 to 36 hours, and the immersion temperature is usually from 10 to 40°C, and preferably from 20 to 35°C.

As the drying method in each of the above production methods, various drying methods can be employed, and either drying under a static condition or fluidized drying may be employed. These methods can be performed in combination.

As described above, in the present embodiment, the above different methods can be combined. Particularly, the melt mixing method is preferable, and the method (ii) is particularly preferable, in that a resin composition that exhibits more significant productivity and effects of the present disclosure is yielded. Even when the additional thermoplastic resin and the additional compounding agent as described above are used, the additional thermoplastic resin and the additional compounding agent may be blended by a known method according to the aforementioned production method.

The present composition produced by each of the production methods described above may have any shape, but is preferably a shape of a pellet.

The pellet may be in, for example, a spherical, oval, cylindrical, cubic, or rectangular parallelepiped shape, but is usually in an oval or cylindrical shape. From the viewpoint of convenience in the subsequent use as a molding material, in the case of the oval shape, the minor axis length is usually from 1 to 10 mm, preferably from 2 to 6 mm, and more preferably from 2.5 to 5.5 mm, and the major axis length is usually from 1.5 to 30 mm, preferably from 3 to 20 mm, and more preferably from 3.5 to 10 mm. In the case of the cylindrical shape, the bottom surface has a diameter of usually from 1 to 6 mm and preferably from 2 to 5 mm, and the length is usually from 1 to 6 mm and preferably from 2 to 5 mm.

Also, the shape and the size of the pellet-shaped EVOH resin used in each of the production methods are preferably the same.

The moisture content of the present composition before melt molding is usually from 0.01 to 0.5 mass%, preferably from 0.05 to 0.35 mass%, and particularly preferably from 0.1 to 0.3 mass%.

Here, the term "melt molding" in the phrase "before melt molding" means melting a material and forming the molten material into a certain shape, and examples thereof include melting a resin composition and pelletizing the molten resin composition, and melting a resin composition and forming the molten resin composition into a film.

The moisture content of the present composition is measured and calculated by the following method.

The mass ($W_1$) of the present composition before drying is weighed with an electronic balance, the present composition is dried in a hot air dryer at 150°C for 5 hours and allowed to cool in a desiccator for 30 minutes, and then the mass ($W_2$) after cooling is weighed. The moisture content is calculated from the following Equation:

$$\text{Moisture content (mass\%)} = [(W_1 - W_2)/W_1] \times 100$$

When the present composition is in the form of a pellet, preferably, a known lubricant is adhered to the surface of the pellet from the viewpoint of stabilizing the feedability during melt molding. Examples of the type of the lubricant include higher fatty acids having 12 or more carbon atoms (for example, lauric acid, myristic acid, palmitic acid, stearic acid, behenic acid, and oleic acid), higher fatty acid esters (for example, methyl esters, isopropyl esters, butyl esters, and octyl esters of higher fatty acids), higher fatty acid amides (for example, saturated higher fatty acid amides, such as lauramide, myristamide, palmitamide, stearamide, and behenamide; unsaturated higher fatty acid amides, such as oleamide and erucamide; and bis (higher fatty acid) amides, such as ethylenebis(stearamide), ethylenebis(oleamide), ethylenebis(erucamide), and ethylenebis(lauramide), low-molecular-weight polyolefins (for example, low-molecular-weight polyethylene having a molecular weight of approximately 500 to 10000, or low-molecular-weight polypropylene, or acid-modified products thereof), higher alcohols having 6 or more carbon atoms, ester oligomers, and ethylene fluoride resins. One of these compounds may be used alone or two or more thereof may be used in combination. The content of the lubricant is usually 5 mass% or less and preferably 1 mass% or less of the present composition. The lower limit is usually 0 mass%.

The present composition thus produced is prepared into various forms such as a pellet, a powder form, or a liquid form, and is provided as a molding material for various molded products. In particular, in the present embodiment, when the present composition is provided as a material for melt molding, the effects of the present disclosure tend to be more efficiently achieved, which is preferable.

The present composition also includes a resin composition obtained by mixing a resin other than the EVOH resin used in the present composition.

The substrate film may be, for example, a monolayer film (EVOH layer) molded from the present composition, or a multilayer film having at least one EVOH layer.

Layer Containing Thermoplastic Resin

The substrate film preferably has a layer containing a thermoplastic resin (hereinafter, sometimes referred to as a "thermoplastic resin layer"). When the substrate film has the thermoplastic resin layer, the mechanical strength and the barrier properties against water vapor of the present vapor-deposited film tend to be further enhanced. In addition, properties such as heat sealability and mechanical strength can be imparted depending on the type of the thermoplastic resin constituting the thermoplastic resin layer.

As the thermoplastic resin, the same thermoplastic resin as the thermoplastic resin described in the section "Layer Containing Thermoplastic Resin" in the first aspect can be used.

The content of the thermoplastic resin in the thermoplastic resin layer is not particularly limited, but the thermoplastic resin is preferably the main component (that is, the content of the thermoplastic resin contained in the thermoplastic resin layer is 50 mass% or more). The content of the thermoplastic resin is more preferably 60 mass% or more, still more preferably 70 mass% or more, and particularly preferably 80 mass% or more, 90 mass% or more, 95 mass% or more, or 100 mass%.

For example, the thermoplastic resin layer may contain, in addition to the thermoplastic resin, an additional component within a range that does not inhibit the effects of the present disclosure, and generally within a range of 20 mass% or less. Examples of the component include an anti-blocking agent, a processing aid, a resin other than the thermoplastic resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Layer Containing Adhesive Resin

The substrate film may have a layer containing an adhesive resin (hereinafter, sometimes referred to as an "adhesive resin layer"). When the substrate film has the adhesive resin layer, the appearance characteristics (film surface) of the present vapor-deposited film tend to be further improved.

As the adhesive resin, the same adhesive resin as the adhesive resin described in the section "Layer Containing Adhesive Resin" of the first aspect can be used.

The content of the adhesive resin in the adhesive resin layer is not particularly limited, but the adhesive resin is preferably the main component (that is, the content of the adhesive resin contained in the adhesive resin layer is 50 mass% or more). Especially, the content of the adhesive resin is more preferably 60 mass% or more, still more preferably 70 mass% or more, and particularly preferably 80 mass% or more, 90 mass% or more, 95 mass% or more, or 100 mass%.

The adhesive resin layer may contain a component other than the adhesive resin, within a range that does not inhibit the effects of the present disclosure, and generally within a range of 20 mass% or less. Examples of the component include an anti-blocking agent, a processing aid, a resin other than the adhesive resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Method for Producing Substrate Film

The substrate film can be usually produced by extruding the composition from a die, molding the composition into a film, and stretching the film as necessary.

When the substrate film has the thermoplastic resin layer and the adhesive resin layer, the substrate film can be produced by molding raw material compositions for forming the EVOH layer, the thermoplastic resin layer, and the adhesive resin layer, respectively, into films by known coextrusion in which the compositions are extruded from dies different from each other or a common die and laminated, and then stretching the films as necessary.

As the die, for example, an annular die or a T-die can be used.

Examples of the molding method include methods of melting a material and molding the molten material, such as extrusion molding, blow molding, injection molding, thermoforming, and inflation molding, and a method of molding a formed solution, such as cast molding.

The substrate film is not particularly limited in other layer configurations as long as the substrate film has the EVOH layer, but the EVOH layer is preferably at least one of the surface layers. Since the substrate film has the EVOH layer, the present vapor-deposited film can yield excellent transparency.

The substrate film is preferably a multilayer film, and examples of the layer configuration thereof include, when the EVOH layer is referred to as a "layer (A)", the thermoplastic resin layer is referred to as a "layer (B)", and the adhesive resin layer is referred to as a "layer (C)", the layer (B)/the layer (A), the layer (B)/the layer (A)/the layer (B), the layer (B)/the layer (C)/the layer (A)/the layer (B), the layer (B)/the layer (C)/the layer (A)/the layer (C)/the layer (B), the layer (B)/the layer (A)/the layer (B)/the layer (A)/the layer (B), the layer (B)/the layer (B)/the layer (C)/the layer (A)/the layer (C)/the layer (B)/the layer (B), the layer (A)/the layer (C)/the layer (B), the layer (A)/the layer (B)/the layer (C)/the layer (B), and the layer (A)/the layer (C)/the layer (B)/the layer (B).

In the above examples, the layer (B) and the layer (C) are exemplified as examples of a layer other than the layer (A), but the layer other than the layer (A) is not limited thereto.

Moreover, the substrate film preferably does not include a layer formed from a resin composition containing a polyamide-based resin as a main component (that is, the content of the polyamide-based resin contained in the resin composition is 50 mass% or more).

In the above examples, the symbol "/" means that the layers on both sides of the symbol are directly laminated.

The substrate film thus obtained is preferably stretched as necessary, and more preferably uniaxially stretched.

The stretching ratio in the uniaxially stretched film is preferably 3 or more, more preferably 4 or more, and particularly preferably 5 or more. When the stretching ratio is less than 3, thickness non-uniformity due to stretching tends to occur, and the gas barrier properties tend to decrease.

The upper limit of the stretching ratio is preferably 12 or less, more preferably 10 or less, and particularly preferably 8 or less. When the stretching ratio exceeds 12, the film surface after stretching tends to deteriorate.

Uniaxially stretching the substrate film provides advantages, such as an advantage from the viewpoint of economic efficiency, as well as easy tearing of a multilayer structure (when the multilayer structure is used as a packaging material, the packaging material being easy to open), and improvement in the gas barrier properties.

The stretching direction of the uniaxially stretched film is not particularly limited, and the stretching may be implemented in the longitudinal direction (machine direction (MD)) or the width direction (transverse direction (TD)), but is preferably uniaxial stretching in the longitudinal direction (MD), and is particularly preferably not substantially implemented in a direction different from the stretching direction.

The stretched state (such as unstretched, uniaxially stretched, or biaxially stretched) of the substrate film can be confirmed by using a general method for analyzing the orientation of the resin (for example, wide-angle X-ray scattering (WAXS)).

The method for stretching the uniaxially stretched film is not particularly limited, and examples thereof include a tenter stretching method, a tubular stretching method, and a roll stretching method. Among these, from the viewpoint of production cost, uniaxial stretching by the roll stretching method is preferred. When the substrate film is obtained by the inflation molding, the roll stretching method is preferred.

The stretching temperature at the time of uniaxial stretching is not particularly limited, but is generally from 50 to 130°C.

The total thickness of the substrate film is not particularly limited and may be appropriately set depending on the application. The thickness of the substrate film is preferably 10 $\mu$m or greater, and more preferably 15 $\mu$m or greater. When the thickness of the substrate film is 10 $\mu$m or more, the industrial productivity and the mechanical properties tend to be further improved. In addition, the thickness of the substrate film is preferably 100 $\mu$m or less, and more preferably 50 $\mu$m or less. When the thickness of the substrate film is 100 $\mu$m or less, the industrial productivity and the economic efficiency tend to be further improved.

The thickness of the substrate film as a uniaxially stretched film means the thickness after stretching.

When the substrate film is a multilayer film, the thickness of the EVOH layer is preferably 0.5 $\mu$m or more, more preferably 0.8 $\mu$m or more, and particularly preferably 1 $\mu$m or more. When the thickness of the EVOH layer is 0.5 $\mu$m or more, the gas barrier properties tend to be improved.

On the other hand, the thickness of the EVOH layer is preferably 20 $\mu$m or less, more preferably 10 $\mu$m or less, and particularly preferably 5 $\mu$m or less. When the thickness of the EVOH layer is 20 $\mu$m or less, the appearance characteristics (film surface) tend to be improved.

The thickness of the multilayer film as a uniaxially stretched film means the thickness after stretching. Moreover, when the substrate film includes a plurality of EVOH layers, the total thickness of all the EVOH layers is preferably within the above range.

When the substrate film is a multilayer film, the ratio of the thickness of the EVOH layer to the total thickness of all the layers is preferably 30% or less, and more preferably 20% or less, and may be 10% or less or 5% or less, from the viewpoints of industrial productivity and mechanical properties.

When the substrate film has the thermoplastic resin layer, the thickness thereof is preferably from 7 to 100 $\mu$m, and more preferably from 10 to 50 $\mu$m, from the viewpoints of industrial productivity and mechanical properties.

In the substrate film as a uniaxially stretched film, the thickness of the thermoplastic resin layer means the thickness after stretching. In addition, when the substrate film includes a plurality of thermoplastic resin layers, the total thickness of all the thermoplastic resin layers is preferably within the above range.

When the substrate film has the adhesive resin layer, the thickness thereof is preferably from 0.5 to 20 $\mu$m, and more preferably from 1 to 10 $\mu$m, from the viewpoints of industrial productivity and quality stability.

In the substrate film as a uniaxially stretched film, the thickness of the adhesive resin layer means the thickness after stretching. Moreover, when the substrate film includes a plurality of adhesive resin layers, the total thickness of all the adhesive resin layers is preferably within the above range.

The internal haze value of the substrate film is preferably less than 0.4%, more preferably 0.3% or less, still more preferably 0.2% or less, and particularly preferably 0%. The internal haze value can be measured in accordance with ASTM D1003 using the substrate film with a film thickness of 33 $\mu$m and a HAZE meter.

Metal Vapor-Deposited Layer

The metal vapor-deposited layer laminated on the substrate film is obtained by depositing an elemental metal or an alloy of two or more metals. The metal vapor-deposited layer is preferably laminated on the EVOH layer of the substrate film from the viewpoint of gas barrier properties.

Examples of the metal used in the metal vapor-deposited layer include those classified into group 13 elements (such as aluminum, gallium, and indium), group 14 elements (such as titanium, zirconium, tin, and hafnium), noble metals (such as copper, silver, and gold), group 6 elements (such as chromium, molybdenum, and tungsten), group 8 elements (such as iron, cobalt, and nickel), and alloys thereof. Among these, at least one selected from the group consisting of aluminum, gold, silver, copper, titanium, nickel, chromium, tin, and indium is generally preferable, from the viewpoint of their availability and easy of handling, and especially, a metal made of aluminum is particularly preferable.

The metal used in the metal vapor-deposited layer preferably includes a metal compound such as a metal oxide, a metal carbide, or a metal nitride, and among these metal compounds, the metal oxide is preferable. The content of the metal compound is preferably 50 mass% or more, more preferably 80 mass% or more, and still more preferably 90 mass% or more, and may be 100 mass%, of the metal used in the metal vapor-deposited layer.

The metal vapor-deposited layer can be identified by analyzing a cross section of the laminate by energy dispersive spectroscopy (EDS).

Method for Producing Present Vapor-Deposited Film

The present vapor-deposited film can be produced by laminating the metal vapor-deposited layer on the substrate film.

The method for laminating the metal vapor-deposited layer on the substrate film is not particularly limited, and a known vapor deposition method may be appropriately employed, for example, a physical vapor deposition method (PVD method) such as a vacuum deposition method, a sputtering method, or an ion plating method, or a chemical vapor deposition method (CVD method).

The film thickness of the metal vapor-deposited layer is usually from 1 to 100 nm, preferably from 3 to 50 nm, and more preferably from 5 to 20 nm. When the film thickness of the metal vapor-deposited layer is less than 1 nm, the gas barrier properties tend to be insufficient, and on the other hand, even when the film thickness exceeds 100 nm, no effect of improving the gas barrier properties is obtained, and the bending resistance and the production cost tend to increase.

The present vapor-deposited film thus obtained exhibits excellent surface smoothness on the vapor-deposited surface. The root mean square height (Sq) of the vapor-deposited surface of the present vapor-deposited film is preferably 0.85 $\mu$m or less, more preferably 0.80 $\mu$m or less, and still more preferably 0.75 $\mu$m or less. A smaller root mean square height (Sq) indicates a smoother surface, and thus is preferable. The root mean square height (Sq) can be measured by using a method according to ISO25178, and specifically can be measured by a method described in Examples below.

The maximum height (Sz) of the vapor-deposited surface of the present vapor-deposited film is preferably 1.1 $\mu$m or less, more preferably 1.0 $\mu$m or less, and still more preferably 0.9 $\mu$m or less. A smaller maximum height (Sz) indicates a smoother surface, and thus is preferable. The maximum height (Sz) can be measured by a method described in Examples described below.

In the present specification, the maximum height (Sz) means a distance from the highest point to the lowest point on the surface of the vapor-deposited film.

The oxygen permeability at 20°C and 90% RH of the present vapor-deposited film is preferably 8 cc/m$^2$·day·atm or less, more preferably 7 cc/m$^2$·day·atm or less, and particularly preferably 5 cc/m$^2$·day·atm or less.

The present vapor-deposited film can be suitably used as a molded article and a packaging material such as a packaging film for packaging, for example, general food products, as well as seasonings such as mayonnaise and dressings, fermented food products such as Miso, oil and/or fat food products such as salad oil, snack foods, beverages, cosmetics, and pharmaceuticals, or as a portion of a multilayer structure for forming these molded article and packaging material.

Multilayer Structure

The multilayer structure is obtained by further laminating an additional layer on the present vapor-deposited film. The additional layer to be laminated on the present vapor-deposited film is not particularly limited, and may be a layer formed from a resin composition containing a thermoplastic resin exemplified as the thermoplastic resin described above or an adhesive resin exemplified as the adhesive resin described above.

As a method for producing the multilayer structure, various known production methods such as a dry lamination method, a sandwich lamination method, an extrusion lamination method, a coextrusion lamination method, and a solution coating method can be adopted.

Molded Article

It is possible to obtain a cup-shaped or tray-shaped molded article using the present vapor-deposited film or the multilayer structure. In such a case, a draw molding method is usually employed, and specific examples of the method include a vacuum molding method, a pressure molding method, a vacuum-pressure molding method, and a plug assist vacuum-pressure molding method.

Furthermore, it is also possible to obtain a molded article such as a tubular or bottle-shaped multilayer container (laminate structure) or a food container from a multilayer parison (hollow tubular pre-molded product before blowing) using the multilayer structure. In that case, a blow molding method is usually employed, and specific examples thereof include extrusion blow molding methods (such as a twin-head type, a shuttle type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method).

As necessary, the resulting laminate may be subjected to a process, for example, a heat treatment, a cooling treatment, a rolling treatment, a printing treatment, a dry lamination treatment, a solution or melt coating treatment, a bag-making process, a deep drawing process, a box-making process, a tube-making process, and a splitting process.

Sixth Aspect

The sixth aspect includes the following aspects <VI-1> to <VI-8>.

<VI-1>

A vapor-deposited film including: a substrate film containing an ethylene-vinyl alcohol copolymer composition containing an EVOH resin and a titanium compound; and a metal vapor-deposited layer laminated on the substrate film, wherein a moisture content of the composition before melt molding is 1 mass% or less, and a content of the titanium compound in terms of metal is 0.001 ppm or more and less than 3 ppm relative to a mass of the composition.

<VI-2>

The vapor-deposited film according to <VI-1>, wherein the moisture content of the composition before melt molding is 0.12 mass% or more.

<VI-3>

The vapor-deposited film according to < VI-1 > or <VI-2>, wherein the substrate film is a multilayer film further having a layer containing a thermoplastic resin.

<VI-4>

The vapor-deposited film according to any one of <VI-1> to <VI-3>, wherein a metal of the metal vapor-deposited layer is at least one selected from the group consisting of aluminum, gold, silver, copper, titanium, nickel, chromium, tin, and indium.

<VI-5>

A multilayer structure including the vapor-deposited film described in any one of <VI-1> to <VI-4>.

<VI-6>

A molded article including the vapor-deposited film described in any one of <VI-1> to <VI-4>.

<VI-7>

A food container including the multilayer structure described in <VI-5>.

<VI-8>

A method for producing the vapor-deposited film described in any one of <VI-1> to <VI-4>, the method including laminating an inorganic vapor-deposited layer on the substrate film.

The present disclosure will be described below with reference to embodiments for carrying out the sixth aspect. However, the present disclosure is not limited to the embodiments described below.

Vapor-Deposited Film

A vapor-deposited film according to the sixth aspect of the present disclosure (hereinafter sometimes referred to as "the present vapor-deposited film") is a vapor-deposited film including: a substrate film having a layer containing a composition containing an ethylene-vinyl alcohol copolymer and a titanium compound; and a metal vapor-deposited layer laminated on the substrate film, wherein a moisture content of the composition before melt molding is a specific amount or less.

Hereinafter, each constituent will be described.

Substrate Film

The substrate film has a layer containing an EVOH resin (hereinafter referred to as an "EVOH layer").

Hereinafter, each constituent of the substrate film will be described.

EVOH Layer

The EVOH layer is formed from a composition containing the EVOH resin (hereinafter sometimes referred to as "the present composition"). The present composition will be described below.

The present composition contains the EVOH resin as a main component, and a specific trace amount of a titanium compound.

That is, in the present composition, the base resin is the EVOH resin, and the content of the EVOH resin in the present composition is usually 70 mass% or more, preferably 80 mass% or more, more preferably 90 mass% or more, and particularly preferably 95 mass% or more.

Hereinafter, the respective components will be described.

EVOH Resin

The EVOH resin used in the present embodiment is usually a resin produced by saponification of an ethylene-vinyl ester copolymer, which is a copolymer of ethylene and a vinyl ester monomer, and the resin is a water-insoluble thermoplastic resin. The same EVOH resin as the (EVOH resin) described in the first aspect can be used.

Titanium Compound

Examples of the titanium compound include an inorganic titanium compound and an organic titanium compound. These titanium compounds may be used alone or in combination of two or more types. Among these, the inorganic titanium compound is preferable.

As the inorganic titanium compound, the same titanium compound as the (titanium compound) described in the first aspect can be used.

The content of the titanium compound in terms of metal is 0.001 ppm or more and less than 3 ppm relative to the mass of the present composition. The content is preferably from 0.01 to 1 ppm, more preferably from 0.03 to 0.5 ppm, and particularly preferably from 0.05 to 0.2 ppm. When the content of the titanium compound is within the above range, the titanium compound fills minute dents at the surface of the EVOH film, and thus the surface smoothness is enhanced. When the content of the titanium compound is too low, the minute dents are not filled, and therefore minute irregularities remain at the surface, and when the content is too high, excess titanium oxide appears on the surface, and thus protrusions are formed and the surface is roughened.

The content of the titanium compound in terms of metal is, that is, the content of the titanium element.

In addition, when the content of the titanium compound is within the above range, the generation of microgels due to thermal degradation during melt molding can be suppressed, and the film surface tends to be enhanced in smoothness. In addition, when the content of the titanium compound is too low, the effects of suppressing the generation of microgels and the surface smoothness tend to decrease, and when the content is too high, the EVOH resin tends to be thermally decomposed, and the surface smoothness tends to decrease due to the generation of microgels.

The content of the titanium compound in terms of metal can be quantified by weighing the present composition in a platinum crucible, sequentially ashing the present composition with a burner and an electric furnace, thermally decomposing the ashed product with nitric acid and hydrofluoric acid, treating the decomposed product with a mixed acid of dilute nitric acid and dilute hydrofluoric acid, setting the resultant mixture to a constant volume to yield a constant volume liquid, and measuring the titanium in the constant volume liquid by ICP mass spectrometry using an ICP mass spectrometer (Agilent 8800, available from Agilent Technologies, Inc.).

Usually, it is considered that, when a titanium compound is contained in a resin composition containing an EVOH resin, the resin composition is thermally degraded by titanium ions, and microgels are generated. Therefore, it is technical common knowledge for those skilled in the art to avoid the use of the titanium compound. However, in the present embodiment, it has been found that, contrary to such technical common knowledge, when a specific trace amount of a titanium compound is used, titanium of the titanium compound is coordinated to a double bond of the main chain of the EVOH resin to form a chelate, and thus the thermal stability is improved, the generation of microgels due to thermal degradation is suppressed, and an EVOH film having excellent surface smoothness can be obtained.

The EVOH resin is colored because of thermal degradation. This is presumed to be due to the fact that the EVOH resin degrades with heat and generates radicals, the hydroxyl groups in the EVOH resin are dehydrated by the radicals to generate a double bond in the main chain of the EVOH resin, and such a site serves as a reaction starting point to further promote dehydration, and thus, a conjugated polyene structure is formed in the main chain of the EVOH resin. In the present resin composition, it is presumed that since titanium in a specific trace amount of the titanium compound is stable in the form of a tetravalent ion, even in a small amount, stabilization is achieved, for example, by coordination to the double bond of the main chain of the EVOH resin to form a chelate, and thus, formation of such a polyene structure is suppressed.

Additional Thermoplastic Resin

The present composition can contain a thermoplastic resin other than the EVOH resin within such a range that the effects of the present disclosure are not impaired (e.g., usually 30 mass% or less, preferably 20 mass% or less, and particularly preferably 10 mass% or less of the present composition, and the lower limit is usually 0 mass%).

As the additional thermoplastic resin, the same additional thermoplastic resin as the (additional thermoplastic resin) described in the first aspect can be used.

Additional Compounding Agent

The present composition may contain a compounding agent (excluding the titanium compound) that is generally compounded in the EVOH resin, within such a range that the effects of the present disclosure are not impaired (for example, usually 30 mass% or less, preferably 20 mass% or less, and more preferably 10 mass% or less of the present resin composition, and the lower limit is usually 0 mass%). As the compounding agent, the same additional compounding agent as the (additional compounding agent) described in the first aspect can be used.

Method for Producing Present Composition

The present composition can be produced by mixing the EVOH resin and the titanium compound using a known method, for example, a dry blending method, a melt mixing method, a solution mixing method, or an impregnation method. Among these methods, it is preferable to produce the present composition by including a step of melt-mixing a composition raw material containing the EVOH resin and the titanium compound. Furthermore, these production methods can be optionally combined.

Examples of the dry blending method include (i) a method of dry-blending the EVOH resin having a pellet-shape and the titanium compound by using, for example, a tumbler.

Examples of the melt mixing method include (ii) a method of melt-kneading a dry blend obtained by dry-blending the EVOH resin having a pellet-shape and the titanium compound, and (iii) a method of adding the titanium compound to the EVOH resin in a molten state and melt-kneading the resultant mixture.

Examples of the solution mixing method include (iv) a method of preparing a solution using a commercially available EVOH resin, blending the titanium compound in the solution, subjecting the blended solution to solidification molding, followed by solid-liquid separation with a known means, and drying the obtained product; and (v) a method of, in the process of producing an EVOH resin, incorporating the titanium compound in an ethylenevinyl ester copolymer solution or a uniform solution of the EVOH resin (for example, water/alcohol solution) before saponification, subjecting the resultant mixture to solidification molding, followed by solid-liquid separation with a known means, and drying the obtained product.

Examples of the impregnation method include (vi) a method of bringing the EVOH resin having a pellet-shape into contact with an aqueous solution containing the titanium compound, incorporating the titanium compound in the EVOH resin, and then drying the EVOH resin.

As the aqueous solution containing the titanium compound, an aqueous solution of the titanium compound or an aqueous solution in which titanium ions are eluted by immersing the titanium compound in water containing various agents can be used.

In the impregnation method, the content of the titanium compound (in terms of metal) can be controlled by, for example, the concentration of the titanium compound in the aqueous solution in which the EVOH resin is immersed, the immersion temperature, and the immersion time.

The immersion time is usually from 0.5 to 48 hours, preferably from 1 to 36 hours, and the immersion temperature is usually from 10 to 40°C, and preferably from 20 to 35°C.

As the drying method in each of the above production methods, various drying methods can be employed, and either drying under a static condition or fluidized drying may be employed. These methods can be performed in combination.

As described above, in the present embodiment, the above different methods can be combined. Particularly, the melt mixing method is preferable, and the method (ii) is particularly preferable, in that a resin composition that exhibits more significant productivity and effects of the present disclosure is yielded. Even when the additional thermoplastic resin and the additional compounding agent as described above are used, the additional thermoplastic resin and the additional compounding agent may be blended by a known method according to the aforementioned production method.

The present composition produced by each of the production methods described above may have any shape, but is preferably a shape of a pellet.

The pellet may be in, for example, a spherical, oval, cylindrical, cubic, or rectangular parallelepiped shape, but is usually in an oval or cylindrical shape. From the viewpoint of convenience in the subsequent use as a molding material, in the case of the oval shape, the minor axis length is usually from 1 to 10 mm, preferably from 2 to 6 mm, and more preferably from 2.5 to 5.5 mm, and the major axis length is usually from 1.5 to 30 mm, preferably from 3 to 20 mm, and more preferably from 3.5 to 10 mm. In the case of the cylindrical shape, the bottom surface has a diameter of usually from 1 to 6 mm and preferably from 2 to 5 mm, and the length is usually from 1 to 6 mm and preferably from 2 to 5 mm.

Also, the shape and the size of the pellet-shaped EVOH resin used in each of the production methods are preferably the same.

The moisture content of the present composition before melt molding is 1 mass% or less, preferably 0.8 mass% or less, more preferably 0.7 mass% or less, still more preferably 0.5 mass% or less, particularly preferably 0.4 mass% or less, and especially preferably 0.3 mass% or less. On the other hand, the moisture content is preferably 0.01 mass% or more, more preferably 0.05 mass% or more, still more preferably 0.1 mass% or more, particularly preferably 0.12 mass% or more, and especially preferably 0.15 mass% or more. That is, the moisture content is preferably from 0.01 to 0.8 mass%, more preferably from 0.05 to 0.7 mass%, still more preferably from 0.1 to 0.5 mass%, particularly preferably from 0.12 to 0.4 mass%, and especially preferably from 0.15 to 0.3 mass%. The present composition contains a specific amount of the titanium compound and has a moisture content in a specific range, and thus, the surface smoothness is improved. When the moisture content is too high, the thermal stability of the composition at high temperatures decreases due to the thermal conductivity of the water molecules themselves. When the moisture content is too low, the long-run workability of the composition tends to decrease.

Here, the term "melt molding" in the phrase "before melt molding" means melting a material and forming the molten material into a certain shape, and examples thereof include melting a resin composition and pelletizing the molten resin composition, and melting a resin composition and forming the molten resin composition into a film.

The moisture content of the present composition is measured and calculated by the following method.

The mass ($W_1$) of the present composition before drying is weighed with an electronic balance, the present composition is dried in a hot air dryer at 150°C for 5 hours and allowed to cool in a desiccator for 30 minutes, and then the mass ($W_2$) after cooling is weighed. The moisture content is calculated from the following Equation:

$$\text{Moisture content (mass\%)} = [(W_1 - W_2)/W_1] \times 100$$

Examples of the method for adjusting the moisture content of the present composition include (1) a method of increasing the drying temperature, (2) a method of increasing the drying time, (3) a method of adjusting the humidity of drying gas to be low, and (4) a method of spraying water, in the above-described method for producing a composition. In the present disclosure, the moisture content of the resin composition can be controlled to fall within a specific range by carrying out these methods alone or in combination. Among these methods, (4) the method of spraying water is preferable.

When the present composition is in the form of a pellet, preferably, a known lubricant is adhered to the surface of the pellet from the viewpoint of stabilizing the feedability during melt molding. Examples of the type of the lubricant include higher fatty acids having 12 or more carbon atoms (for example, lauric acid, myristic acid, palmitic acid, stearic acid, behenic acid, and oleic acid), higher fatty acid esters (for example, methyl esters, isopropyl esters, butyl esters, and octyl esters of higher fatty acids), higher fatty acid amides (for example, saturated higher fatty acid amides, such as lauramide, myristamide, palmitamide, stearamide, and behenamide; unsaturated higher fatty acid amides, such as oleamide and erucamide; and bis (higher fatty acid) amides, such as ethylenebis(stearamide), ethylenebis(oleamide), ethylenebis(erucamide), and ethylenebis(lauramide), low-molecular-weight polyolefins (for example, low-molecular-weight polyethylene having a molecular weight of approximately 500 to 10000, or low-molecular-weight polypropylene, or acid-modified products thereof), higher alcohols having 6 or more carbon atoms, ester oligomers, and ethylene fluoride resins. One of these compounds may be used alone or two or more thereof may be used in combination. The content of the lubricant is usually 5 mass% or less and preferably 1 mass% or less of the present composition. The lower limit is usually 0 mass%.

The present composition thus produced is prepared into various forms such as a pellet, a powder form, or a liquid form, and is provided as a molding material for various molded products. In particular, in the present embodiment, when the present composition is provided as a material for melt molding, the effects of the present disclosure tend to be more efficiently achieved, which is preferable.

The present composition also includes a resin composition obtained by mixing a resin other than the EVOH resin used in the present composition.

The substrate film may be, for example, a monolayer film (EVOH layer) molded from the present composition, or a multilayer film having at least one EVOH layer.

Layer Containing Thermoplastic Resin

The substrate film preferably has a layer containing a thermoplastic resin (hereinafter, sometimes referred to as a "thermoplastic resin layer"). When the substrate film has the thermoplastic resin layer, the mechanical strength and the barrier properties against water vapor of the present vapor-deposited film tend to be further enhanced. In addition, properties such as heat sealability and mechanical strength can be imparted depending on the type of the thermoplastic resin constituting the thermoplastic resin layer.

As the thermoplastic resin, the same thermoplastic resin as the thermoplastic resin described in the section "Layer Containing Thermoplastic Resin" in the first aspect can be used.

The content of the thermoplastic resin in the thermoplastic resin layer is not particularly limited, but the thermoplastic resin is preferably the main component (that is, the content of the thermoplastic resin contained in the thermoplastic resin layer is 50 mass% or more). The content of the thermoplastic resin is more preferably 60 mass% or more, still more preferably 70 mass% or more, and particularly preferably 80 mass% or more, 90 mass% or more, 95 mass% or more, or 100 mass%.

For example, the thermoplastic resin layer may contain, in addition to the thermoplastic resin, an additional component within a range that does not inhibit the effects of the present disclosure, and generally within a range of 20 mass% or less. Examples of the component include an anti-blocking agent, a processing aid, a resin other than the thermoplastic resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Layer Containing Adhesive Resin

The substrate film may have a layer containing an adhesive resin (hereinafter, sometimes referred to as an "adhesive resin layer"). When the substrate film has the adhesive resin layer, the appearance characteristics (film surface) of the present vapor-deposited film tend to be further improved.

As the adhesive resin, the same adhesive resin as the adhesive resin described in the section "Layer Containing Adhesive Resin" of the first aspect can be used.

The content of the adhesive resin in the adhesive resin layer is not particularly limited, but the adhesive resin is preferably the main component (that is, the content of the adhesive resin contained in the adhesive resin layer is 50 mass% or more). Especially, the content of the adhesive resin is more preferably 60 mass% or more, still more preferably 70 mass% or more, and particularly preferably 80 mass% or more, 90 mass% or more, 95 mass% or more, or 100 mass%.

The adhesive resin layer may contain a component other than the adhesive resin, within a range that does not inhibit the effects of the present disclosure, and generally within a range of 20 mass% or less. Examples of the component include an anti-blocking agent, a processing aid, a resin other than the adhesive resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and reinforcing agents such as various fibers. One of these may be used alone, or two or more of these may be used in combination.

Method for Producing Substrate Film

The substrate film can be usually produced by extruding the composition from a die, molding the composition into a film, and stretching the film as necessary.

When the substrate film has the thermoplastic resin layer and the adhesive resin layer, the substrate film can be produced by molding raw material compositions for forming the EVOH layer, the thermoplastic resin layer, and the adhesive resin layer, respectively, into films by known coextrusion in which the compositions are extruded from dies different from each other or a common die and laminated, and then stretching the films as necessary.

As the die, for example, an annular die or a T-die can be used.

Examples of the molding method include methods of melting a material and molding the molten material, such as extrusion molding, blow molding, injection molding, thermoforming, and inflation molding, and a method of molding a formed solution, such as cast molding.

The substrate film is not particularly limited in other layer configurations as long as the substrate film has the EVOH layer, but the EVOH layer is preferably at least one of the surface layers. Since the substrate film has the EVOH layer, the present vapor-deposited film can yield excellent transparency.

The substrate film is preferably a multilayer film, and examples of the layer configuration thereof include, when the EVOH layer is referred to as a "layer (A)", the thermoplastic resin layer is referred to as a "layer (B)", and the adhesive resin layer is referred to as a "layer (C)", the layer (B)/the layer (A), the layer (B)/the layer (A)/the layer (B), the layer (B)/the layer (C)/the layer (A)/the layer (B), the layer (B)/the layer (C)/the layer (A)/the layer (C)/the layer (B), the layer (B)/the layer (A)/the layer (B)/the layer (A)/the layer (B), the layer (B)/the layer (B)/the layer (C)/the layer (A)/the layer (C)/the layer (B)/the layer (B), the layer (A)/the layer (C)/the layer (B), the layer (A)/the layer (B)/the layer (C)/the layer (B), and the layer (A)/the layer (C)/the layer (B)/the layer (B).

In the above examples, the layer (B) and the layer (C) are exemplified as examples of a layer other than the layer (A), but the layer other than the layer (A) is not limited thereto.

Moreover, the substrate film preferably does not include a layer formed from a resin composition containing a polyamide-based resin as a main component (that is, the content of the polyamide-based resin contained in the resin composition is 50 mass% or more).

In the above examples, the symbol "/" means that the layers on both sides of the symbol are directly laminated.

The substrate film thus obtained is preferably stretched as necessary, and more preferably uniaxially stretched.

The stretching ratio in the uniaxially stretched film is preferably 3 or more, more preferably 4 or more, and particularly preferably 5 or more. When the stretching ratio is less than 3, thickness non-uniformity due to stretching tends to occur, and the gas barrier properties tend to decrease.

The upper limit of the stretching ratio is preferably 12 or less, more preferably 10 or less, and particularly preferably 8 or less. When the stretching ratio exceeds 12, the film surface after stretching tends to deteriorate.

Uniaxially stretching the substrate film provides advantages, such as an advantage from the viewpoint of economic efficiency, as well as easy tearing of a multilayer structure (when the multilayer structure is used as a packaging material, the packaging material being easy to open), and improvement in the gas barrier properties.

The stretching direction of the uniaxially stretched film is not particularly limited, and the stretching may be implemented in the longitudinal direction (machine direction (MD)) or the width direction (transverse direction (TD)), but is preferably uniaxial stretching in the longitudinal direction (MD), and is particularly preferably not substantially implemented in a direction different from the stretching direction.

The stretched state (such as unstretched, uniaxially stretched, or biaxially stretched) of the substrate film can be confirmed by using a general method for analyzing the orientation of the resin (for example, wide-angle X-ray scattering (WAXS)).

The method for stretching the uniaxially stretched film is not particularly limited, and examples thereof include a tenter stretching method, a tubular stretching method, and a roll stretching method. Among these, from the viewpoint of production cost, uniaxial stretching by the roll stretching method is preferred. When the substrate film is obtained by the inflation molding, the roll stretching method is preferred.

The stretching temperature at the time of uniaxial stretching is not particularly limited, but is generally from 50 to 130°C.

The total thickness of the substrate film is not particularly limited and may be appropriately set depending on the application. The thickness of the substrate film is preferably 10 $\mu$m or greater, and more preferably 15 $\mu$m or greater. When the thickness of the substrate film is 10 $\mu$m or more, the industrial productivity and the mechanical properties tend to be further improved. In addition, the thickness of the substrate film is preferably 100 $\mu$m or less, and more preferably 50 $\mu$m or less. When the thickness of the substrate film is 100 $\mu$m or less, the industrial productivity and the economic efficiency tend to be further improved.

The thickness of the substrate film as a uniaxially stretched film means the thickness after stretching.

When the substrate film is a multilayer film, the thickness of the EVOH layer is preferably 0.5 $\mu$m or more, more preferably 0.8 $\mu$m or more, and particularly preferably 1 $\mu$m or more. When the thickness of the EVOH layer is 0.5 $\mu$m or more, the gas barrier properties tend to be improved.

On the other hand, the thickness of the EVOH layer is preferably 20 $\mu$m or less, more preferably 10 $\mu$m or less, and particularly preferably 5 $\mu$m or less. When the thickness of the EVOH layer is 20 $\mu$m or less, the appearance characteristics (film surface) tend to be improved.

The thickness of the multilayer film as a uniaxially stretched film means the thickness after stretching. Moreover, when the substrate film includes a plurality of EVOH layers, the total thickness of all the EVOH layers is preferably within the above range.

When the substrate film is a multilayer film, the ratio of the thickness of the EVOH layer to the total thickness of all the layers is preferably 30% or less, and more preferably 20% or less, and may be 10% or less or 5% or less, from the viewpoints of industrial productivity and mechanical properties.

When the substrate film has the thermoplastic resin layer, the thickness thereof is preferably from 7 to 100 $\mu$m, and more preferably from 10 to 50 $\mu$m, from the viewpoints of industrial productivity and mechanical properties.

In the substrate film as a uniaxially stretched film, the thickness of the thermoplastic resin layer means the thickness after stretching. In addition, when the substrate film includes a plurality of thermoplastic resin layers, the total thickness of all the thermoplastic resin layers is preferably within the above range.

When the substrate film has the adhesive resin layer, the thickness thereof is preferably from 0.5 to 20 $\mu$m, and more preferably from 1 to 10 $\mu$m, from the viewpoints of industrial productivity and quality stability.

In the substrate film as a uniaxially stretched film, the thickness of the adhesive resin layer means the thickness after stretching. Moreover, when the substrate film includes a plurality of adhesive resin layers, the total thickness of all the adhesive resin layers is preferably within the above range.

The internal haze value of the substrate film is preferably less than 0.4%, more preferably 0.3% or less, still more preferably 0.2% or less, and particularly preferably 0%. The internal haze value can be measured in accordance with ASTM D1003 using the substrate film with a film thickness of 33 $\mu$m and a HAZE meter.

Metal Vapor-Deposited Layer

The metal vapor-deposited layer laminated on the substrate film is obtained by depositing an elemental metal or an alloy of two or more metals. The metal vapor-deposited layer is preferably laminated on the EVOH layer of the substrate film from the viewpoint of gas barrier properties.

Examples of the metal used in the metal vapor-deposited layer include those classified into group 13 elements (such as aluminum, gallium, and indium), group 14 elements (such as titanium, zirconium, tin, and hafnium), noble metals (such as copper, silver, and gold), group 6 elements (such as chromium, molybdenum, and tungsten), group 8 elements (such as iron, cobalt, and nickel), and alloys thereof. Among these, at least one selected from the group consisting of aluminum, gold, silver, copper, titanium, nickel, chromium, tin, and indium is generally preferable, from the viewpoint of their availability and easy of handling, and especially, a metal made of aluminum is particularly preferable.

The metal used in the metal vapor-deposited layer preferably includes a metal compound such as a metal oxide, a metal carbide, or a metal nitride, and among these metal compounds, the metal oxide is preferable. The content of the metal compound is preferably 50 mass% or more, more preferably 80 mass% or more, and still more preferably 90 mass% or more, and may be 100 mass%, of the metal used in the metal vapor-deposited layer.

The metal vapor-deposited layer can be identified by analyzing a cross section of the laminate by energy dispersive spectroscopy (EDS).

Method for Producing Present Vapor-Deposited Film

The present vapor-deposited film can be produced by laminating the metal vapor-deposited layer on the substrate film.

The method for laminating the metal vapor-deposited layer on the substrate film is not particularly limited, and a known vapor deposition method may be appropriately employed, for example, a physical vapor deposition method (PVD method) such as a vacuum deposition method, a sputtering method, or an ion plating method, or a chemical vapor deposition method (CVD method).

The film thickness of the metal vapor-deposited layer is usually from 1 to 100 nm, preferably from 3 to 50 nm, and more preferably from 5 to 20 nm. When the film thickness of the metal vapor-deposited layer is less than 1 nm, the gas barrier properties tend to be insufficient, and on the other hand, even when the film thickness exceeds 100 nm, no effect of improving the gas barrier properties is obtained, and the bending resistance and the production cost tend to increase.

The present vapor-deposited film thus obtained exhibits excellent surface smoothness on the vapor-deposited surface. The root mean square gradient (Sdq) of the vapor-deposited surface of the present vapor-deposited film is preferably 0.18 $\mu$m or less, more preferably 0.175 $\mu$m or less, and still more preferably 0.17 $\mu$m or less. A smaller root mean square gradient (Sdq) indicates a smoother surface, and thus is preferable.

The root mean square height (Sq) and the root mean square gradient (Sdq) can be measured by using the method according to ISO25178, and specifically can be measured by methods described in Examples below.

The oxygen permeability at 20°C and 90% RH of the present vapor-deposited film is preferably 8 cc/m$^2$·day·atm or less, more preferably 7 cc/m$^2$·day·atm or less, and particularly preferably 5 cc/m$^2$·day·atm or less.

The present vapor-deposited film can be suitably used as a molded article and a packaging material such as a packaging film for packaging, for example, general food products, as well as seasonings such as mayonnaise and dressings, fermented food products such as Miso, oil and/or fat food products such as salad oil, snack foods, beverages, cosmetics, and pharmaceuticals, or as a portion of a multilayer structure for forming these molded article and packaging material.

Multilayer Structure

The multilayer structure is obtained by further laminating an additional layer on the present vapor-deposited film. The additional layer to be laminated on the present vapor-deposited film is not particularly limited, and may be a layer formed from a resin composition containing a thermoplastic resin exemplified as the thermoplastic resin described above or an adhesive resin exemplified as the adhesive resin described above.

As a method for producing the multilayer structure, various known production methods such as a dry lamination method, a sandwich lamination method, an extrusion lamination method, a coextrusion lamination method, and a solution coating method can be adopted.

Molded Article

It is possible to obtain a cup-shaped or tray-shaped molded article using the present vapor-deposited film or the multilayer structure. In such a case, a draw molding method is usually employed, and specific examples of the method include a vacuum molding method, a pressure molding method, a vacuum-pressure molding method, and a plug assist vacuum-pressure molding method.

Furthermore, it is also possible to obtain a molded article such as a tubular or bottle-shaped multilayer container (laminate structure) or a food container from a multilayer parison (hollow tubular pre-molded product before blowing) using the multilayer structure. In that case, a blow molding method is usually employed, and specific examples thereof include extrusion blow molding methods (such as a twin-head type, a shuttle type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method).

As necessary, the resulting laminate may be subjected to a process, for example, a heat treatment, a cooling treatment, a rolling treatment, a printing treatment, a dry lamination treatment, a solution or melt coating treatment, a bag-making process, a deep drawing process, a box-making process, a tube-making process, and a splitting process.

Examples

Hereinafter, the present disclosure will be more specifically described with reference to Examples, but the present disclosure is not limited to Examples below as long as it does not deviate from the gist of the present disclosure. In Examples, "parts" and "%" are based on mass.

First Aspect

Hereinafter, the present disclosure will be more specifically described with reference to Examples, but the present disclosure is not limited to Examples below as long as it does not deviate from the gist of the present disclosure. In Examples, "parts" and "%" are based on mass.

Example I-1

Preparation of Pellet of Composition

A pellet-shaped EVOH resin having an ethylene structural unit content of 29 mol% and a degree of saponification of 99.6 mol% was used as an EVOH resin.

Titanium oxide (available from FUJIFILM Wako Pure Chemical Corporation) was used as a titanium compound.

The pellet-shaped EVOH resin was dry-blended with the titanium oxide in an amount of 0.1 ppm in terms of metal relative to the mass of the composition to yield a mixture.

The mixture was fed to a twin-screw extruder (20 mm$\varphi$) having a die with two holes, and extruded and discharged under the following extrusion conditions. The extruded and discharged strand was air-cooled and solidified on a conveyor belt. Subsequently, the solidified strand was cut to yield pellets of the composition.

Extrusion Condition

Set temperature (°C) of extruder: C1/C2/C3/C4/C5/C6
equals to 150/200/210/210/210/210

Preparation of Melt-Extruded Monolayer Film

The resulting pellets of the composition were extruded under the following conditions to yield a melt-extruded monolayer film.

Film Preparation Condition

- Extruder: Plastograph EC-plus, available from Brabender GmbH & Co. KG
- Screw: single-screw, 20 mm$\varphi$, full-flight
- Set temperature of cylinder part: 190 to 210°C
- Set temperature of cooling roll: 80°C
- Film thickness: 30 $\mu$m

Formation of Metal Vapor-Deposited Layer

A metal vapor-deposited layer of aluminum was laminated on the monolayer film as a substrate film at a substrate film surface temperature of 40°C or lower using batch-type vapor deposition equipment available from Showa Shinku Co., Ltd., and a vapor-deposited film of Example I-1 was obtained.

Example I-2

A vapor-deposited film was obtained in the same manner as in Example I-1, except that the content of the titanium oxide in terms of metal in Example I-1 was changed to 1 ppm relative to the mass of the composition.

Comparative Example I-1

A vapor-deposited film was obtained in the same manner as in Example I-1, except that use of the titanium oxide in Example I-1 was not performed.

Comparative Example I-2

A vapor-deposited film was obtained in the same manner as in Example I-1, except that the content of the titanium oxide in terms of metal in Example I-1 was changed to 10 ppm relative to the mass of the composition.

Comparative Example I-3

A pellet-shaped EVOH resin having an ethylene structural unit content of 29 mol% and a degree of saponification of 99.7 mol% was used as an EVOH resin.
Zinc oxide (available from FUJIFILM Wako Pure Chemical Corporation) was used as a zinc compound.
The pellet-shaped EVOH resin was dry-blended with the zinc oxide in an amount of 0.1 ppm in terms of metal relative to the mass of the resin composition to yield a mixture.
A vapor-deposited film was obtained in the same manner as in Example I-1, using the mixture.
Using the vapor-deposited films of Examples I-1 and I-2 and Comparative Examples I-1 to I-3 obtained as described above, the surface smoothness of the vapor-deposited films was measured as follows. The measurement results are shown in Table I-1 below.

Surface Smoothness

The metal vapor-deposited layer-side surfaces (vapor-deposited surfaces) of the vapor-deposited films were observed using a laser microscope (available from Olympus Corporation, LEXTOLS5000), under the following conditions.

- Light source: light source with wavelength of 405 nm
- Objective lens: magnification of 100 times
- Optical zoom: 1.0 times
- Image area: 129 $\mu$m $\times$ 129 $\mu$m
- Resolution: 1024 $\times$ 1024 pixels

The root mean square height (Sq) of the respective vapor-deposited surfaces was measured from any point on the respective vapor-deposited surfaces by using the method according to ISO25178.

A smaller root mean square height (Sq) indicates a smoother surface.

[Table I-1]

| | Content of titanium compound in terms of metal (ppm) | Content of zinc compound in terms of metal (ppm) | Surface smoothness | |
|---|---|---|---|---|
| | | | Root mean square height: Sq ($\mu$m) | |
| Example I-1 | 0.1 | 0 | 0.062 | |
| Example I-2 | 1 | 0 | 0.081 | |
| Comparative Example I-1 | 0 | 0 | 0.151 | |
| Comparative Example I-2 | 10 | 0 | 0.116 | |
| Comparative Example I-3 | 0 | 0.1 | 0.105 | |

From the results shown in Table I-1, it is found that the vapor-deposited films of Examples I-1 and I-2 containing a specific trace amount of the titanium compound have a small root mean square height (Sq) and a smooth vapor-deposited surface.

On the other hand, it is found that the vapor-deposited films of Comparative Examples I-1 and I-3 containing no titanium compound and Comparative Example I-2 containing the titanium compound in an amount exceeding the specific range have a large root mean square height (Sq), and a non-smooth vapor-deposited surface, respectively.

Even when the substrate film constituting each of the vapor-deposited films of Examples I-1 and I-2 is a multilayer film obtained by co-extruding each of the compositions and a thermoplastic resin (such as a polyethylene resin) instead of the monolayer film, an effect that the vapor-deposited surface exhibits excellent surface smoothness is obtained. Further, even in a multilayer structure, a molded article and a food container formed using each of the vapor-deposited films of Examples I-1 and I-2, the effect that the respective vapor-deposited surfaces exhibit excellent surface smoothness is obtained.

Second Aspect

Example II-1

Preparation of Pellet of Composition

A pellet-shaped EVOH resin having an ethylene structural unit content of 29 mol% and a degree of saponification of 99.6 mol% was used as an EVOH resin.

Ethylenebis(stearamide) (ALFLOW H50-FP available from NOF Corporation) was used as a lubricant, and titanium oxide (available from FUJIFILM Wako Pure Chemical Corporation) was used as a titanium compound.

The pellet-shaped EVOH resin was dry-blended with the ethylenebis(stearamide) in an amount of 180 ppm relative to the mass of the composition and the titanium oxide in an amount of 0.1 ppm as a content in terms of metal relative to the mass of the composition to yield a mixture.

The mixture was fed to a twin-screw extruder (20 mm$\varphi$) having a die with two holes, and extruded and discharged under the following extrusion conditions. The extruded and discharged strand was air-cooled and solidified on a conveyor belt. Subsequently, the solidified strand was cut to yield pellets of the composition.

Extrusion Condition

Set temperature (°C) of extruder: C1/C2/C3/C4/C5/C6 equals to 150/200/210/210/210/210

Preparation of Melt-Extruded Monolayer Film

The resulting pellets of the composition were extruded under the following conditions to yield a melt-extruded monolayer film.

Film Preparation Condition

- Extruder: Plastograph EC-plus, available from Brabender GmbH & Co. KG
- Screw: single-screw, 20 mmφ, full-flight
- Set temperature of cylinder part: 190 to 210°C
- Set temperature of cooling roll: 80°C
- Film thickness: 30 μm

Formation of Metal Vapor-Deposited Layer

A metal vapor-deposited layer of aluminum was laminated on the monolayer film as a substrate film at a substrate film surface temperature of 40°C or lower using batch-type vapor deposition equipment available from Showa Shinku Co., Ltd., and a vapor-deposited film of Example II-1 was obtained.

Example II-2

A vapor-deposited film was obtained in the same manner as in Example II-1, except that the content of the titanium oxide in terms of metal in Example II-1 was changed to 1 ppm relative to the mass of the composition.

Comparative Example II-1

A vapor-deposited film was obtained in the same manner as in Example II-1, except that use of titanium oxide in Example II-1 was not performed.

Comparative Example II-2

A vapor-deposited film was obtained in the same manner as in Example II-1, except that the content of the titanium oxide in terms of metal in Example II-1 was changed to 10 ppm relative to the mass of the composition.
Using the vapor-deposited films of Examples II-1 and II-2 and Comparative Examples II-1 and II-2 obtained as described above, the surface smoothness of the vapor-deposited films was measured as follows. The measurement results are shown in Table II-1 below.

Root Mean Square Height (Sq) and Arithmetic Mean Height (Sa)

The metal vapor-deposited layer-side surfaces (vapor-deposited surfaces) of the vapor-deposited films were observed using a laser microscope (available from Olympus Corporation, LEXTOLS5000), under the following conditions.

- Light source: light source with wavelength of 405 nm
- Objective lens: magnification of 100 times
- Optical zoom: 1.0 times
- Image area: 129 μm × 129 μm
- Resolution: 1024 × 1024 pixels

The root mean square height (Sq) and the arithmetic mean height (Sa) of the respective vapor-deposited surfaces were measured from any point on the respective vapor-deposited surfaces by using the method according to ISO25178.
A smaller root mean square height (Sq) indicates a smoother surface. A smaller arithmetic mean height (Sa) indicates a smoother surface.

[Table II-1]

| | Content of lubricant (ppm) | Content of titanium compound in terms of metal (ppm) | Lubricant content/content of titanium compound in terms of metal | Surface smoothness | |
|---|---|---|---|---|---|
| | | | | Root mean square height: Sq ($\mu$m) | Arithmetic mean height: Sa ($\mu$m) |
| Example II-1 | 180 | 0.1 | 1800 | 0.060 | 0.047 |
| Example II-2 | 180 | 1 | 180 | 0.056 | 0.046 |
| Comparative Example II-1 | 180 | 0 | - | 0.086 | 0.069 |
| Comparative Example II-2 | 180 | 10 | 18 | 0.094 | 0.075 |

From the results shown in Table II-1, it is found that the vapor-deposited films of Examples II-1 and II-2 containing a specific trace amount of the titanium compound have a small root mean square height (Sq) and a small arithmetic mean height (Sa), and a smooth vapor-deposited surface.

On the other hand, it is found that the vapor-deposited films of Comparative Example II-1 containing no titanium compound and Comparative Example II-2 containing the titanium compound in an amount exceeding the specific range have a large root mean square height (Sq) and a large arithmetic mean height (Sa), and a non-smooth vapor-deposited surface, respectively.

Even when the substrate film constituting each of the vapor-deposited films of Examples II-1 and II-2 is a multilayer film obtained by co-extruding each of the compositions and a thermoplastic resin (such as a polyethylene resin) instead of the monolayer film, the effect that the vapor-deposited surface exhibits excellent surface smoothness is obtained. Further, even in a multilayer structure, a molded article and a food container formed using each of the vapor-deposited films of Examples II-1 and II-2, the effect that the respective vapor-deposited surfaces exhibit excellent surface smoothness is obtained.

Third Aspect

Example III-1

Preparation of Pellet of Composition

A pellet-shaped EVOH resin having an ethylene structural unit content of 29 mol% and a degree of saponification of 99.6 mol% was used as an EVOH resin.

In addition, sodium acetate (available from FUJIFILM Wako Pure Chemical Corporation) was used as an alkaline metal compound, and titanium oxide (available from FUJIFILM Wako Pure Chemical Corporation) was used as a titanium compound.

The pellet-shaped EVOH resin was dry-blended with the sodium acetate in an amount of 200 ppm as a content in terms of metal relative to the mass of the composition and the titanium oxide in an amount of 0.1 ppm as a content in terms of metal relative to the mass of the composition to yield a mixture.

The mixture was fed to a twin-screw extruder (20 mm$\varphi$) having a die with two holes, and extruded and discharged under the following extrusion conditions. The extruded and discharged strand was air-cooled and solidified on a conveyor belt. Subsequently, the solidified strand was cut to yield pellets of the composition.

Extrusion Condition

Set temperature (°C) of extruder: C1/C2/C3/C4/C5/C6
equals to 150/200/210/210/210/210

Preparation of Melt-Extruded Monolayer Film

The resulting pellets of the composition were extruded under the following conditions to yield a melt-extruded monolayer film.

Film Preparation Condition

- Extruder: Plastograph EC-plus, available from Brabender GmbH & Co. KG
- Screw: single-screw, 20 mmφ, full-flight
- Set temperature of cylinder part: 190 to 210°C
- Set temperature of cooling roll: 80°C
- Film thickness: 30 μm

Formation of Metal Vapor-Deposited Layer

A metal vapor-deposited layer of aluminum was laminated on the monolayer film as a substrate film at a substrate film surface temperature of 40°C or lower using batch-type vapor deposition equipment available from Showa Shinku Co., Ltd., and a vapor-deposited film of Example III-1 was obtained.

Example III-2

A vapor-deposited film was obtained in the same manner as in Example III-1, except that the content of the titanium oxide in terms of metal in Example III-1 was changed to 1 ppm relative to the mass of the composition.

Comparative Example III-1

A vapor-deposited film was obtained in the same manner as in Example III-1, except that use of titanium oxide in Example III-1 was not performed.

Comparative Example III-2

A vapor-deposited film was obtained in the same manner as in Example III-1, except that the content of the titanium oxide in terms of metal in Example III-1 was changed to 10 ppm relative to the mass of the composition.
Using the vapor-deposited films of Examples III-1 and III-2 and Comparative Examples III-1 and III-2 obtained in this manner, the surface smoothness of the vapor-deposited films was measured as follows. The measurement results are shown in Table III-1 below.

Surface Smoothness

The metal vapor-deposited layer-side surfaces (vapor-deposited surfaces) of the vapor-deposited films were observed using a laser microscope (available from Olympus Corporation, LEXTOLS5000), under the following conditions.

- Light source: light source with wavelength of 405 nm
- Objective lens: magnification of 100 times
- Optical zoom: 1.0 times
- Image area: 129 μm × 129 μm
- Resolution: 1024 × 1024 pixels

The root mean square height (Sq) of the respective vapor-deposited surfaces was measured from any point on the respective vapor-deposited surfaces by using the method according to ISO25178.
A smaller root mean square height (Sq) indicates a smoother surface.

[Table III-1]

| | Content of alkaline metal compound in terms of metal (ppm) | Content of titanium compound in terms of metal (ppm) | Content of alkaline metal compound in terms of metal/content of titanium compound in terms of metal | Surface smoothness |
| --- | --- | --- | --- | --- |
| | | | | Root mean square height: Sq (μm) |
| Example III-1 | 200 | 0.1 | 2000 | 0.075 |

(continued)

| | Content of alkaline metal compound in terms of metal (ppm) | Content of titanium compound in terms of metal (ppm) | Content of alkaline metal compound in terms of metal/content of titanium compound in terms of metal | Surface smoothness |
|---|---|---|---|---|
| | | | | Root mean square height: Sq ($\mu$m) |
| Example III-2 | 200 | 1 | 200 | 0.068 |
| Comparative Example III-1 | 200 | 0 | - | 0.114 |
| Comparative Example III-2 | 200 | 10 | 20 | 0.101 |

From the results shown in Table III-1, it is found that the vapor-deposited films of Examples III-1 and III-2 containing a specific trace amount of the titanium compound have a small root mean square height (Sq) and a smooth vapor-deposited surface.

On the other hand, it is found that the vapor-deposited films of Comparative Example III-1 containing no titanium compound and Comparative Example III-2 containing the titanium compound in an amount exceeding the specific range have a large root mean square height (Sq), and a non-smooth vapor-deposited surface, respectively.

Even when the substrate film constituting each of the vapor-deposited films of Examples III-1 and III-2 is a multilayer film obtained by co-extruding each of the compositions and a thermoplastic resin (such as a polyethylene resin) instead of the monolayer film, the effect that the vapor-deposited surface exhibits excellent surface smoothness is obtained. Further, even in a multilayer structure, a molded article and a food container formed using each of the vapor-deposited films of Examples III-1 and III-2, the effect that the respective vapor-deposited surfaces exhibit excellent surface smoothness is obtained.

Fourth Aspect

Example IV-1

Preparation of Pellet of Composition

A pellet-shaped EVOH resin having an ethylene structural unit content of 29 mol% and a degree of saponification of 99.6 mol% was used as an EVOH resin.

In addition, magnesium oxide (available from FUJIFILM Wako Pure Chemical Corporation) was used as an alkaline earth metal compound, and titanium oxide (available from FUJIFILM Wako Pure Chemical Corporation) was used as a titanium compound.

The pellet-shaped EVOH resin was dry-blended with the magnesium oxide in an amount of 10 ppm as a content in terms of metal relative to the mass of the composition and the titanium oxide in an amount of 0.1 ppm as a content in terms of metal relative to the mass of the composition to yield a mixture.

The mixture was fed to a twin-screw extruder (20 mm$\varphi$) having a die with two holes, and extruded and discharged under the following extrusion conditions. The extruded and discharged strand was air-cooled and solidified on a conveyor belt. Subsequently, the solidified strand was cut to yield pellets of the composition.

Extrusion Condition

Set temperature (°C) of extruder: C1/C2/C3/C4/C5/C6
equals to 150/200/210/210/210/210

Preparation of Melt-Extruded Monolayer Film

The resulting pellets of the composition were extruded under the following conditions to yield a melt-extruded monolayer film.

Film Preparation Condition

- Extruder: Plastograph EC-plus, available from Brabender GmbH & Co. KG
- Screw: single-screw, 20 mmφ, full-flight
- Set temperature of cylinder part: 190 to 210°C
- Set temperature of cooling roll: 80°C
- Film thickness: 30 μm

Formation of Metal Vapor-Deposited Layer

A metal vapor-deposited layer of aluminum was laminated on the monolayer film as a substrate film at a substrate film surface temperature of 40°C or lower using batch-type vapor deposition equipment available from Showa Shinku Co., Ltd., and a vapor-deposited film of Example IV-1 was obtained.

Example IV-2

A vapor-deposited film was obtained in the same manner as in Example IV-1, except that the content of the titanium oxide in terms of metal in Example IV-1 was changed to 1 ppm relative to the mass of the composition.

Comparative Example IV-1

A vapor-deposited film was obtained in the same manner as in Example IV-1, except that use of titanium oxide in Example IV-1 was not performed.

Comparative Example IV-2

A vapor-deposited film was obtained in the same manner as in Example IV-1, except that the content of the titanium oxide in terms of metal in Example IV-1 was changed to 10 ppm relative to the mass of the composition.
Using the vapor-deposited films of Examples IV-1 and IV-2 and Comparative Examples IV-1 and IV-2 obtained as described above, the surface smoothness of the vapor-deposited films was measured as follows. The measurement results are shown in Table IV-1 below.

Surface Smoothness

The metal vapor-deposited layer-side surfaces (vapor-deposited surfaces) of the vapor-deposited films were observed using a laser microscope (available from Olympus Corporation, LEXTOLS5000), under the following conditions.

- Light source: light source with wavelength of 405 nm
- Objective lens: magnification of 100 times
- Optical zoom: 1.0 times
- Image area: 129 μm × 129 μm
- Resolution: 1024 × 1024 pixels

The root mean square height (Sq) of the respective vapor-deposited surfaces was measured from any point on the respective vapor-deposited surfaces by using the method according to ISO25178.
A smaller root mean square height (Sq) indicates a smoother surface.

[Table IV-1]

| | Content of alkaline earth metal compound in terms of metal (ppm) | Content of titanium compound in terms of metal (ppm) | Content of alkaline earth metal compound in terms of metal/content of titanium compound in terms of metal | Surface smoothness |
|---|---|---|---|---|
| | | | | Root mean square height: Sq (μm) |
| Example IV-1 | 10 | 0.1 | 100 | 0.090 |
| Example IV-2 | 10 | 1 | 10 | 0.066 |
| Comparative Example IV-1 | 10 | 0 | - | 0.190 |

(continued)

| | Content of alkaline earth metal compound in terms of metal (ppm) | Content of titanium compound in terms of metal (ppm) | Content of alkaline earth metal compound in terms of metal/content of titanium compound in terms of metal | Surface smoothness |
|---|---|---|---|---|
| | | | | Root mean square height: Sq ($\mu$m) |
| Comparative Example IV-2 | 10 | 10 | 1 | 0.129 |

From the results shown in Table IV-1, it is found that the vapor-deposited films of Examples IV-1 and IV-2 containing a specific trace amount of the titanium compound have a small root mean square height (Sq) and a smooth vapor-deposited surface.

On the other hand, it is found that the vapor-deposited films of Comparative Example IV-1 containing no titanium compound and Comparative Example IV-2 containing the titanium compound in an amount exceeding the specific range have a large root mean square height (Sq), and a non-smooth vapor-deposited surface, respectively.

Even when the substrate film constituting each of the vapor-deposited films of Examples IV-1 and IV-2 is a multilayer film obtained by co-extruding each of the compositions and a thermoplastic resin (such as a polyethylene resin) instead of the monolayer film, the effect that the vapor-deposited surface exhibits excellent surface smoothness is obtained. Further, even in a multilayer structure, a molded article, and a food container formed using each of the vapor-deposited films of Examples IV-1 and IV-2, an effect that the respective vapor-deposited surface exhibit excellent surface smoothness is obtained.

Fifth Aspect

Example V-1

Preparation of Pellet of Composition

A pellet-shaped EVOH resin having an ethylene structural unit content of 29 mol% and a degree of saponification of 99.6 mol% was used as an EVOH resin.

In addition, boric acid (available from FUJIFILM Wako Pure Chemical Corporation) was used as a boron compound, and titanium oxide (available from FUJIFILM Wako Pure Chemical Corporation) was used as a titanium compound.

The pellet-shaped EVOH resin was dry-blended with the boric acid in an amount of 100 ppm as a content in terms of boron relative to the mass of the composition and the titanium oxide in an amount of 0.1 ppm as a content in terms of metal relative to the mass of the composition to yield a mixture.

The mixture was fed to a twin-screw extruder (20 mm$\varphi$) having a die with two holes, and extruded and discharged under the following extrusion conditions. The extruded and discharged strand was air-cooled and solidified on a conveyor belt. Subsequently, the solidified strand was cut to yield pellets of the composition.

Extrusion Condition

Set temperature (°C) of extruder: C1/C2/C3/C4/C5/C6
equals to 150/200/210/210/210/210

Preparation of Melt-Extruded Monolayer Film

The resulting pellets of the composition were extruded under the following conditions to yield a melt-extruded monolayer film.

Film Preparation Condition

- Extruder: Plastograph EC-plus, available from Brabender GmbH & Co. KG
- Screw: single-screw, 20 mm$\varphi$, full-flight

- Set temperature of cylinder part: 190 to 210°C
- Set temperature of cooling roll: 80°C
- Film thickness: 30 μm

Formation of Metal Vapor-Deposited Layer

A metal vapor-deposited layer of aluminum was laminated on the monolayer film as a substrate film at a substrate film surface temperature of 40°C or lower using batch-type vapor deposition equipment available from Showa Shinku Co., Ltd., and a vapor-deposited film of Example V-1 was obtained.

Example V-2

A vapor-deposited film was obtained in the same manner as in Example V-1, except that the content of the titanium oxide in terms of metal in Example V-1 was changed to 1 ppm relative to the mass of the composition.

Comparative Example V-1

A vapor-deposited film was obtained in the same manner as in Example V-1, except that use of titanium oxide in Example V-1 was not performed.

Comparative Example V-2

A vapor-deposited film was obtained in the same manner as in Example V-1, except that the content of the titanium oxide in terms of metal in Example V-1 was changed to 10 ppm relative to the mass of the composition.
Using the vapor-deposited films of Examples V-1 and V-2 and Comparative Examples V-1 and V-2 obtained as described above, the surface smoothness of the vapor-deposited films was measured as follows. The measurement results are shown in Table V-1 below.

Root Mean Square Height (Sq) and Maximum Height (Sz)

The metal vapor-deposited layer-side surfaces (vapor-deposited surfaces) of the vapor-deposited films were observed using a laser microscope (available from Olympus Corporation, LEXTOLS5000), under the following conditions.

- Light source: light source with wavelength of 405 nm
- Objective lens: magnification of 100 times
- Optical zoom: 1.0 times
- Image area: 129 μm × 129 μm
- Resolution: 1024 × 1024 pixels

The root mean square height (Sq) and the maximum height (Sz) of the respective vapor-deposited surfaces were measured from any point on the respective vapor-deposited surfaces by using the method according to ISO25178.
A smaller root mean square height (Sq) indicates a smoother surface. A smaller maximum height (Sz) indicates a smoother surface.

[Table V-1]

|  | Content of boron compound in terms of boron (ppm) | Content of titanium compound in terms of metal (ppm) | Content of boron compound in terms of boron/content of titanium compound in terms of metal | Surface smoothness | |
|---|---|---|---|---|---|
|  |  |  |  | Root mean square height: Sq (μm) | Maximum height: Sz (μm) |
| Example V-1 | 100 | 0.1 | 1000 | 0.062 | 0.9 |
| Example V-2 | 100 | 1 | 100 | 0.073 | 0.9 |
| Comparative Example V-1 | 100 | 0 | - | 0.089 | 2.1 |

(continued)

| | Content of boron compound in terms of boron (ppm) | Content of titanium compound in terms of metal (ppm) | Content of boron compound in terms of boron/content of titanium compound in terms of metal | Surface smoothness | |
|---|---|---|---|---|---|
| | | | | Root mean square height: Sq ($\mu$m) | Maximum height: Sz ($\mu$m) |
| Comparative Example V-2 | 100 | 10 | 10 | 0.097 | 0.9 |

From the results shown in Table V-1, it is found that the vapor-deposited films of Examples V-1 and V-2 containing a specific trace amount of the titanium compound have a small root mean square height (Sq) and a small maximum height (Sz), and a smooth vapor-deposited surface.

On the other hand, it is found that the vapor-deposited films of Comparative Example V-1 containing no titanium compound and Comparative Example V-2 containing the titanium compound in an amount exceeding the specific range have a large root mean square height (Sq) and/or a large maximum height (Sz), and a non-smooth vapor-deposited surface, respectively.

Even when the substrate film constituting each of the vapor-deposited films of Examples V-1 and V-2 is a multilayer film obtained by co-extruding each of the compositions and a thermoplastic resin (such as a polyethylene resin) instead of the monolayer film, the effect that the vapor-deposited surface exhibits excellent surface smoothness is obtained. Further, even in a multilayer structure, a molded article, and a food container formed using each of the vapor-deposited films of Examples V-1 and V-2, an effect that the respective vapor-deposited surfaces exhibit excellent surface smoothness is obtained.

Sixth Aspect

Example VI-1

Preparation of Pellet of Composition

A pellet-shaped EVOH resin having an ethylene structural unit content of 29 mol% and a degree of saponification of 99.6 mol% was used as an EVOH resin.

Titanium oxide (available from FUJIFILM Wako Pure Chemical Corporation) was used as a titanium compound.

The pellet-shaped EVOH resin was dry-blended with the titanium oxide in an amount of 0.1 ppm as a content in terms of metal relative to the mass of the composition, and then water was sprayed with an atomizer such that the moisture content was 0.16%, and thus, a composition was yielded.

The composition was fed to a twin-screw extruder (20 mm$\varphi$) having a die with two holes, and extruded and discharged under the following extrusion conditions. The extruded and discharged strand was air-cooled and solidified on a conveyor belt. Subsequently, the solidified strand was cut to yield pellets of the composition.

Extrusion Condition

Set temperature (°C) of extruder: C1/C2/C3/C4/C5/C6 equals to 150/200/210/210/210/210

Preparation of Melt-Extruded Monolayer Film

The resulting pellets of the composition were extruded under the following conditions to yield a melt-extruded monolayer film.

Film Preparation Condition

- Extruder: Plastograph EC-plus, available from Brabender GmbH & Co. KG
- Screw: single-screw, 20 mm$\varphi$, full-flight

- Set temperature of cylinder part: 190 to 210°C
- Set temperature of cooling roll: 80°C
- Film thickness: 30 $\mu$m

Formation of Metal Vapor-Deposited Layer

A metal vapor-deposited layer of aluminum was laminated on the monolayer film as a substrate film at a substrate film surface temperature of 40°C or lower using batch-type vapor deposition equipment available from Showa Shinku Co., Ltd., and a vapor-deposited film of Example VI-1 was obtained.

Example VI-2

A vapor-deposited film was obtained in the same manner as in Example VI-1, except that the content of the titanium oxide in terms of metal in Example VI-1 was changed to 1 ppm relative to the mass of the composition.

Comparative Example VI-1

A vapor-deposited film was obtained in the same manner as in Example VI-1, except that use of titanium oxide in Example VI-1 was not performed.

Comparative Example VI-2

A vapor-deposited film was obtained in the same manner as in Example VI-1, except that the content of the titanium oxide in terms of metal in Example VI-1 was changed to 10 ppm relative to the mass of the composition.

Comparative Example VI-3

A vapor-deposited film was obtained in the same manner as in Example VI-1, except that water was sprayed with an atomizer such that the moisture content was 1.5%.
Using the vapor-deposited films of Examples VI-1 and VI-2 and Comparative Examples VI-1 to VI-3 obtained as described above, the surface smoothness of the vapor-deposited films was measured as follows. The measurement results are shown in Table VI-1 below.

Surface Smoothness

The metal vapor-deposited layer-side surfaces (vapor-deposited surfaces) of the vapor-deposited films were observed using a laser microscope (available from Olympus Corporation, LEXTOLS5000), under the following conditions.

- Light source: light source with wavelength of 405 nm
- Objective lens: magnification of 100 times
- Optical zoom: 1.0 times
- Image area: 129 $\mu$m $\times$ 129 $\mu$m
- Resolution: 1024 $\times$ 1024 pixels

The root mean square gradient (Sdq) of the respective vapor-deposited surfaces was measured from any point on the respective vapor-deposited surfaces by using the method according to ISO25178.
A smaller root mean square gradient (Sdq) indicates a smoother surface.

| | Moisture content (%) | Content of titanium compound in terms of metal (ppm) | Surface smoothness | |
| --- | --- | --- | --- | --- |
| | | | Root mean square gradient: Sdq ($\mu$m) | |
| Example VI-1 | 0.16 | 0.1 | 0.168 | |
| Example VI-2 | 0.16 | 1 | 0.145 | |
| Comparative Example VI-1 | 0.16 | 0 | 0.210 | |

(continued)

| | Moisture content (%) | Content of titanium compound in terms of metal (ppm) | Surface smoothness | |
|---|---|---|---|---|
| | | | Root mean square gradient: Sdq ($\mu$m) | |
| Comparative Example VI-2 | 0.16 | 10 | 0.183 | |
| Comparative Example VI-3 | 1.5 | 0.1 | 0.209 | |

From the results shown in Table VI-1, it is found that the vapor-deposited films of Examples VI-1 and VI-2 containing a specific trace amount of the titanium compound have a small root mean square gradient (Sdq) and a smooth vapor-deposited surface.

On the other hand, it is found that the vapor-deposited films of Comparative Example VI-1 containing no titanium compound, Comparative Example VI-2 containing the titanium compound in an amount exceeding the specific range, and Comparative Example VI-3 having a moisture content exceeding the specific range have a large root mean square gradient (Sdq), and a non-smooth vapor-deposited surface, respectively.

Even when the substrate film constituting each of the vapor-deposited films of Examples VI-1 and VI-2 is a multilayer film obtained by co-extruding each of the compositions and a thermoplastic resin (such as a polyethylene resin) instead of the monolayer film, the effect that the vapor-deposited surface exhibits excellent surface smoothness is obtained. Further, even in a multilayer structure, a molded article, and a food container formed using each of the vapor-deposited films of Examples VI-1 and VI-2, an effect that the respective vapor-deposited surfaces exhibit excellent surface smoothness is obtained.

Specific embodiments of the present disclosure are described in the above Examples, but the above Examples are merely illustrative and are not to be construed as limiting. Various modifications apparent to those skilled in the art are intended to be within the scope of the present disclosure.

Industrial Applicability

The present vapor-deposited film can be suitably used as a molded article and a packaging material such as a packaging film for packaging, for example, general food products, as well as seasonings such as mayonnaise and dressings, fermented food products such as Miso, oil and/or fat food products such as salad oil, snack foods, beverages, cosmetics, and pharmaceuticals, or as a portion of a multilayer structure for forming these molded article and packaging material.

**Claims**

1. A vapor-deposited film comprising: a substrate film having a layer comprising a composition comprising an ethylene-vinyl alcohol copolymer and a titanium compound; and a metal vapor-deposited layer laminated on the substrate film, wherein a content of the titanium compound in terms of metal is 0.001 ppm or more and less than 3 ppm relative to a mass of the composition.

2. The vapor-deposited film according to claim 1, wherein the composition further comprises at least one selected from the group consisting of a lubricant, an alkaline metal compound, an alkaline earth metal compound, and a boron compound.

3. The vapor-deposited film according to claim 1, wherein a moisture content of the composition before melt molding is 1 mass% or less.

4. The vapor-deposited film according to claim 2, wherein a content of the lubricant is 500 ppm or less relative to the mass of the composition.

5. The vapor-deposited film according to claim 2 or 4, wherein a mass ratio of the content of the lubricant to the content of the titanium compound in terms of metal is from 0.3 to 500000.

6. The vapor-deposited film according to claim 2, wherein a content of the alkaline metal compound in terms of metal is from 1 to 1000 ppm relative to the mass of the composition.

7.  The vapor-deposited film according to claim 2 or 6, wherein a mass ratio of the content of the alkaline metal compound in terms of metal to the content of the titanium compound in terms of metal is from 0.2 to 1000000.

8.  The vapor-deposited film according to claim 2, wherein a content of the alkaline earth metal compound in terms of metal is from 0.1 to 800 ppm relative to the mass of the composition.

9.  The vapor-deposited film according to claim 2 or 8, wherein a mass ratio of the content of the alkaline earth metal compound in terms of metal to the content of the titanium compound in terms of metal is from 0.03 to 500000.

10. The vapor-deposited film according to claim 2, wherein a content of the boron compound in terms of boron is from 1 to 500 ppm relative to the mass of the composition.

11. The vapor-deposited film according to claim 2 or 10, wherein a mass ratio of the content of the boron compound in terms of boron to the content of the titanium compound in terms of metal is from 1 to 200000.

12. The vapor-deposited film according to claim 3, wherein the moisture content of the composition before melt molding is 0.12 mass% or more.

13. The vapor-deposited film according to any one of claims 1 to 3, wherein the substrate film is a multilayer film further having a layer comprising a thermoplastic resin.

14. The vapor-deposited film according to any one of claims 1 to 3, wherein a metal of the metal vapor-deposited layer is at least one selected from the group consisting of aluminum, gold, silver, copper, titanium, nickel, chromium, tin, and indium.

15. A multilayer structure comprising the vapor-deposited film according to any one of claims 1 to 3.

16. A molded article comprising the vapor-deposited film according to any one of claims 1 to 3.

17. A food container comprising the multilayer structure according to claim 15.

18. A method for producing the vapor-deposited film according to any one of claims 1 to 3, the method comprising laminating an inorganic vapor-deposited layer on the substrate film.

## INTERNATIONAL SEARCH REPORT

| International application No. |
|---|
| **PCT/JP2024/033453** |

### A. CLASSIFICATION OF SUBJECT MATTER

*B32B 27/28*(2006.01)i; *B32B 15/08*(2006.01)i; *B32B 15/082*(2006.01)i; *B65D 65/40*(2006.01)i; *C08L 29/04*(2006.01)i
FI: B32B27/28 102; C08L29/04 S; B32B15/08 101; B32B15/08 101Z; B65D65/40 D; B32B15/082 Z

According to International Patent Classification (IPC) or to both national classification and IPC

### B. FIELDS SEARCHED

Minimum documentation searched (classification system followed by classification symbols)

B32B27/28; B32B15/08; B32B15/082; B65D65/40; C08L29/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2021-119033 A (KURARAY CO., LTD.) 12 August 2021 (2021-08-12) <br> claims, paragraphs [0025], [0028], [0048], [0061]-[0091], examples | 1-18 |
| Y | JP 2019-163378 A (MITSUBISHI CHEMICAL CORPORATION) 26 September 2019 (2019-09-26) <br> claims, paragraphs [0083]-[0088], [0097], [0106] | 1-18 |
| A | WO 2013/125564 A1 (KURARAY CO., LTD.) 29 August 2013 (2013-08-29) <br> claims, examples | 1-18 |
| A | JP 2008-307757 A (TOYO BOSEKI KABUSHIKI KAISHA) 25 December 2008 (2008-12-25) <br> claims, examples | 1-18 |
| P, A | WO 2023/190813 A1 (MITSUBISHI CHEMICAL CORPORATION) 05 October 2023 (2023-10-05) <br> claims, examples | 1-18 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **06 December 2024** | **17 December 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/033453**

| Patent document cited in search report | | | Publication date (day/month/year) | Patent family member(s) | | | Publication date (day/month/year) |
|---|---|---|---|---|---|---|---|
| JP | 2021-119033 | A | 12 August 2021 | (Family: none) | | | |
| JP | 2019-163378 | A | 26 September 2019 | (Family: none) | | | |
| WO | 2013/125564 | A1 | 29 August 2013 | US | 2015/0004395 | A1 | |
| | | | | claims, examples | | | |
| | | | | JP | 2017-100451 | A | |
| | | | | EP | 2818316 | A1 | |
| | | | | CN | 104114367 | A | |
| | | | | KR | 10-2014-0133841 | A | |
| JP | 2008-307757 | A | 25 December 2008 | (Family: none) | | | |
| WO | 2023/190813 | A1 | 05 October 2023 | JP | 2023-152984 | A | |
| | | | | JP | 2023-152985 | A | |
| | | | | JP | 2023-152986 | A | |
| | | | | JP | 2023-152987 | A | |
| | | | | JP | 2023-152988 | A | |
| | | | | JP | 2023-152990 | A | |
| | | | | JP | 2023-152992 | A | |
| | | | | JP | 2023-152994 | A | |
| | | | | JP | 2023-152995 | A | |
| | | | | TW | 202402841 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017100451 A
- WO 2013125564 A